# EUROPÄISCHE PATENTSCHRIFT

(11) **EP 2 265 691 B1**
(45) Veröffentlichungstag und Bekanntmachung des Hinweises auf die Patenterteilung: **29.08.2012**
(21) Anmeldenummer: 09734014.5
(22) Anmeldetag: 26.03.2009
(51) Int. Cl.: C09K 19/32, C09K 19/34, C09K 19/54, C09K 19/42

(54) **FLÜSSIGKRISTALLINES MEDIUM**
LIQUID CRYSTALLINE MEDIUM
MILIEU CRISTAL LIQUIDE

(30) Priorität: 22.04.2008 DE 102008020058
(43) Veröffentlichungstag der Anmeldung: 29.12.2010
(73) Patentinhaber: Merck Patent GmbH, 64293 Darmstadt (DE)
(72) Erfinder: MANABE, Atsutaka, 64625 Bensheim (DE); SCHOTT, Cecile, 64289 Darmstadt (DE); MONTENEGRO, Elvira, 69469 Weinheim (DE); JUNGE, Michael, 64319 Pfungstadt (DE)
(86) Internationale Anmeldenummer: PCT/EP2009/002231
(87) Internationale Veröffentlichungsnummer: WO 2009/129911

(56) Entgegenhaltungen:
- EP-A- 0 451 854
- WO-A-02/18515
- WO-A-2004/048500
- WO-A-2005/037957
- US-A- 5 340 497

## Beschreibung

Die vorliegende Erfindung betrifft Flüssigkristallmedien und deren Verwendung in Flüssigkristallanzeigen sowie diese Flüssigkristallanzeigen, besonders Flüssigkristallanzeigen, die den ECB- (Electrically Controlled Birefringence) Effekt mit dielektrisch negativen Flüssigkristallen in einer homeotropen Ausgangsorientierung verwenden. Die erfindungsgemäßen Flüssigkristallmedien zeichnen sich durch eine besonders niedrige Schaltzeit in den erfindungsgemäßen Anzeigen bei gleichzeitig hohem Spannungshaltevermögen (Englisch "voltage holding ratio", kurz VHR) aus.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie Δε ≤ -0,5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homöotrope Randorientierung auf (VA-Technologie = Vertical Aligned). Auch bei Anzeigen, die den so genannten IPS-Effekt verwenden, können dielektrisch negative Flüssigkristallmedien zum Einsatz kommen.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen verwendbare Substanzen zu erhalten.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei im Allgemeinen Dünnfilin-Transistoren (TFT) verwendet werden, die in der Regel auf einer Glasplatte als Substrat angeordnet sind.

Man unterscheidet zwei Technologien: TFT's aus Verbindungshalbleitem wie z.B. CdSe oder TFT's auf der Basis von polykristallinem und u. a. amorphem Silizium. Letztere Technologie hat derzeit weltweit die größte kommerzielle Bedeutung.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die bisher am meisten verwendeten TFT-Anzeigen arbeiten üblicherweise mit gekreuzten Polaristoren in Transmission und sind von hinten beleuchtet. Für TV Anwendungen werden IPS-Zellen oder ECB- (bzw. VAN-) Zellen verwendet, wohingegen für Monitore meist IPS-Zellen oder TN-Zellen und für "Note Books", "Lap Tops" und für mobile Anwendungen meist TN-Zellen Verwendung finden.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen, Monitore und "Note Books" oder für Displays mit hoher Informationsdichte z.B. in Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im Allgemeinen über die Lebenszeit einer MFK-Anzeige abnimmt, ist ein hoher (Anfangs)-Widerstand sehr wichtig für Anzeigen die akzeptable Widerstandswerte über eine lange Betriebsdauer aufweisen müssen.

Anzeigen, die den ECB-Effekt verwenden haben sich als so genannte VAN- (Vertically Aligned Nematic) Anzeigen neben IPS- (In Plane Switching) Anzeigen (z.B.: Yeo, S.D., Vortrag 15.3: "A LC Display for the TV Application", SID 2004 International Symposium, Digest of Technical Papers, XXXV, Buch II, S. 758 & 759) und den lange bekannten TN-(Twisted Nematic) Anzeigen, als eine der drei zur Zeit wichtigsten neueren Typen von Flüssigkristallanzeigen insbesondere für Fernsehanwendungen etabliert.

Als wichtigste Bauformen sind zu nennen: MVA (Multi-Domain Vertical Alignment, z. B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technology ...", SID 2004 International Symposium, Digest of Technical Papers, XXXV, Buch II, S. 750 bis 753), PVA (Patterned Vertical Alignment, z. B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763) und ASV (Avanced Super View, z. B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757).

In allgemeiner Form werden die Technölogien z.B. in Souk, Jun, SID Seminar 2004, Seminar M-6: "Recent Advances in LCD Technology", Seminar Lecture Notes, M-6/1 bis M-6/26 und Miller, lan, SID Seminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten insbesondere beim Schalten von Graustufen immer noch ein noch nicht zufriedenstellend gelöstes Problem.

ECB-Anzeigen verwenden wie ASV-Anzeigen flüssigkristalline Medien mit negativer dielektrischer Anisotropie (Δε), wohingegen TN- und bislang alle gebräuchlichen IPS-Anzeigen flüssigkristalline Medien mit positiver dielektrischer Anisotropie verwenden.

In derartigen Flüssigkristallanzeigen werden die Flüssigkristalle als Dielektrika verwendet, deren optische Eigenschaften sich bei Anlegen einer elektrischen Spannung reversibel ändern.

Da bei Anzeigen im allgemeinen, also auch bei Anzeigen nach diesen erwähnten Effekten, die Betriebsspannung möglichst gering sein soll, werden Flüssigkristallmedien eingesetzt, die in der Regel überwiegend aus Flüssigkristallverbindungen zusammengesetzt sind, die alle das gleiche Vorzeichen der dielektrischen Anisotropie aufweisen und einen möglichst großen Betrag der dielektrischen Anisotropie haben. Es werden in der Regel allenfalls geringere Anteile an neutralen Verbindungen und möglichst keine Verbindungen mit einem Vorzeichen der dielektrischen Anisotropie, das dem des Mediums entgegengesetzt ist, eingesetzt. Bei den Flüssigkristallmedien mit negativer dielektrischer Anisotropie für ECB-Anzeigen werden somit überwiegend Verbindungen mit negativer dielektrischer Anisotropie eingesetzt. Die eingesetzten Flüssigkristallmedien bestehen in der Regel überwiegend und meist sogar weitestgehend aus Flüssigkristallverbindungen mit negativer dielektrischer Anisotropie.

Bei den gemäß der vorliegenden Anmeldung verwendeten Medien werden typischerweise allenfalls nennenswerte Mengen an dielektrisch neutralen Flüssigkristallverbindungen und in der Regel nur sehr geringe Mengen an oder gar keine dielektrisch positiven Verbindungen eingesetzt, da generell die Flüssigkristallanzeigen möglichst niedrige Ansteuerspannungen haben sollen.

Die Flüssigkristallmedien des allgemeinen Standes der Technik mit entsprechend niedrigen Ansteuerspannungen haben jedoch meist relativ geringe elektrische Widerstände bzw. eine geringe VHR und führen in den Anzeigen oft zu unerwünschtem "Flicker" und/oder ungenügender Transmission. Außerdem sind sie nicht ausreichend stabil gegen Temperatur- und/oder UV-Belastung, zumindest dann, wenn sie eine entsprechend hohe Polarität aufweisen, wie sie für niedrige Ansteuerspannungen nötig ist.

Außerdem ist die Ansteuerspannung der Anzeigen des Standes der Technik oft zu groß, insbesondere für Anzeigen, die nicht direkt oder nicht durchgehend ans Stromversorgungsnetz angeschlossen werden, wie z. B. Anzeigen für mobile Anwendungen.

Außerdem muss der Phasenbereich ausreichend breit für die beabsichtigte Anwendung sein.

Die Schaltzeiten der Flüssigkristallmedien in den Anzeigen müssen verbessert, also verringert, werden. Dieses ist besonders für Anzeigen für Fernseh- oder Multi-Media Anwendungen wichtig. Zur Verbesserung der Schaltzeiten ist in der Vergangenheit wiederholt vorgeschlagen worden, die Rotationsviskosität der Flüssigkristallmedien (γ₁) zu optimieren, also Medien mit einer möglichst geringen Rotationsviskosität zu realisieren. Die dabei erzielten Ergebnisse sind jedoch nicht ausreichend für viele Anwendungen und lassen es daher wünschenswert erscheinen, weitere Optimierungsansätze aufzufinden.

Der Nachteil der bisher bekannten MFK-Anzeigen beruht auf ihrem vergleichsweise niedrigen Kontrast, der relativ hohen Blickwinkelabhängigkeit und der Schwierigkeit in diesen Anzeigen Graustufen zu erzeugen, sowie ihrer ungenügenden VHR und ihrer ungenügenden Lebensdauer.

EP 0 451 854 A2 offenbart dielktrisch positive Flüssigkristallmischungen, die Verbindungen der Formel 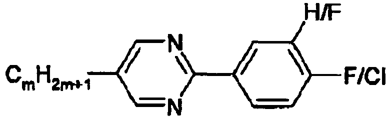 enthalten. US 5,340,497 A offenbart neben anderen, ähnlichen Verbindungen, Verbindungen, der Formel 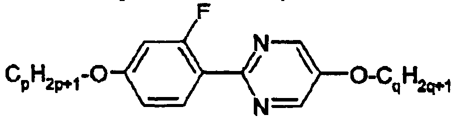 und deren Verwendung in Flüsigkristallmischungen.

Flüssigkristallmedien mit nahezu dielektrisch neutralen Indanen werden beispielsweise in JP 2005-047 980 A genannt. Indane mit negativer dielektrischer Anisotropie werden beispielsweise in DE 101 35 499 A1, DE 103 54 404 A1 und DE 10 2004 046 103 A1 offenbart.

Nematische Flüssigkristallmischungen mit negativer dielektrischer Anisotropie, die lateral fluorierte Indanderivate der Formel 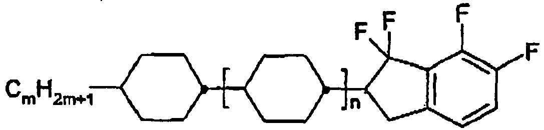 worin m eine ganze Zahl und n 0 oder 1 bedeuten, enthalten, sind z.B. aus WO 2004/048500 A1 bekannt. Diese Medien können gemäß der dortigen Offenbarung optional auch Stabilisatoren verschiedener Arten, wie z. B. Phenole und sterisch gehinderte Amine (Englisch: hindered amine light stabilizers, kurz: HALS) enthalten. Diese Medien sind durch relativ niedrige Schwellenspannungen und durch relativ hohe Stabilitäten gekennzeichnet. Jedoch kann deren "Voltage Holding Ratio" nach starker Belastung sinken. Außerdem tritt nach außergewöhnlich starker Belastung manchmal eine gelbliche Verfärbung auf.

Die Verwendung verschiedener Stabilisatioren in flüssigkristallinen Medien wird z. B. in JP (S)55-023169 (A), JP (H)05-117324 (A), WO 02/18515 A1 und JP (H) 09-291282 (A) beschrieben.

Ganz besonders wichtig ist eine ausreichende Stabilität der Medien gegen extreme Belastungen, insbesondere gegen starke Temperatur- und/oder UV-Belastung. Besonders bei Anwendungen in Anzeigen in mobilen Geräten wie z. B. Mobiltelefonen kann dieses entscheidend sein.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, mit deren Hilfe verschiedene Graustufen erzeugt werden können und die insbesondere eine gute und stabile VHR aufweisen.

Überraschend wurde gefunden, dass Flüssigkristallanzeigen realisiert werden können, die insbesondere in ECB-Anzeigen eine niedrige Schwellenspannung bei geringen Schaltzeiten aufweisen und gleichzeitig eine ausreichend breite nematische Phase, eine günstige Doppelbrechung (Δn) und eine stabile hohe VHR aufweisen.

Derartige Medien sind insbesondere für elektrooptische Anzeigen mit einer Aktivmatrix-Addressierung basierend auf dem ECB-Effekt sowie für IPS-Anzeigen (In plane switching) zu verwenden.

Der Erfindung liegt die Aufgabe zugrunde MFK-Anzeigen, nicht nur für Monitor- und TV-Anwendungen, sondern auch für Mobiltelefone und Navigationssysteme, welche auf dem ECB- oder auf dem IPS-Effekt beruhen, bereitzustellen, die die oben angegebenen Nachteile nicht oder nur in geringerem Maße und gleichzeitig sehr hohe spezifische Widerstände aufweisen. Insbesondere muss für Mobiltelefone und Navigationssysteme gewährleistet sein, dass diese auch bei extrem hohen und extrem niedrigen Temperaturen arbeiten.

Überraschenderweise wurde nun gefunden, dass diese Aufgabe gelöst werden kann, wenn man in diesen Anzeigeelementen nematische Flüssigkristallmischungen verwendet, die mindestens eine Verbindung der Formel I, sowie 5,0 · 10⁻³ Gew.-% bis 1,0 Gew.-% mindestens einer Verbindung ausgewählt aus der Gruppe der Verbindungen der der Formeln II-A bis II-F und 5,0 10⁻⁴ Gew.-% bis 1,0 Gew.-% mindestens einer Verbindung, die eine oder mehrere Gruppen der Formel II-G enthält, enthalten.

Gegenstand der Erfindung ist somit ein flüssigkristallines Medium auf der Basis eines Gemisches von polaren Verbindungen, welches mindestens eine Verbindung der Formel I und 5,0 · 10⁻³ Gew.-% mindestens einer Verbindung ausgewählt aus der Gruppe der Verbindungen der der Formeln II-A bis II-F und 1,0 · 10⁻³ Gew.-% mindestens einer Verbindung, die eine oder mehrere Gruppen der Formel II-G enthalten, enthält.

Die erfindungsgemäßen Mischungen zeigen sehr breite nematische Phasenbereiche mit Klärpunkten ≥ 70°C, sehr günstige Werte für die kapazitive Schwelle, relativ hohe Werte für die Holding Ratio und gleichzeitig gute Tieftemperaturstabilitäten bei -20 °C und -30 °C, sowie sehr geringe Rotationsviskositäten. Weiterhin zeichnen sich die efindungsgemäßen Mischungen durch ein gutes Verhältnis von Klärpunkt und Rotationsviskosität und durch eine hohe negative dielektrische Anisotropie aus.

Die Erfindung betrifft somit ein flüssigkristallines Medium mit einer nematischen Phase und einer negativen dielektrischen Anisotropie, welches
a) eine oder mehrere Verbindungen der Formel I 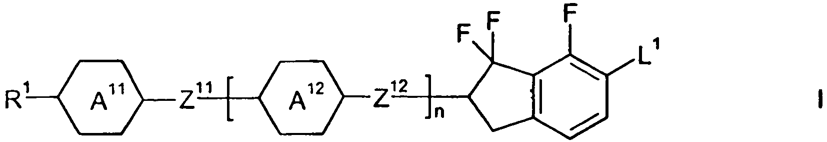 worin
   - R¹: H, einen unsubstituierten Alkyl- oder Alkenylrest mit bis zu 15 C-Atomen, wobei in diesen Resten auch eine oder mehrere CH₂-Gruppen durch -O-, -S-, 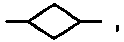 -C=C-, -CF₂-O-, -O-CF₂-, -CO-O- oder -O-CO- so ersetzt sein können, dass O-Atome nicht direkt miteinander verknüpft sind, wobei in allen Gruppen eine oder mehrere H-Atome durch Halogenatome ersetzt sein können,
   - L¹: H oder F, bevorzugt F, 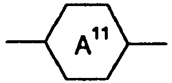 und 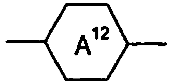 unabhängig voneinander 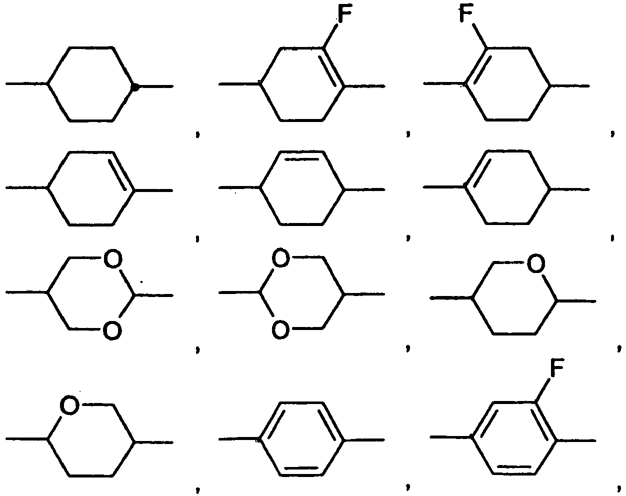 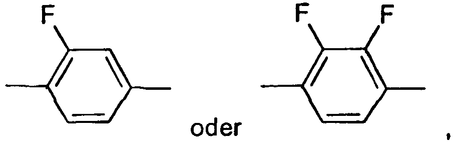 bevorzugt 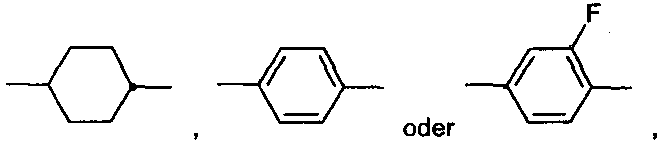 besonders bevorzugt 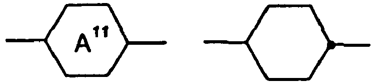 und 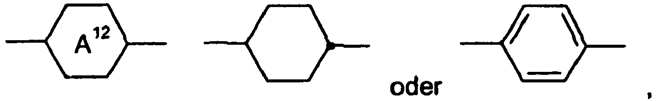
   - Z¹¹ und Z¹²: jeweils unabhängig voneinander -CH₂-CH₂-, -CH₂-CF₂-, -CF₂-CH₂-, -CF₂-CF₂-, -CH=CH-, -CF=CH-, -CH=CF-, -CF=CF-, -C≡C-, -CH₂-O-, -O-CH₂-, -O-, -CH₂-, -CO-O-, -O-CO-, -CF₂-O-, -O-CF₂- oder eine Einfachbindung und
   - n: 0 oder 1
   bedeuten,
b) 5,0 · 10⁻³ Gew.-% bis 1,0 Gew.%, bevorzugt bis 0,50 Gew.-%, besonders bevorzugt bis 0,10 Gew.%, einer oder mehrerer Verbindungen ausgewählt aus der Gruppe der Verbindungen der Formeln II-A bis II-F 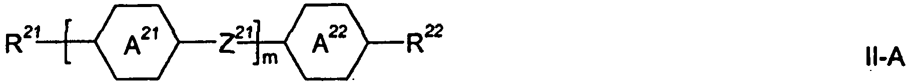 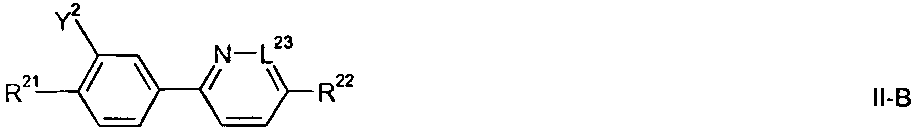 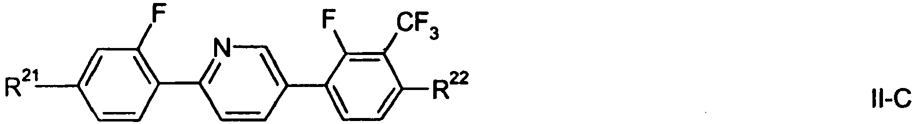 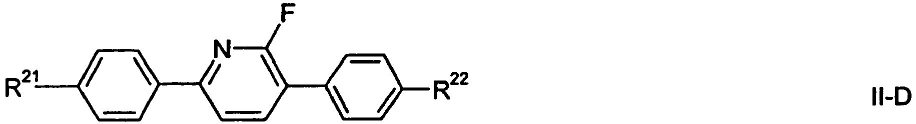 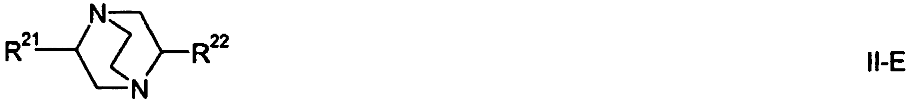 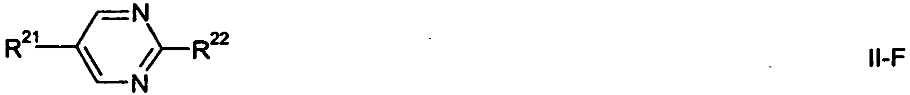 worin
   - R²¹ und R²²: jeweils unabhängig voneinander H, einen unsubstituierten Alkyl- oder Alkenylrest mit bis zu 15 C-Atomen, wobei in diesen Resten auch eine oder mehrere CH₂-Gruppen durch -O-, -S-, 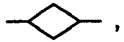 -C≡C-, -CF₂-O-, -O-CF₂-, -CO-O- oder -O-CO- so ersetzt sein können, dass O-Atome nicht direkt miteinander verknüpft sind und R²² alternativ auch X², und in Formeln II-B und II-C R²¹ bevorzugt Alkoxy und R²² bevorzugt H oder Alkyl,
   - X²: F, Cl, CN oder -OCF₃,
   einer der vorhandenen Ringe 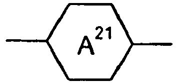 und 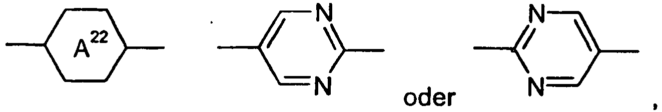 und der andere, soweit vorhanden, 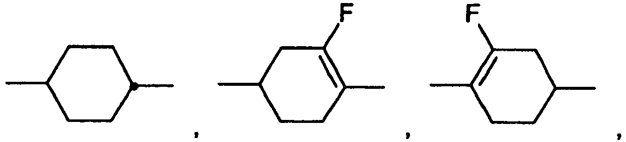 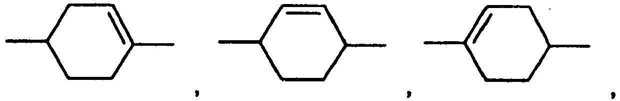 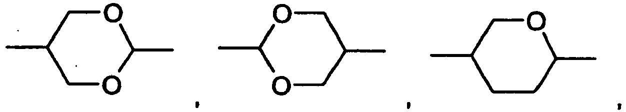 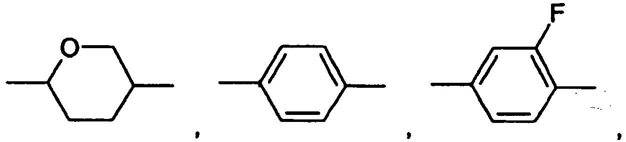 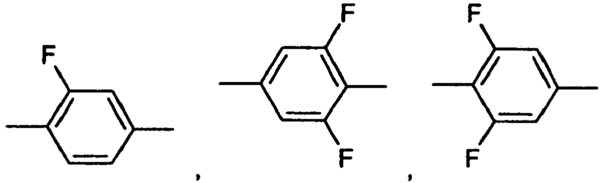 oder 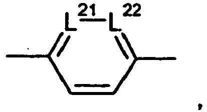 einer von
   - L²¹ und L²²: =C(-F)- oder =N- und der andere =C(-F)-,
   - L²³: =C(-H)- oder =N-,
   - Y²: H oder F,
   - Z²¹: -CH₂-CH₂-, -CH₂-CF₂-, -CF₂-CH₂-, -CF₂-CF₂-, -CH=CH-, -CF=CH-, -CH=CF-, -CF=CF-, -C≡C-, -CH₂-O-, -O-CH₂-, -O-, -CH₂-, -CO-O-, -O-CO-, -CF₂-O-, -O-CF₂- oder eine Einfachbindung und
   - m: 0 oder 1
   bedeuten, und
c) 5,0 · 10⁻⁴ Gew.-% bis 1,0 ·Gew.-%, bevorzugt bis 0,10 Gew.%, besonders bevorzugt 1,0 · 10⁻³ Gew.% bis 1,0 ges.-%, bevorzugt bis 0,10 Gew.%, einer oder mehrerer Verbindungen, die eine, zwei oder mehr Gruppen der Formel II-G 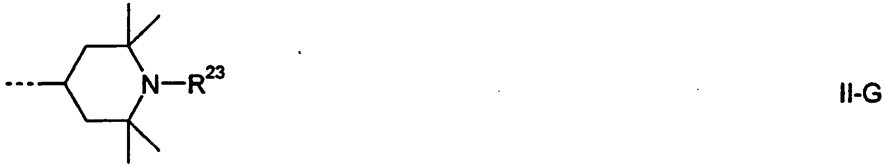 worin
   - R²³: H oder einen unsubstituierten Alkylrest mit bis zu 15 C-Atomen, wobei in diesen Resten auch eine oder mehrere CH₂-Gruppen durch -O-, -S-, 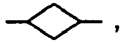 -C≡C-, -CF₂-O-, -O-CF₂-, -CO-O- oder -O-CO- so ersetzt sein können, dass O-Atome nicht direkt miteinander und N-Atome weder direkt mit O- noch mit S-Atomen verknüpft sind, bedeutet,
   enthalten,
   enthält.

Vorzugsweise enthält das erfindungsgemäße Medium eine, zwei, drei, vier oder mehr, vorzugsweise eine, zwei oder drei oder mehr, Verbindungen der Formel I.

Die Gesamtkonzentration der Verbindungen der Formel I in den erfindungsgemäßen Medien beträgt bevorzugt 2 Gew.-% oder mehr bis 40 Gew.-% oder weniger.

Bevorzugte Verbindungen der Formel I sind die Verbindungen der Formel I-1 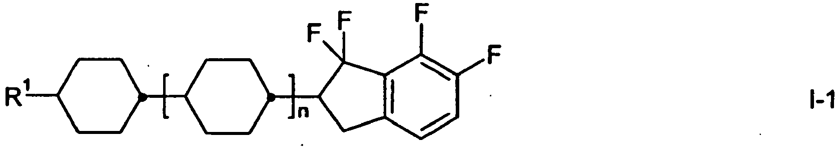 worin die Parameter die jeweiligen oben unter Formel I angegebenen Bedeutungen besitzen und n besonders bevorzugt
- n: 0 und
- R¹: Alkyl mit 1 bis 7, bevorzugt mit 1 bis 5, C-Atomen, bevorzugt n-Alkyl
bedeutet.

Die erfindungsgemäßen Medien enthalten bevorzugt eine oder mehrere Verbindungen der Formel II-A, bevorzugt eine oder mehrere Verbindungen ausgewählt aus der Gruppe der Verbindungen der Formeln II-A-1 und II-A-2 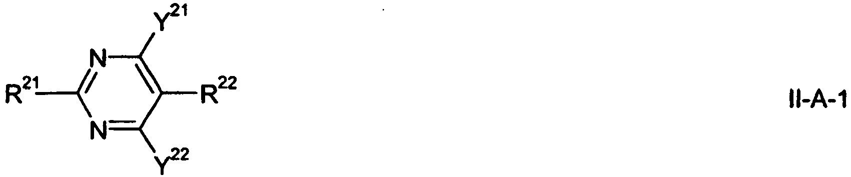 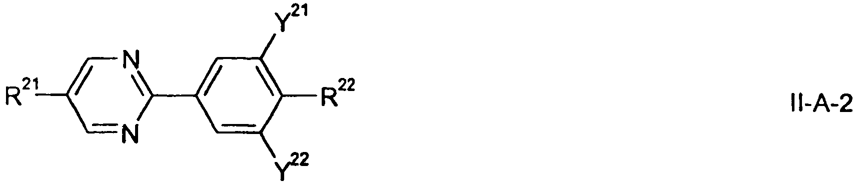 worin
- Y²¹ und Y²²: unabhängig voneinander H oder F bedeuten und
die übrigen Parameter die jeweiligen oben unter Formel II-A in Anspruch 1 angegebenen Bedeutungen besitzen.

Die erfindungsgemäßen Medien enthalten ebenfalls bevorzugt eine oder mehrere Verbindungen ausgewählt aus der Gruppe der Verbindungen der Formeln der Formeln II-G-1 bis II-G-7

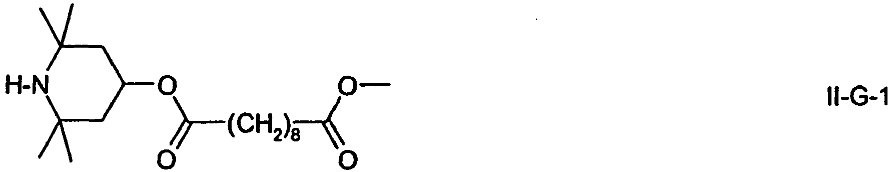

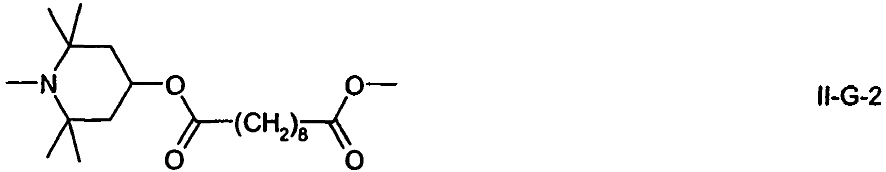

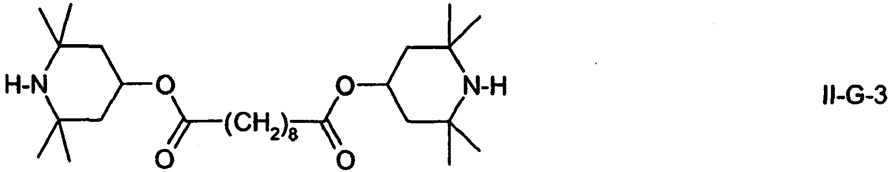

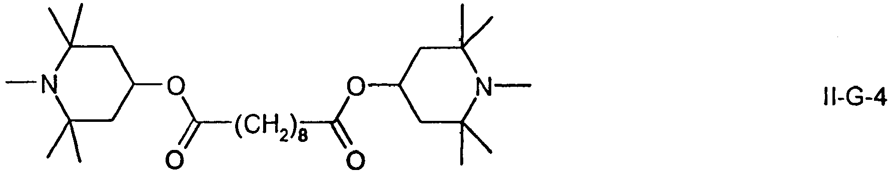

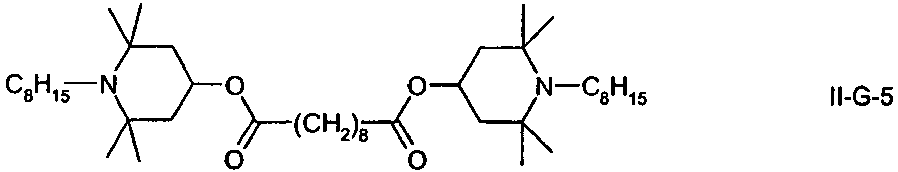

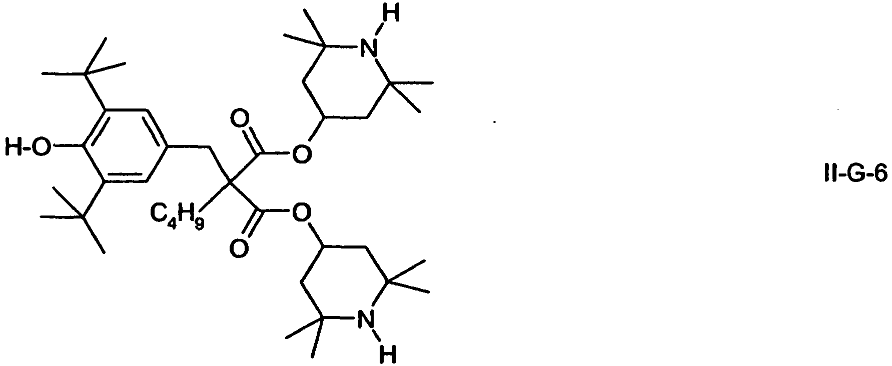

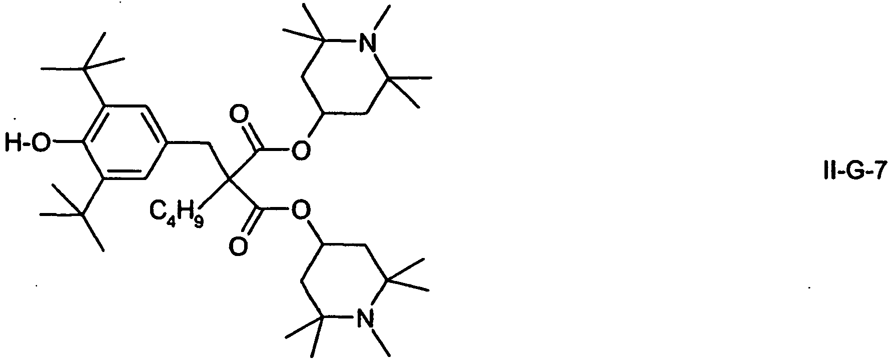

In einer bevorzugten Ausführungsform enthalten die erfindungsgemäßen Medien eine oder mehrere Verbindungen der Formel III 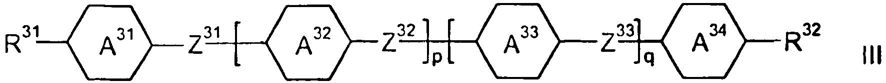 worin
- R³¹ und R³²: jeweils unabhängig voneinander, eine der für R¹¹ und R¹² gegebenen Bedeutung haben und bevorzugt Alkyl mit 1 bis 7 C-Atomen, bevorzugt n-Alkyl, besonders bevorzugt n-Alkyl mit 1 bis 5 C-Atomen, Alkoxy mit 1 bis 7 C-Atomen, bevorzugt n-Alkoxy, besonders bevorzugt n-Alkoxy mit 2 bis 5 C-Atomen, Alkoxyalkyl, Alkenyl oder Alkenyloxy mit 2 bis 7 C-Atomen, bevorzugt mit 2 bis 4 C-Atomen, bevorzugt Alkenyloxy, 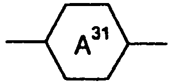 bis 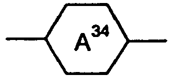 jeweils unabhängig voneinander, 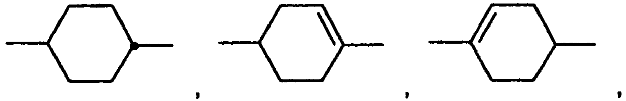 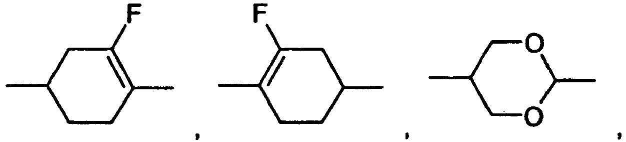 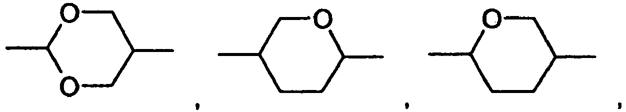 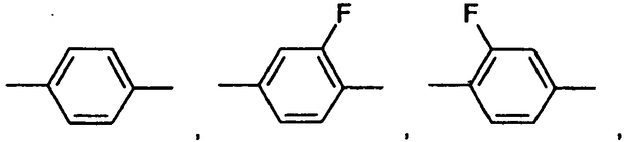 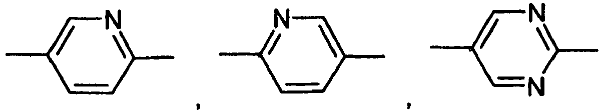 oder 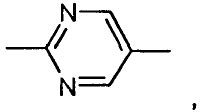 bevorzugt 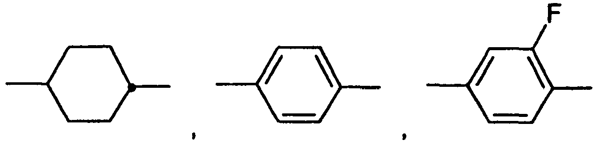 oder 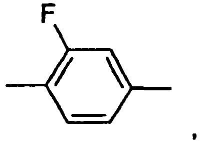 bevorzugt 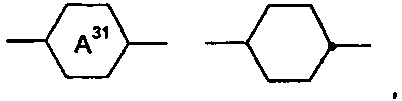 bevorzugt 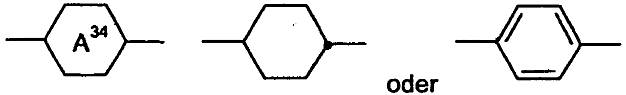 und, wenn vorhanden, 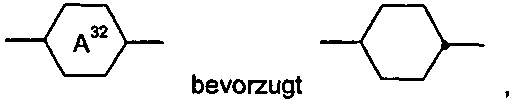
- Z³¹ bis Z³³: jeweils unabhängig voneinander, eine der für Z¹¹ bis Z¹³ gegebene Bedeutung haben und bevorzugt -CH₂-CH₂-, -CH=CH-, -C≡C-, -COO- oder eine Einfachbindung, bevorzugt -CH₂-CH₂- oder eine Einfachbindung und besonders bevorzugt eine Einfachbindung,
- p und q: jeweils unabhängig voneinander, 0 oder 1,
- (p + q): bevorzugt 0 oder 1, bevorzugt 0,
bedeuten und gegebenenfalls
eine oder mehrere Verbindungen ausgewählt aus der Gruppe der Verbindungen der Formeln IV und V 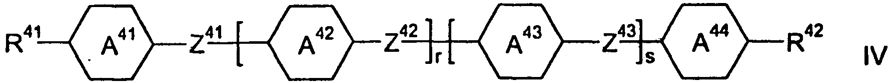 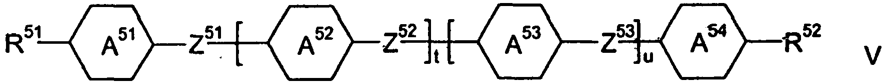 worin
- R⁴¹, R⁴², R⁵¹ und R⁵²: jeweils unabhängig voneinander eine der für R²¹ und R²² gegebenen Bedeutung haben und bevorzugt Alkyl mit 1 bis 7 C-Atomen, bevorzugt n-Alkyl und besonders bevorzugt n-Alkyl mit 1 bis 5 C-Atomen, Alkoxy mit 1 bis 7 C-Atomen, bevorzugt n-Alkoxy und besonders bevorzugt n-Alkoxy mit 2 bis 5 C-Atomen oder Alkoxyalkyl, Alkenyl oder Alkenyloxy mit 2 bis 7 C-Atomen, bevorzugt mit 2 bis 4 C-Atomen, bevorzugt Alkenyloxy,
besonders bevorzugt einer von R⁴¹ und R⁴² , bevorzugt R⁴¹, einen Alkyl- oder Alkenylrest und der andere einen Alkyl-, Alkenyl-, Alkoxy- oder Alkenyloxyrest, besonders bevorzugt R²¹ geradkettiges Alkyl, insbesondere CH₃-, C₂H₅-, *n*-C₃H₇, *n*-C₄H₉- oder *n*-C₅H₁₁-, oder Alkenyl, insbesondere CH₂=CH-, *E*-CH₃-CH=CH-, CH₂=CH-CH₂-CH₂-, *E*-CH₃-CH=CH-CH₂-CH₂- oder *E*-*n*-C₃H₇-CH=CH-,
einer der vorhandenen Ringe 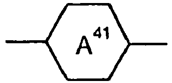 bis 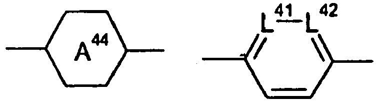
- L⁴¹ und L⁴²: unabhängig voneinander =C(X⁴)- und einer von L⁴¹ und L⁴² alternativ auch =N-, wobei bevorzugt mindestens einer von L⁴¹ und L⁴² =C(-F)- und der andere =C(-F)- oder =C(-Cl)-, besonders bevorzugt L⁴¹ und L⁴² beide =C(-F)-,
- X⁴: F, Cl, OCF₃, CF₃, CH₃, CH₂F, CHF₂, bevorzugt F oder Cl, besonders bevorzugt F,
und die anderen Ringe, soweit vorhanden, jeweils unabhängig voneinander 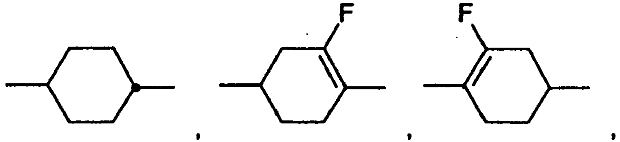 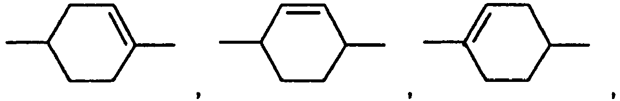 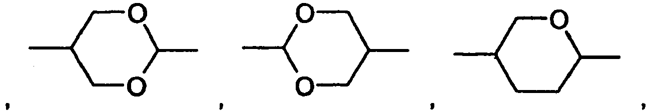 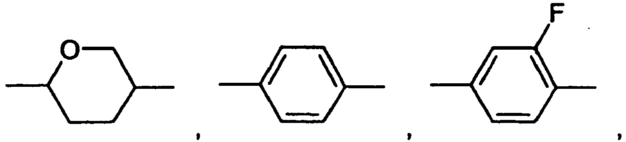 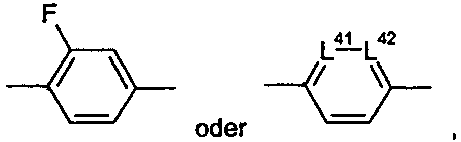 bevorzugt 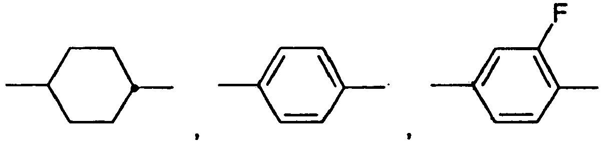 oder 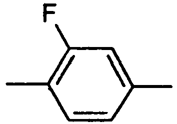 besonders bevorzugt 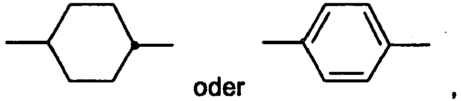 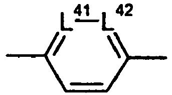 bevorzugt 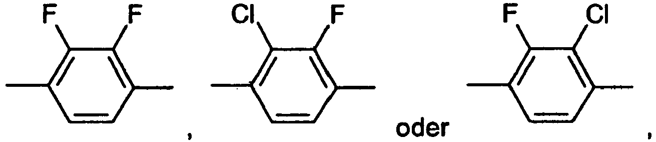 besonders bevorzugt 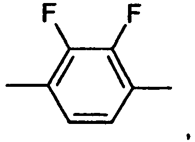 einer der Ringe 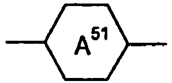 bis 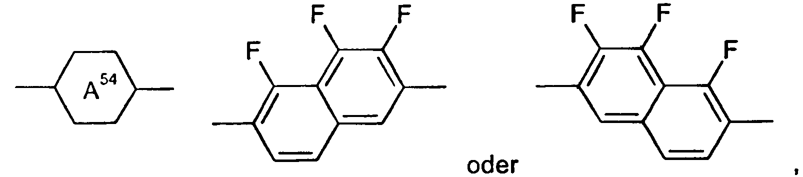 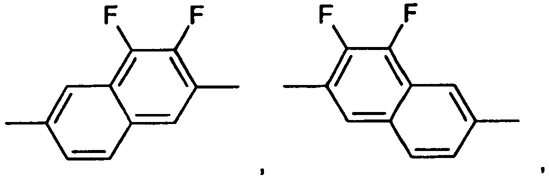 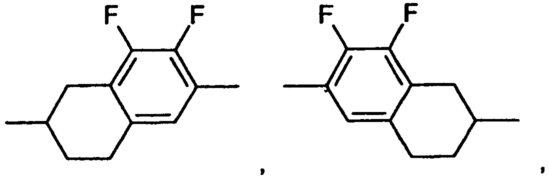 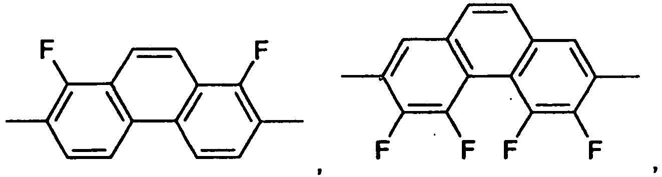 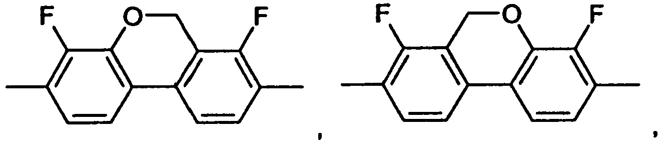 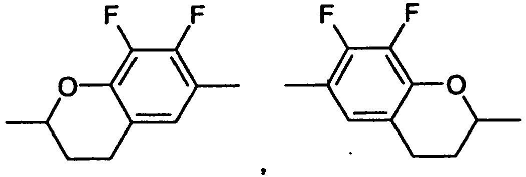 oder 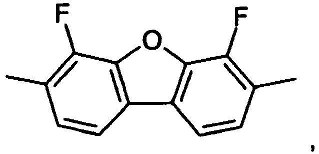 bevorzugt 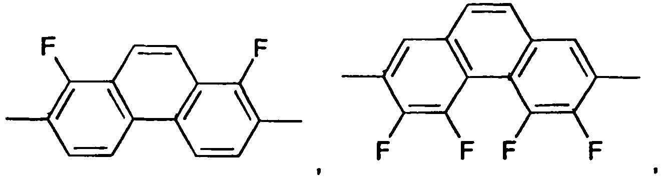 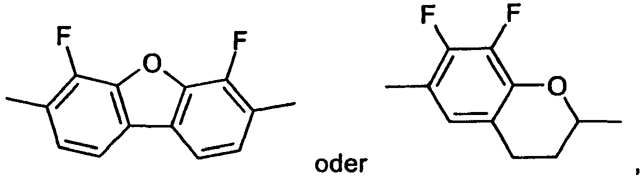 besonders bevorzugt 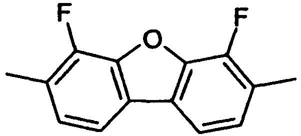 und die anderen, soweit vorhanden, jeweils unabhängig voneinander 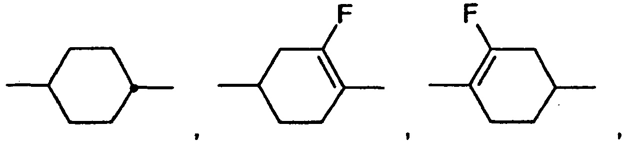 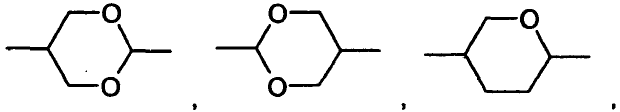 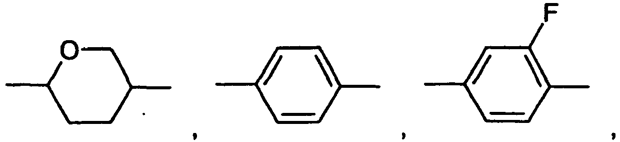 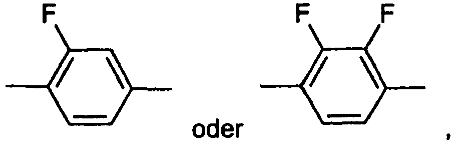 bevorzugt 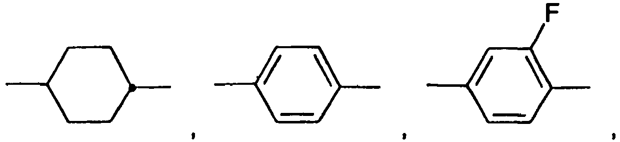 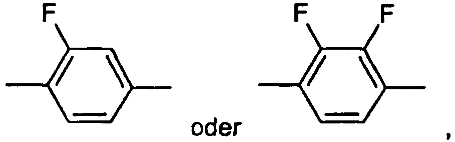 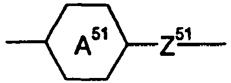 zusammen optional auch eine Einfachbindung,
- Z⁴¹ bis Z⁴³ und Z⁵¹ bis Z⁵³: jeweils unabhängig voneinander, eine der für Z¹¹ bis Z¹³ gegebene Bedeutung haben und bevorzugt -CH₂-CH₂-, -CH₂-O-, -CH=CH-, -C≡C-, -COO- oder eine Einfachbindung, bevorzugt -CH₂-CH₂-, -CH₂-O- oder eine Einfachbindung und besonders bevorzugt -CH₂O- oder eine Einfachbindung,
- Z⁴¹ bis Z⁴³: bevorzugt jeweils unabhängig voneinander -CH₂-CH₂-, -CH₂-CF₂-. -CF₂-CH₂-, -CF₂-CF₂-,- CH=CH-, -CF=CH-, -CH=CF-, -C≡C-, -CH₂-O-, -O-CH₂-, -O-, -CH₂-, -CO-O-, -O-CO-, -CF₂-O-, -O-CF₂- oder eine Einfachbindung, bevorzugt -CH₂-CH₂-, -CH=CH-, -C≡C-, -CF₂-O-, -O-CF₂- oder eine Einfachbindung, besonders bevorzugt einer oder, soweit vorhanden, mehrere von Z⁴¹ bis Z⁴³ eine Einfachbindung, und ganz besonders bevorzugt alle eine Einfachbindung,
- r und s: jeweils unabhängig voneinander 0 oder 1,
- (r + s): bevorzugt 0 oder 1,
- t und u: jeweils unabhängig voneinander, 0 oder 1,
- (t + u): bevorzugt 0 oder 1, bevorzugt 0,
bedeuten, wobei die Verbindungen der Formel I bei den Verbindungen der Formel V sind, und gegebenenfalls
eine oder mehrere chirale Verbindungen.

Bevorzugt enthalten die erfindungsgemäßen Medien die folgenden Verbindungen in den angegebenen Gesamtkonzentrationen
- 10-60: Gew.-% einer oder mehrerer Verbindungen der Formel III und/oder
- 30-80: Gew.-% einer oder mehrerer Verbindungen der Formeln IV und/oder V
wobei der Gesamtgehalt aller Verbindungen in dem Medium 100 Gew.-% beträgt.

Gegenstand der vorliegenden Erfindung sind auch elektrooptische Anzeigen oder elektrooptische Komponenten, die erfindungsgemäße flüssigkristalline Medien enthalten. Bevorzugt sind elektrooptische Anzeigen die auf dem VA- oder dem ECB-Effekt basieren und insbesondere solche, die mittels einer Aktivmatrix-Adressierungsvorrichtung angesteuert werden.

Dementsprechend ist die Verwendung eines erfindungsgemäßen flüssigkristallinen Mediums in einer elektrooptischen Anzeige oder in einer elektrooptischen Komponente ebenfalls Gegenstand der vorliegenden Erfindung, ebenso wie ein Verfahren zur Herstellung der erfindungsgemäßen flüssigkristallinen Medien, dadurch gekennzeichnet, dass eine oder mehrere Verbindungen der Formel I mit einer oder mehreren Verbindungen ausgewählt aus der Gruppe der Verbindungen der Formeln II-A bis II-F und einer oder mehreren Verbindungen, die eine oder mehrer Gruppen der Formel II-G, gemischt wird.

Außerdem betrifft die vorliegenden Erfindung ein Verfahren zur Stabilisierung eines flüssigkristallinen Mediums, das eine oder mehrere Verbindungen der Formel I enthält, dadurch gekennzeichnet, dass dem Medium eine oder mehrere Verbindungen ausgewählt aus der Gruppe der Verbindungen der Formeln II-A bis II-F und eine oder mehrere Verbindungen, die eine oder mehrer Gruppen der Formel II-G enthalten, zugesetzt werden.

In einer weiteren bevorzugten Ausführungsform enthält das Medium eine oder mehrere Verbindungen der Formel III worin mindestens zwei der Ringe 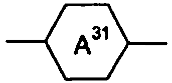 bis 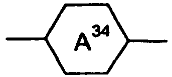 jeweils unabhängig voneinander, 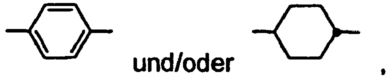 wobei ganz besonders bevorzugt zwei benachbarte Ringe direkt verknüpft sind und zwar bevorzugt 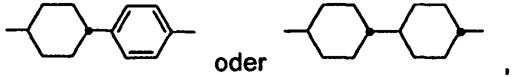 bedeuten, wobei bei dem Phenylenring ein oder mehrere H-Atome, unabhängig voneinander durch F oder CN, bevorzugt durch F und eine oder zwei nicht benachbarte CH₂-Gruppen des Cyclohexylenrings bzw. eines der beiden Cyclohexylenringe durch O-Atome ersetzt sein können.

In einer weiteren bevorzugten Ausführungsform enthält das Medium eine oder mehrere Verbindungen der Formel III aus der Gruppe der Verbindungen der Formeln III-1 bis III-11, bevorzugt ausgewählt aus der Gruppe der Verbindungen der Formeln III-1 bis III-9, bevorzugt aus der Gruppe III-1 bis III-6 und besonders bevorzugt aus der Gruppe III-1 und II**I-4,** 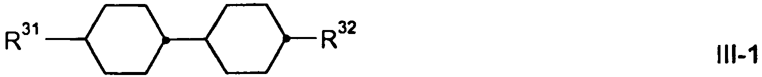 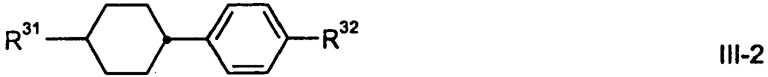 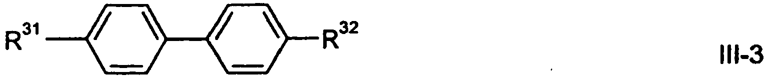 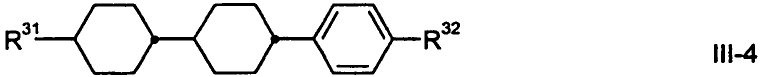 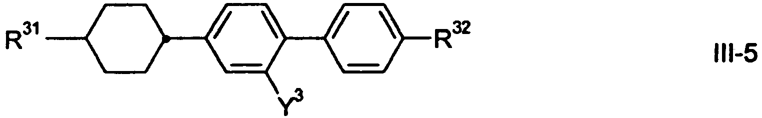 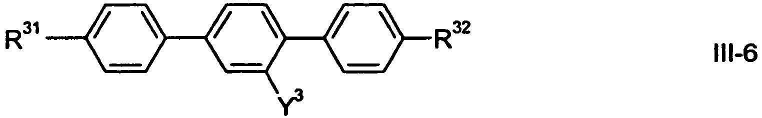 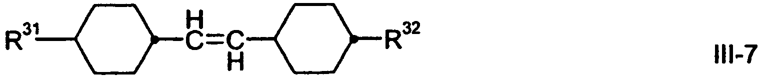 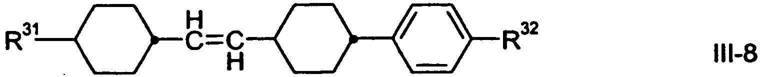 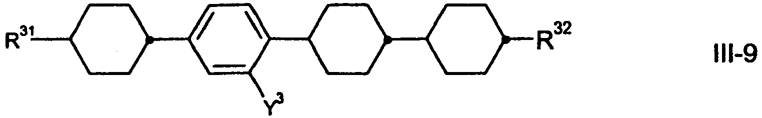 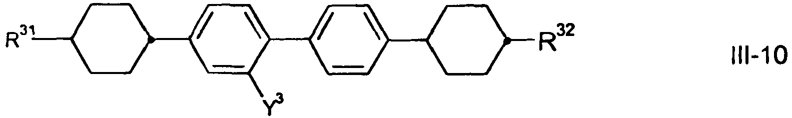 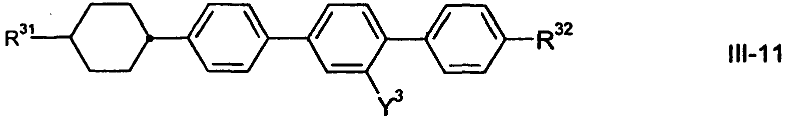 worin die Parameter die jeweilige oben bei Formel III angegebene Bedeutung haben und
- Y³: H oder F bedeutet und bevorzugt
- R³¹: Alkyl oder Alkenyl und
- R³²: Alkyl, Alkenyl oder Alkoxy, bevorzugt Alkyl oder Alkenyl, besonders bevorzugt Alkenyl,
bedeuten.
Besonders bevorzugt enthält das Medium eine oder mehrere Verbindung(en) der Formel III-1, ausgewählt aus der Gruppe
- der Formeln III-1c, insbesondere bevorzugt
- der Formel III-1 in der R³¹ Vinyl oder 1-Propenyl und R³² Alkyl, bevorzugt n-Alkyl, besonders bevorzugt R³¹ Vinyl und R³² Propyl bedeuten und
- der Formeln III-1d, insbesondere bevorzugt
- der Formel III-1 in der R³¹ und R³²unabhängig voneinander Vinyl oder 1-Propenyl, bevorzugt und R³¹ Vinyl und besonders bevorzugt R³¹ und R³² Vinyl bedeuten.

In einer weiteren bevorzugten Ausführungsform enthält das Medium eine oder mehrere Verbindungen der Formel III-1, ausgewählt aus der Gruppe der Verbindungen der Formeln III-1 a bis III-1e, bevorzugt der Formeln III-1a und/oder Formeln III-1c und/oder III-1d, besonders bevorzugt der Formeln III-1c und/oder III-1d und ganz besonders bevorzugt der Formel III-1c und der Formel III-1d, 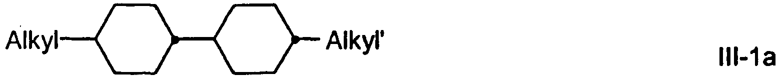 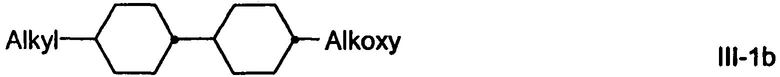 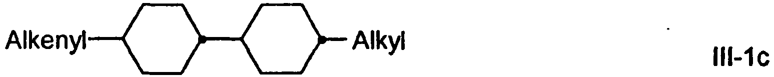 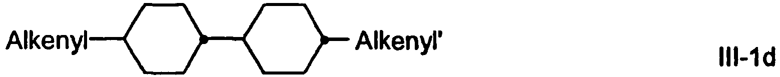 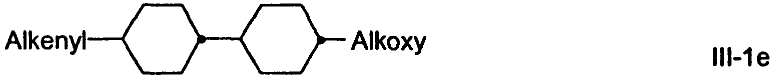 worin
- Alkyl und Alkyl': unabhängig voneinander Alkyl mit 1 bis 7 C-Atomen, bevorzugt mit 2 bis 5 C-Atomen
- Alkoxy: Alkoxy mit 1 bis 5 C-Atomen, bevorzugt mit 2 bis 4 C-Atomen und
- Alkenyl und Alkenyl': unabhängig voneinander, Alkenyl mit 2 bis 7 C-Atomen, bevorzugt mit 2 bis 5 C-Atomen bedeuten.

Besonders bevorzugt enthält das erfindungsgemäße Medium Verbindungen der Formel III-1 in Mengen von 20 Gew.-% oder mehr, insbesondere von 25 Gew.-% oder mehr, ganz besonders bevorzugt von 30 Gew.-% oder mehr, insbesondere Verbindungen der Forme III-1c' 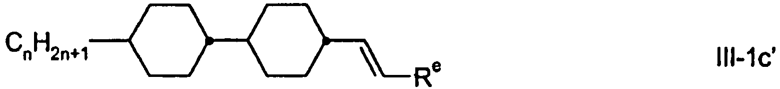 worin
- n: 3, 4, 5 und
- R^{e}: H oder CH₃
bedeuten.

In einer weiteren bevorzugten Ausführungsform enthält das Medium eine oder mehrere Verbindungen der Formel III-1, ausgewählt aus der Gruppe der Verbindungen der Formeln III-1a und III-1b, bevorzugt der Formeln III-1a und/oder III-1b, besonders bevorzugt der Formel III-1a. Bevorzugt enthält das Medium in dieser Ausführungsform keine Verbindungen der Formel III, bevorzugt der Formel III-1, mit einer Alkenylendgruppe oder mehreren Alkenylendgruppen, also bevorzugt keine Verbindungen der Formeln III-1c bis III-1e. Besonders bevorzugt enthält das Medium in dieser Ausführungsform eine oder mehrere Verbindungen ausgewählt aus der Gruppe der Verbindungen der Formeln CC-2-3, CC-2-5, CC-3-4 und CC-3-5, wobei die Akronyme (Abkürzungen) in den Tabellen A bis C erläutert und in Tabelle D durch Beispiele illustriert sind.

In einer weiteren bevorzugten Ausführungsform enthält das Medium eine oder mehrere Verbindungen der Formel III-2, ausgewählt aus der Gruppe der Verbindungen der Formeln III-2a bis III-2d, bevorzugt der Formeln III-2a und/oder III-2b, besonders bevorzugt der Formel III-2b, 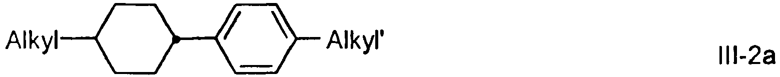 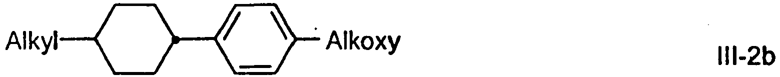 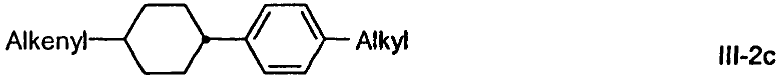 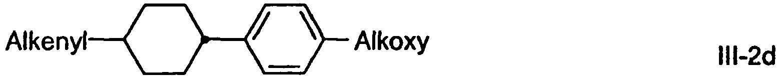 worin
- Alkyl und Alkyl': unabhängig voneinander Alkyl mit 1 bis 7 C-Atomen, bevorzugt mit 2 bis 5 C-Atomen
- Alkoxy: Alkoxy mit 1 bis 5 C-Atomen, bevorzugt mit 2 bis 4 C-Atomen und
- Alkenyl: Alkenyl mit 2 bis 7 C-Atomen, bevorzugt mit 2 bis 5 C-Atomen bedeuten.

In einer weiteren bevorzugten Ausführungsform enthält das Medium eine oder mehrere Verbindungen der Formel III-3, ausgewählt aus der Gruppe der Verbindungen der Formeln III-3a bis III-3c 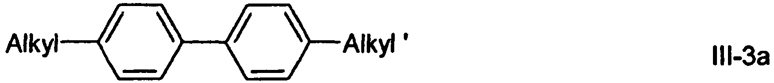 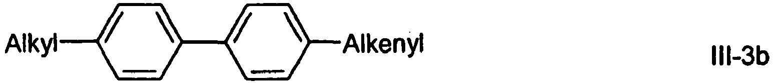 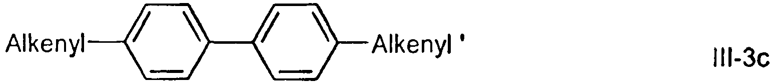 worin
- Alkyl und Alkyl': unabhängig voneinander Alkyl mit 1 bis 7 C-Atomen, bevorzugt mit 2 bis 5 C-Atomen
- Alkenyl: Alkenyl mit 2 bis 7 C-Atomen, bevorzugt mit 2 bis 5 C-Atomen bedeuten.

Der Anteil dieser Biphenyle in der Gesamtmischung beträgt vorzugsweise 3 Gew.-% oder mehr, insbesondere 5 Gew.-% oder mehr.
Bevorzugte Verbindungen der Formeln III-3a bzw. III-3b sind die Verbindungen der folgenden Formel 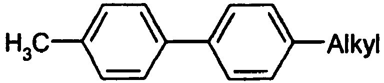 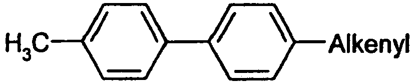 worin die Parameter die oben angegebenen Bedeutungen haben.

Besonders bevorzugte Verbindungen der Formel III-3b sind die Verbindungen der folgenden Formel 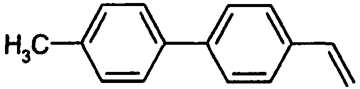 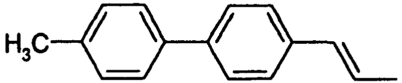 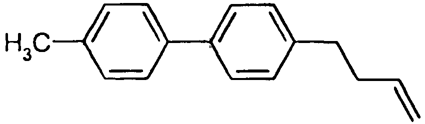 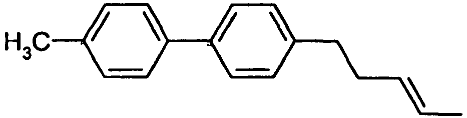 und hiervon insbesondere die der letzten Formel.
In einer bevorzugten Ausführungsform enthält das Medium eine oder mehrere Verbindungen der Formel III-4, insbesondere bevorzugt eine oder mehrere Verbindung(en), in denen R³¹ Vinyl oder 1-Propenyl und R³² Alkyl, bevorzugt n-Alkyl, besonders bevorzugt R³¹ Vinyl und R³² Methyl bedeuten.

In einer weiteren bevorzugten Ausführungsform enthält das Medium eine oder mehrere Verbindungen der Formel III-4, ausgewählt aus der Gruppe der Verbindungen der Formeln III-4a bis III-4d, bevorzugt der Formeln III-4a und/oder III-4b, besonders bevorzugt der Formel III-4b, 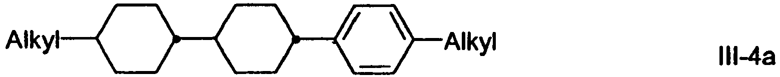 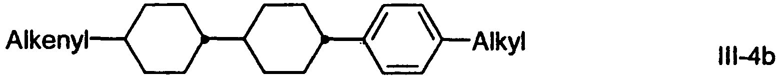 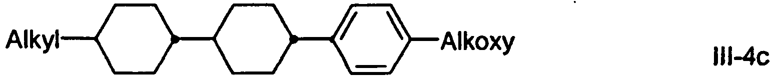 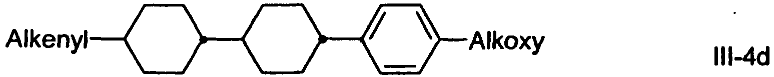 worin
- Alkyl und Alkyl': unabhängig voneinander Alkyl mit 1 bis7 C-Atomen, bevorzugt mit 2 bis 5 C-Atomen
- Alkoxy: Alkoxy mit bis 1 bis 5 C-Atomen, bevorzugt mit 2 bis 4 C-Atomen und
- Alkenyl: Alkenyl mit 2 bis 7 C-Atomen, bevorzugt mit 2 bis 5 C-Atomen bedeuten.

In einer bevorzugten Ausführungsform enthält das Medium eine oder mehrere Verbindungen der Formel III-5, insbesondere bevorzugt eine oder mehrere Verbindung(en), in denen R³¹ Alkyl, Vinyl oder 1-Propenyl und R³² Alkyl, bevorzugt n-Alkyl bedeuten.

In einer weiteren bevorzugten Ausführungsform enthält das Medium eine oder mehrere Verbindungen der Formel III-5 ausgewählt aus der Gruppe der Verbindungen der Formeln III-5a bis III-5d, bevorzugt der Formeln III-5a und/oder III-5b, besonders bevorzugt der Formel III-5a 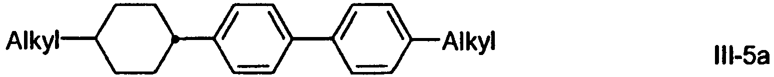 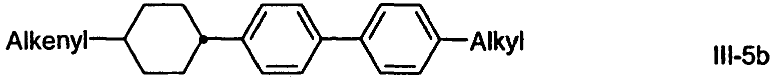 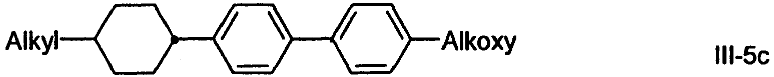 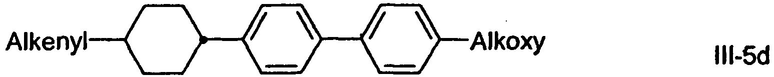 worin
- Alkyl und Alkyl': unabhängig voneinander Alkyl mit 1 bis 7 C-Atomen, bevorzugt mit 2 bis 5 C-Atomen
- Alkoxy: Alkoxy mit bis 1 bis 5 C-Atomen, bevorzugt mit 2 bis 4 C-Atomen und
- Alkenyl: Alkenyl mit 2 bis 7 C-Atomen, bevorzugt mit 2 bis 5 C-Atomen bedeuten.
und/oder der Formeln III-5e bis III-5h, bevorzugt der Formeln III-5e und/oder III-5f, besonders bevorzugt der Formel III-5e 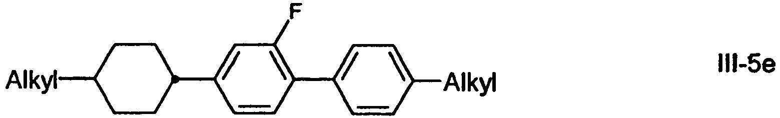 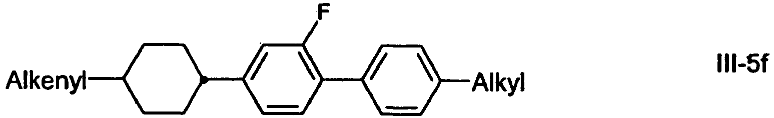 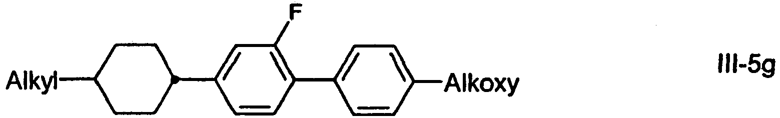 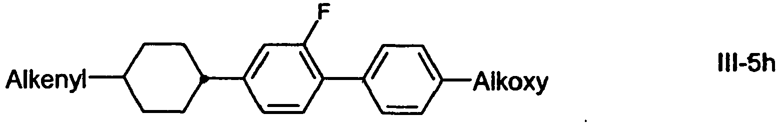 worin
- Alkyl und Alkyl': unabhängig voneinander Alkyl mit 1 bis 7 C-Atomen, bevorzugt mit 2 bis 5 C-Atomen
- Alkoxy: Alkoxy mit bis 1 bis 5 C-Atomen, bevorzugt mit 2 bis 4 C-Atomen und
- Alkenyl: Alkenyl mit 2 bis 7 C-Atomen, bevorzugt mit 2 bis 5 C-Atomen bedeuten.

In einer weiteren bevorzugten Ausführungsform enthält das Medium eine oder mehrere Verbindungen der Formel III-6 ausgewählt aus der Gruppe der Verbindungen der Formeln III-6a bis III-6c, bevorzugt der Formeln III-6a und/oder III-6b, besonders bevorzugt der Formel III-6a 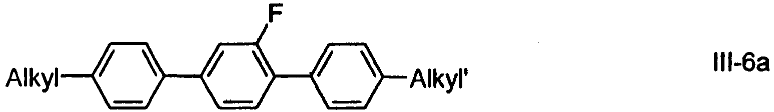 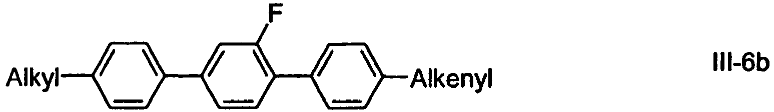 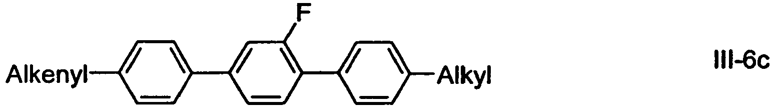 worin
- Alkyl und Alkyl': unabhängig voneinander Alkyl mit 1 bis 7 C-Atomen, bevorzugt mit 2 bis 5 C-Atomen,
- Alkoxy: Alkoxy mit bis 1 bis 5 C-Atomen, bevorzugt mit 2 bis 4 C-Atomen, und
- Alkenyl: Alkenyl mit 2 bis 7 C-Atomen, bevorzugt mit 2 bis 5 C-Atomen bedeuten.

Besonders bevorzugt enthalten die erfindungsgemäßen Medien eine oder mehrere Verbindungen ausgewählt aus den Verbindungen der Formeln III-6a, bevorzugt ausgewählt aus der Gruppe der Verbindungen PGP-2-3, PGP-3-3 und PGP-3-4, und der Formel III-6b, bevorzugt ausgewählt aus der Gruppe der Formeln PGP-1-2V, PGP-2-2V und PGP-3-2V, wobei die Akronyme(Abkürzungen) in den Tabellen A bis C erläutert und in Tabelle D durch Beispiele illustriert sind.

In einer weiteren bevorzugten Ausführungsform enthält das Medium eine oder mehrere Verbindungen der Formel III-10 ausgewählt aus der Gruppe der Verbindungen der Formeln III-10a und III-10b 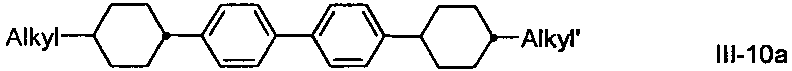 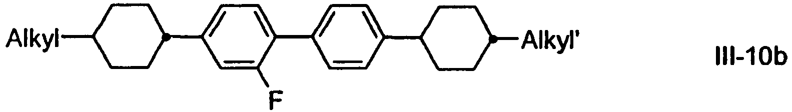 worin
- Alkyl und Alkyl': unabhängig voneinander Alkyl mit 1 bis 7 C-Atomen, bevorzugt mit 2 bis 5 C-Atomen bedeuten.

In einer weiteren bevorzugten Ausführungsform enthält das Medium eine oder mehrere Verbindungen der Formel III-11 der Verbindungen der **Formeln III-11a** 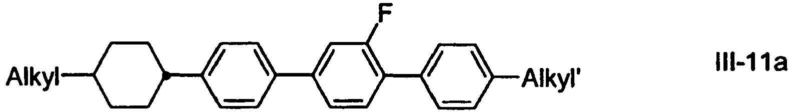 worin
- Alkyl und Alkyl': unabhängig voneinander Alkyl mit 1 bis 7 C-Atomen, bevorzugt mit 2 bis 5 C-Atomen bedeuten.

In einer bevorzugten Ausführungsform enthält das Medium eine oder mehrere Verbindungen der Formel IV, ausgewählt aus der Gruppe der Verbindungen der Formeln IVA bis IVD, bevorzugt IVA bis IVC und ganz besonders bevorzugt IVA und IVB 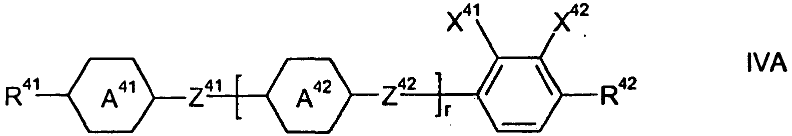 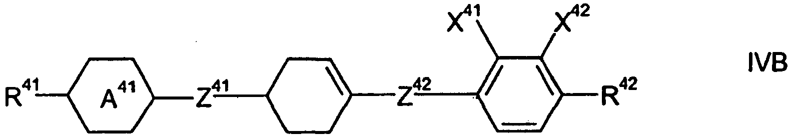 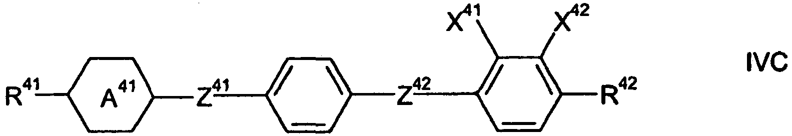 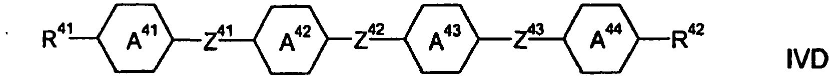 worin die Parameter die oben angegebenen Bedeutungen haben, in Formel IVA 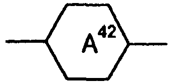 jedoch nicht 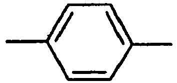 und nicht 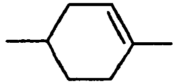 bedeutet, und bevorzugt 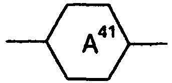 und 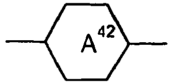 unabhängig voneinander 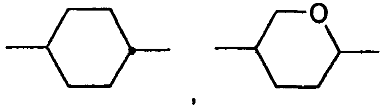 oder 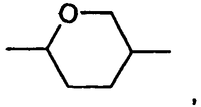 und besonders bevorzugt 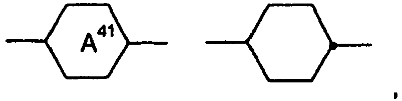
- R⁴¹: Alkyl,
- R⁴²: Alkyl oder Alkoxy, besonders bevorzugt (O)CᵥH₂ᵥ₊₁,
- X⁴¹ und X⁴²: beide F,
- Z²¹ und Z²²: unabhängig voneinander eine Einfachbindung, -CH₂-CH₂-, -CH=CH-, -CH₂O-, -OCH₂-, -O-, -CH₂-, -CF₂O-, oder -OCF₂-, bevorzugt eine Einfachbindung oder -CH₂CH₂-, besonders bevorzugt eine Einfachbindung,
- p: 1 oder 2, und
- v: 1 bis 6
bedeuten.

In einer bevorzugten Ausführungsform enthält das Medium eine oder mehrere Verbindungen der Formel IV, ausgewählt aus der Gruppe der Verbindungen der Formeln IV-1 bis IV-14 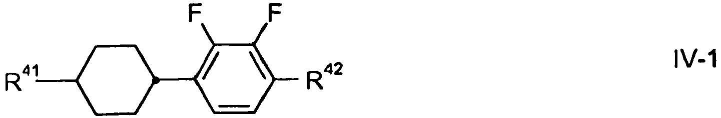 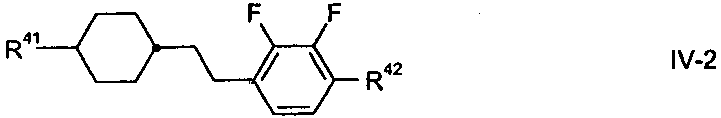 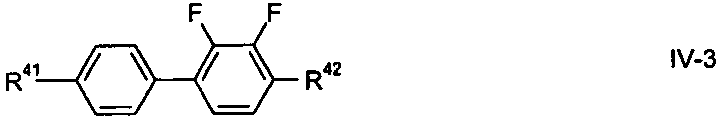 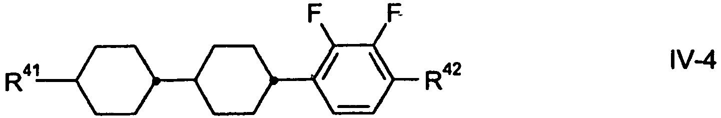 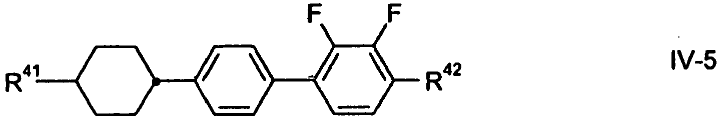 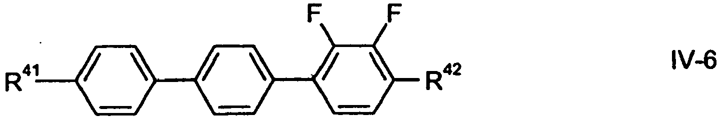 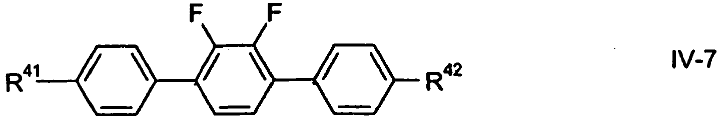 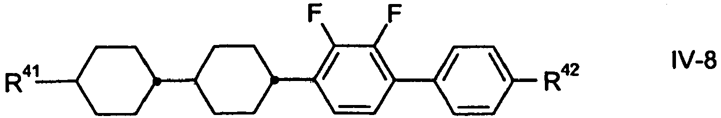 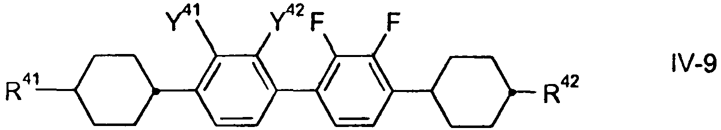 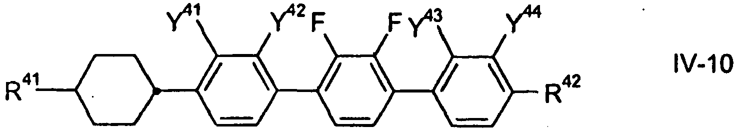 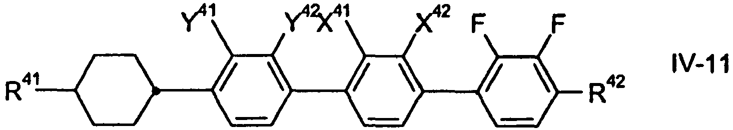 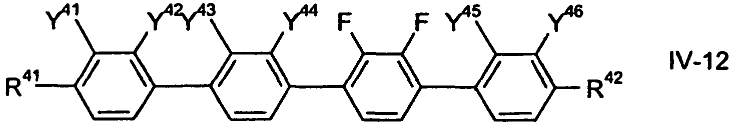 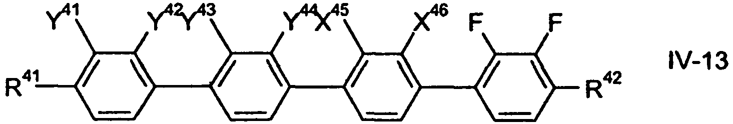 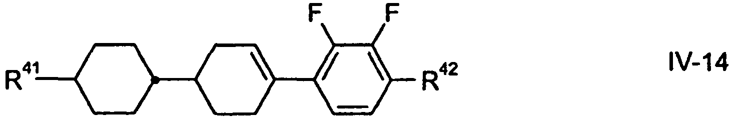 worin
- Y⁴¹ bis Y⁴⁶: unabhängig voneinander H oder F, und
- X⁴¹ und X⁴²: beide H oder einer von X⁴¹ und X⁴² H und der andere F,
jedoch bevorzugt höchstens vier, besonders bevorzugt höchstens drei und ganz besonders bevorzugt einer oder zwei, von Y⁴¹ bis Y⁴⁶, X⁴¹ und X⁴² F,
bedeuten und
die übrigen Parameter die jeweilige oben bei Formel IV angegebene Bedeutung haben und bevorzugt
- R⁴¹: Alkyl oder Alkenyl und
- R⁴²: Alkyl, Alkenyl, Alkoxy oder Alkenyloxy, bevorzugt (O)CᵥH₂ᵥ₊₁ und
- v: eine ganze Zahl von 1 bis 6 bedeuten.

In einer weiteren bevorzugten Ausführungsform enthält das Medium eine oder mehrere Verbindungen der Formel IV-1, ausgewählt aus der Gruppe der Verbindungen der Formeln IV-1a bis IV-1d, bevorzugt der Formeln IV-1b und/oder IV-1d, besonders bevorzugt der Formel IV-1b, 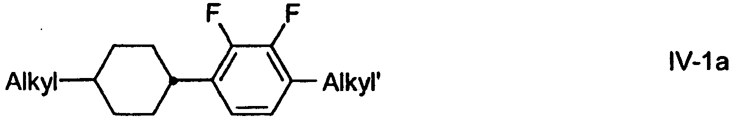 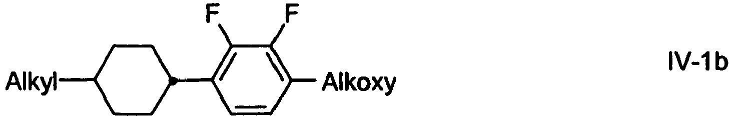 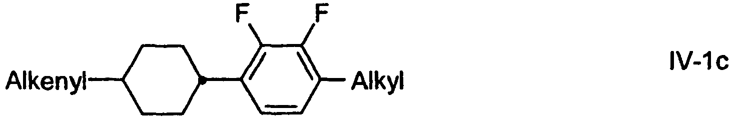 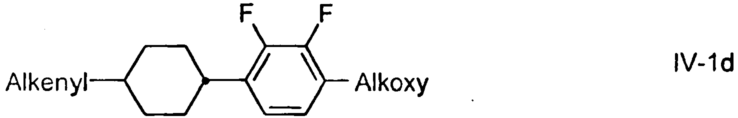 worin
- Alkyl und Alkyl': unabhängig voneinander Alkyl mit 1 bis 7 C-Atomen, bevorzugt mit 2 bis 5 C-Atomen
- Alkoxy: Alkoxy mit 1 bis 7 C-Atomen, bevorzugt mit 2 bis 4 C-Atomen und
- Alkenyl: Alkenyl mit 2 bis 7 C-Atomen, bevorzugt mit 2 bis 5 C-Atomen bedeuten.

Bevorzugte Verbindungen der Formeln IV-1c bzw. IV-1d sind die Verbindungen der folgenden Formeln 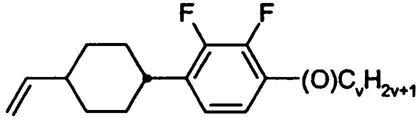 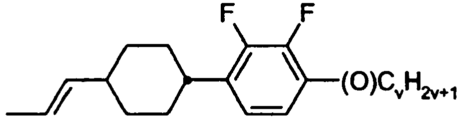 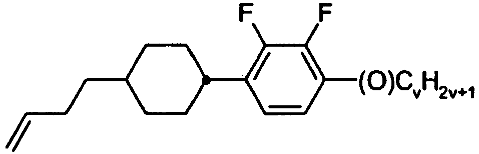 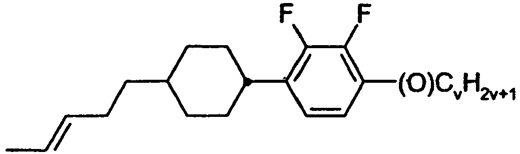 worin v die oben angegebene Bedeutung hat.

Weitere bevorzugte Verbindungen der Formeln IV-1 sind die Verbindungen der folgenden Formeln 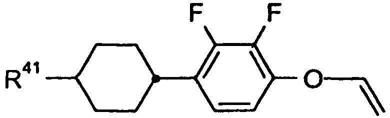 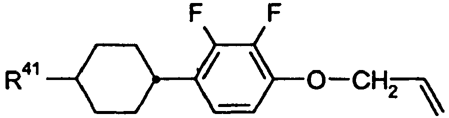 worin R⁴¹ die jeweilige oben bei Formel IV angegebene Bedeutung hat.

In einer bevorzugten Ausführungsform enthält das Medium eine oder mehrere Verbindungen der Formel IV-3, ausgewählt aus der Gruppe der Verbindungen der Formeln IV-3a bis IV-3d, bevorzugt der Formeln IV-3b und/oder IV-3d, besonders bevorzugt der Formel IV-3b, 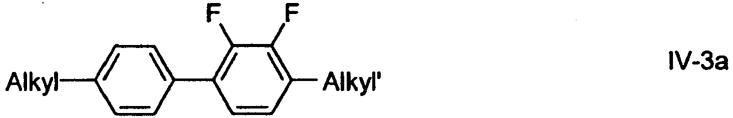 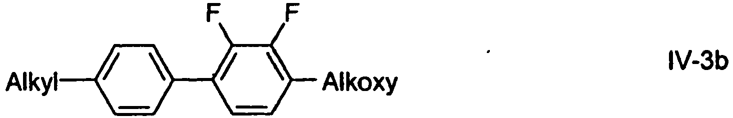 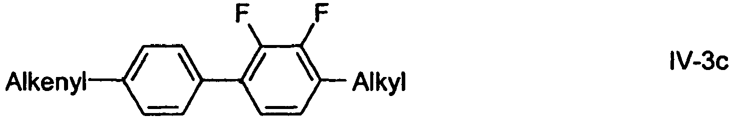 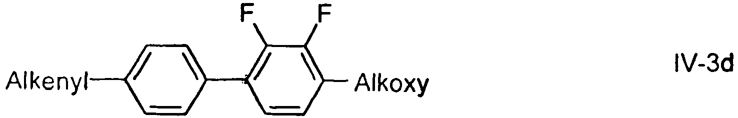 worin
- Alkyl und Alkyl': unabhängig voneinander Alkyl mit 1 bis 7 C-Atomen, bevorzugt mit 2 bis 5 C-Atomen
- Alkoxy: Alkoxy mit 1 bis 7 C-Atomen, bevorzugt mit 2 bis 4 C-Atomen und
- Alkenyl: Alkenyl mit 2 bis 7 C-Atomen, bevorzugt mit 2 bis 5 C-Atomen bedeuten.

Vorzugsweise beträgt die Konzentration dieser Biphenylverbindungen in der Gesamtmischung 3 Gew.-% oder mehr, insbesondere 5 Gew.-% oder mehr, und ganz besonders bevorzugt von 5 bis 25 Gew.-%.

In einer weiteren bevorzugten Ausführungsform enthält das Medium eine oder mehrere Verbindungen der Formel IV-4, ausgewählt aus der Gruppe der Verbindungen der Formeln IV-4a bis IV-4d, bevorzugt der Formeln IV-4a und/oder IV-4b, besonders bevorzugt der Formel IV-4b, 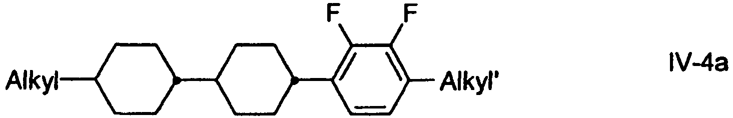 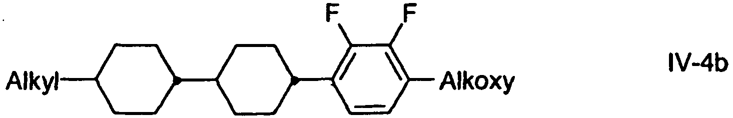 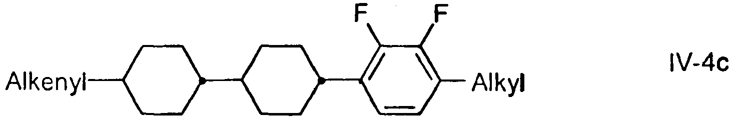 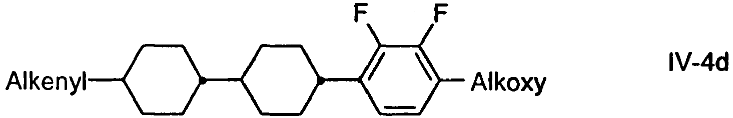 worin
- Alkyl und Alkyl': unabhängig voneinander Alkyl mit 1 bis 7 C-Atomen, bevorzugt mit 2 bis 5 C-Atomen
- Alkoxy: Alkoxy mit 1 bis 7 C-Atomen, bevorzugt mit 2 bis 4 C-Atomen und
- Alkenyl: Alkenyl mit 2 bis 7 C-Atomen, bevorzugt mit 2 bis 5 C-Atomen bedeuten.

Bevorzugte Verbindungen der Formeln IV-4c bzw. IV-4d sind die Verbindungen der folgenden Formeln 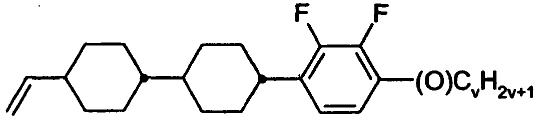 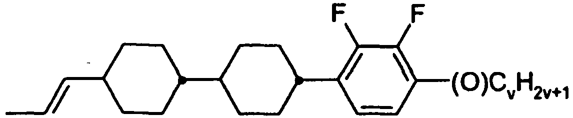 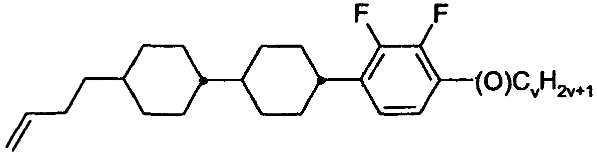 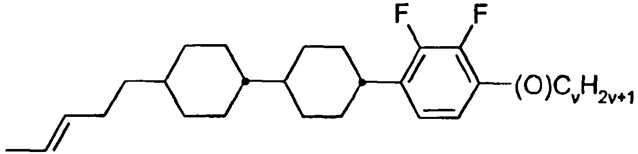 worin v die oben angegebene Bedeutung hat.

In einer weiteren bevorzugten Ausführungsform enthält das Medium eine oder mehrere Verbindungen der Formel IV-4 der folgenden Unterformel IV-4e 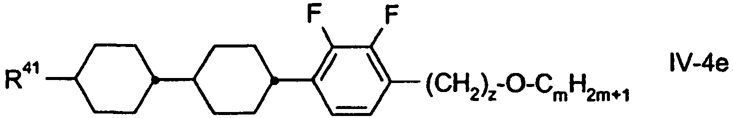 worin
- R⁴¹: die oben angegebene Bedeutung hat und
- m und z: jeweils unabhängig eine ganze Zahl von 1 bis 6 und
- m + z: bevorzugt eine ganze Zahl von 1 bis 6 bedeuten.

In einer weiteren bevorzugten Ausführungsform enthält das Medium eine oder mehrere Verbindungen der Formel IV-5, ausgewählt aus der Gruppe der Verbindungen der Formeln IV-5a bis IV-5d, bevorzugt der Formeln IV-5b und/oder IV-5d, 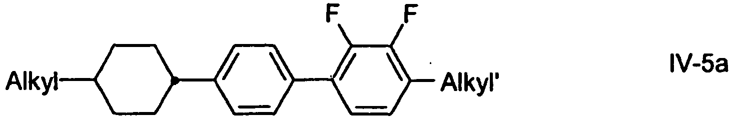 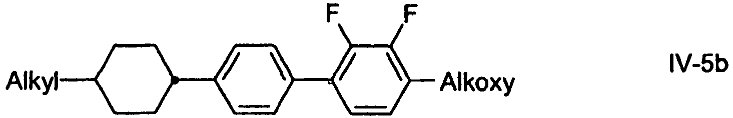 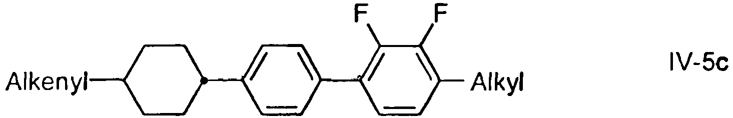 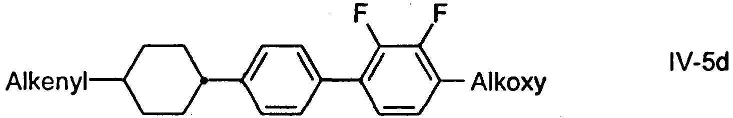 worin
- Alkyl und Alkyl': unabhängig voneinander Alkyl mit 1 bis 7 C-Atomen, bevorzugt mit 2 bis 5 C-Atomen
- Alkoxy Alkoxy: mit 1 bis 7 C-Atomen, bevorzugt mit 2 bis 4 C-Atomen und
- Alkenyl: Alkenyl mit 2 bis 7 C-Atomen, bevorzugt mit 2 bis 5 C-Atomen bedeuten.

Bevorzugte Verbindungen der Formeln IV-5c bzw. IV-5d sind die Verbindungen der folgenden Formeln 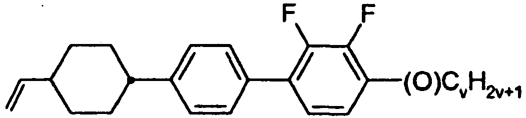 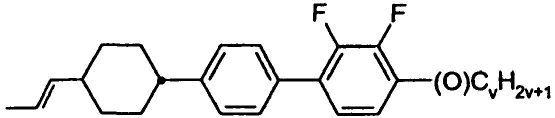 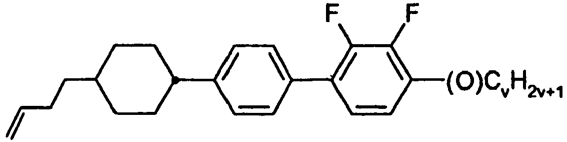 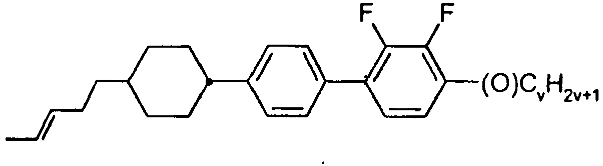 worin v die oben angegebene Bedeutung hat.

In einer weiteren bevorzugten Ausführungsform enthält das Medium eine oder mehrere Verbindungen der Formel IV-6, ausgewählt aus der Gruppe der Verbindungen der Formeln IV-6a bis IV-6d, bevorzugt der Formeln IV-6a und/oder IV-6c, besonders bevorzugt der Formel IV-6a, 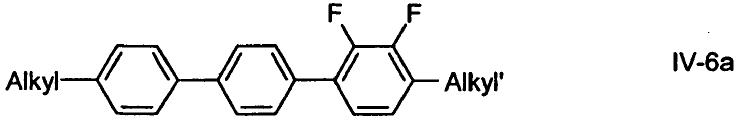 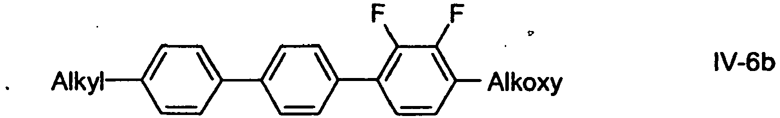 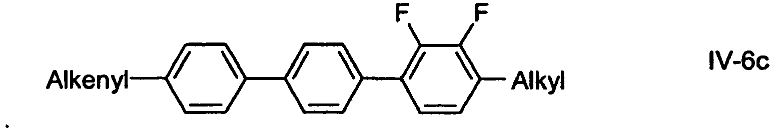 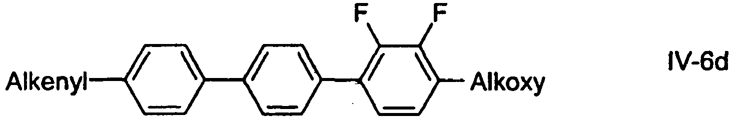 worin
- Alkyl und Alkyl': unabhängig voneinander Alkyl mit 1 bis 7 C-Atomen, bevorzugt mit 2 bis 5 C-Atomen
- Alkoxy: Alkoxy mit bis 1 bis 7 C-Atomen, bevorzugt mit 2 bis 4 C-Atomen und
- Alkenyl: Alkenyl mit 2 bis 7 C-Atomen, bevorzugt mit 2 bis 5 C-Atomen
bedeuten und/oder der Gruppe der Verbindungen der Formeln IV-6e bis IV-6m 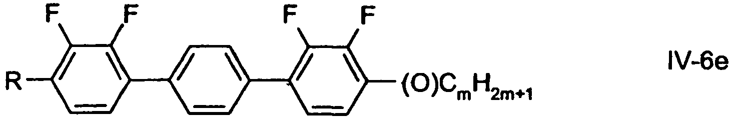 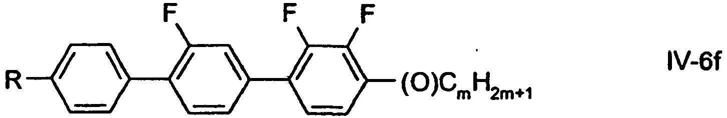 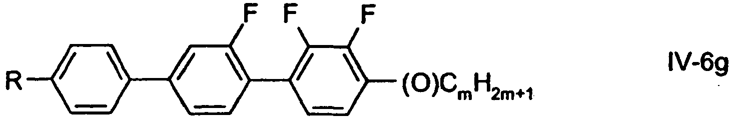 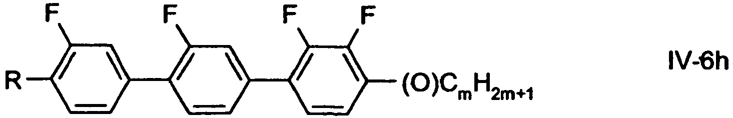 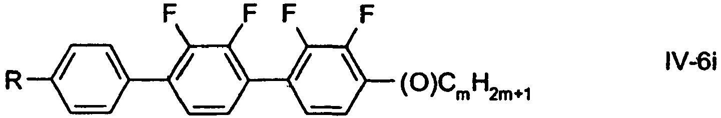 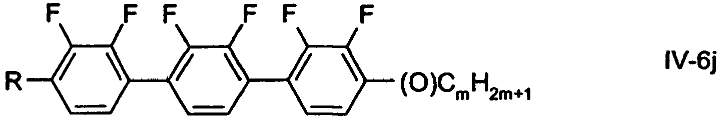 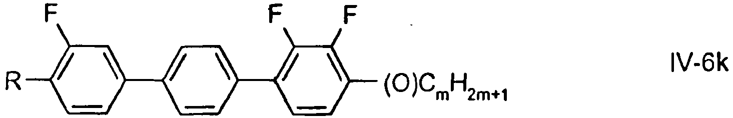 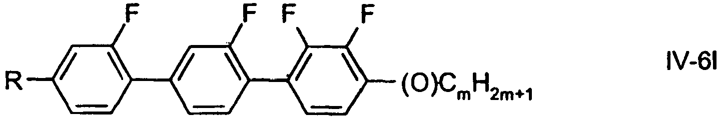 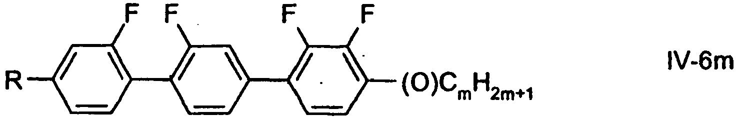 worin
- R die oben für R⁴¹: gegebene Bedeutung hat und
- m: eine ganze Zahl von 1 bis 6 bedeutet.

Bevorzugt bedeutet R geradkettiges Alkyl oder Alkoxy mit jeweils 1 bis 6 C-Atomen oder Alkylalkoxy, Alkenyl oder Alkenyloxy mit 2-6 C-Atomen, besonders bevorzugt Alkyl mit 1-5 C-Atomen, vorzugsweise Methyl, Ethyl, Propyl, Butyl, oder ferner Alkoxy mit 1-5 C-Atomen, vorzugsweise Hexyl, Methoxy, Ethoxy, Propoxy, oder Butoxy.

In einer weiteren bevorzugten Ausführungsform enthält das Medium eine oder mehrere Verbindungen der Formel IV-7, ausgewählt aus der Gruppe der Verbindungen der Formeln IV-7a bis IV-7d, bevorzugt der Formeln IV-7a und/oder IV-7c, besonders bevorzugt der Formel IV-7a, 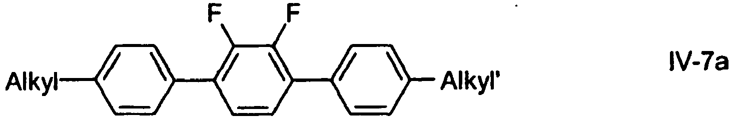 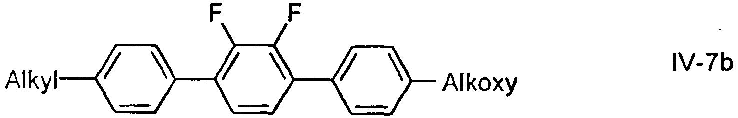 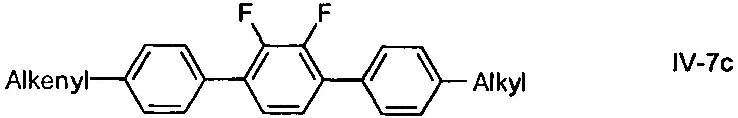 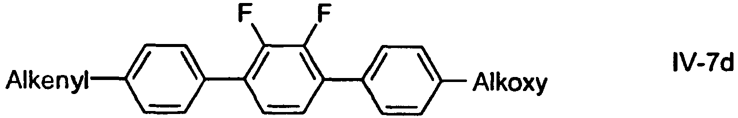 worin
- Alkyl und Alkyl': unabhängig voneinander Alkyl mit 1 bis 7 C-Atomen, bevorzugt mit 2 bis 5 C-Atomen
- Alkoxy: Alkoxy mit bis 1 bis 5 C-Atomen, bevorzugt mit 2 bis 4 C-Atomen und
- Alkenyl: Alkenyl mit 2 bis 7 C-Atomen, bevorzugt mit 2 bis 5 C-Atomen
bedeuten und/oder der Gruppe der Verbindungen der Formeln IV-7e bis IV-7i 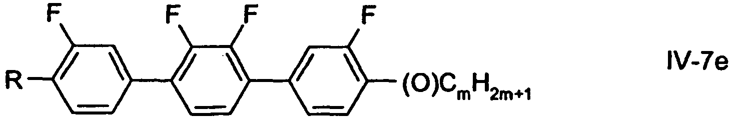 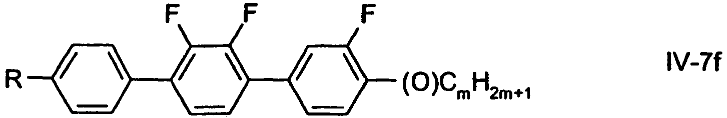 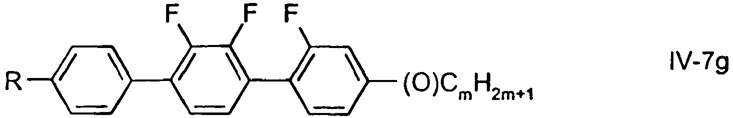 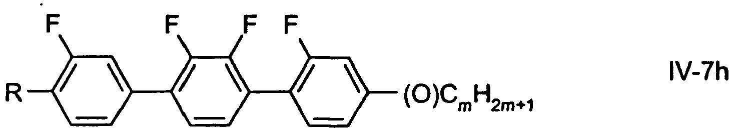 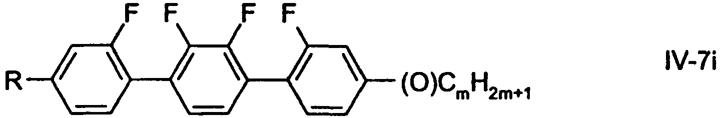 worin
- R die oben für R⁴¹: gegebene Bedeutung hat und
- m: eine ganze Zahl von 1 bis 6 bedeutet.

Bevorzugt bedeutet R geradkettiges Alkyl oder Alkoxy mit jeweils 1 bis 6 C-Atomen oder Alkylalkoxy, Alkenyl oder Alkenyloxy mit 2-6 C-Atomen, besonders bevorzugt Alkyl mit 1-5 C-Atomen, vorzugsweise Methyl, Ethyl, Propyl, Butyl, oder ferner Alkoxy mit 1-5 C-Atomen, vorzugsweise Hexyl, Methoxy, Ethoxy, Propoxy, oder Butoxy.

In einer weiteren bevorzugten Ausführungsform enthält das Medium eine oder mehrere Verbindungen der Formel IV-8, ausgewählt aus der Gruppe der Verbindungen der Formeln IV-8a und IV-8b, besonders bevorzugt IV-8b 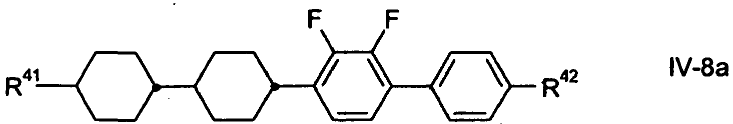 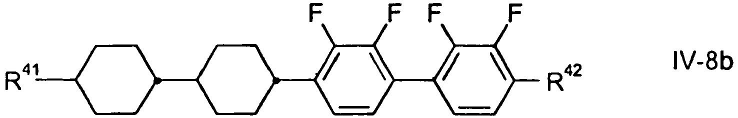 worin die Parameter die oben angegebenen Bedeutungen haben.

In einer weiteren bevorzugten Ausführungsform enthält das Medium eine oder mehrere Verbindungen der Formel IV-9, ausgewählt aus der Gruppe der Verbindungen der Formeln IV-9a bis IV-9d 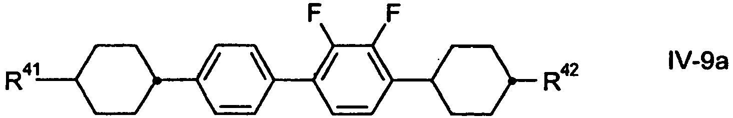 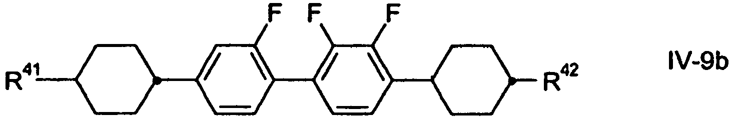 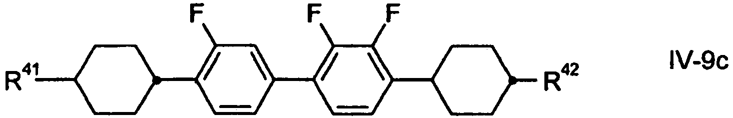 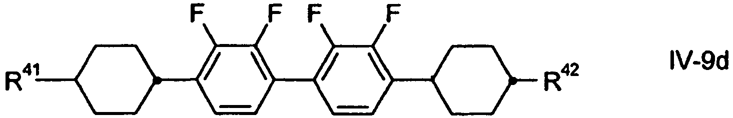 worin die Parameter die oben angegebenen Bedeutungen haben und bevorzugt
- R⁴²: CᵥH₂ᵥ₊₁ und
- v: eine ganze Zahl von 1 bis 6 bedeutet.

In einer weiteren bevorzugten Ausführungsform enthält das Medium eine oder mehrere Verbindungen der Formel IV-10, ausgewählt aus der Gruppe der Verbindungen der Formeln IV-10a bis IV-10e 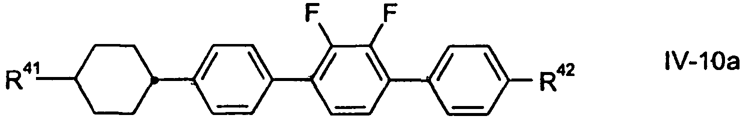 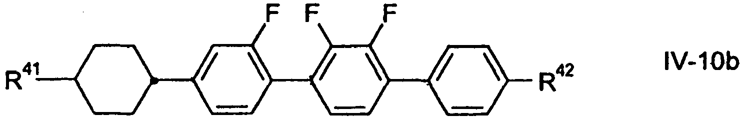 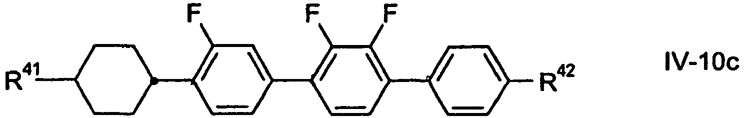 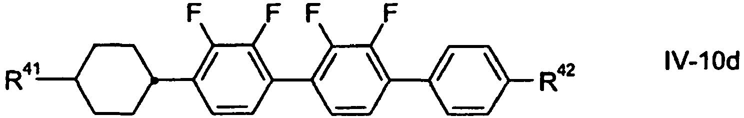 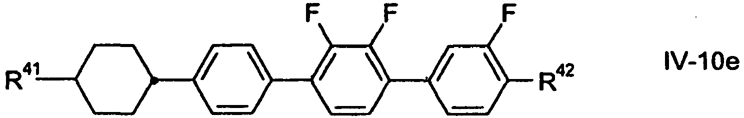 worin die Parameter die oben angegebenen Bedeutungen haben und bevorzugt
- R⁴²: CᵥH₂ᵥ₊₁ und
- v: eine ganze Zahl von 1 bis 6 bedeutet.

In einer weiteren bevorzugten Ausführungsform enthält das Medium eine oder mehrere Verbindungen der Formel IV-11, ausgewählt aus der Gruppe der Verbindungen der Formeln IV-11a und IV-11b, besonders bevorzugt IV-11b 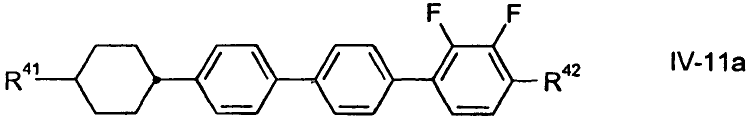 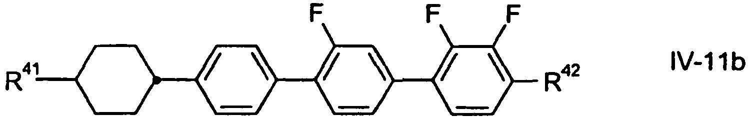 worin die Parameter die oben angegebenen Bedeutungen haben.

In einer weiteren bevorzugten Ausführungsform enthält das Medium eine oder mehrere Verbindungen der Formel IV-14, ausgewählt aus der Gruppe der Verbindungen der Formeln IV-14a bis IV-14d, bevorzugt der Formeln IV-14a und/oder IV-14b, besonders bevorzugt der Formel IV-14b, 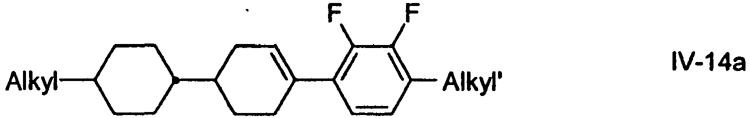 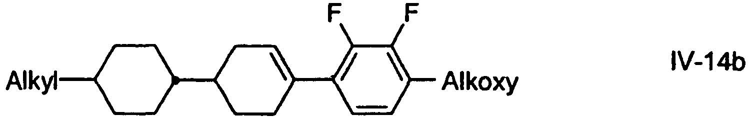 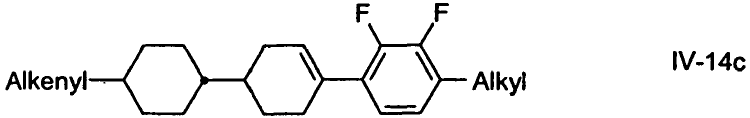 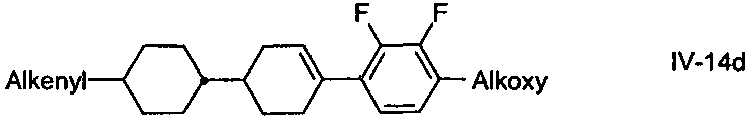 worin
- Alkyl und Alkyl': unabhängig voneinander Alkyl mit 1 bis 7 C-Atomen, bevorzugt mit 2 bis 5 C-Atomen
- Alkoxy: Alkoxy mit 1 bis 7 C-Atomen, bevorzugt mit 2 bis 4 C-Atomen und
- Alkenyl: Alkenyl mit 2 bis 7 C-Atomen, bevorzugt mit 2 bis 5 C-Atomen bedeuten.

In einer weiteren bevorzugten Ausführungsform enthält das Medium (zusätzlich) eine oder mehrere Verbindungen der Formel V bevorzugt ausgewählt aus der Gruppe der Verbindungen der Formeln V-1 bis V-8, bevorzugt der Formeln V-7 und/oder V-8 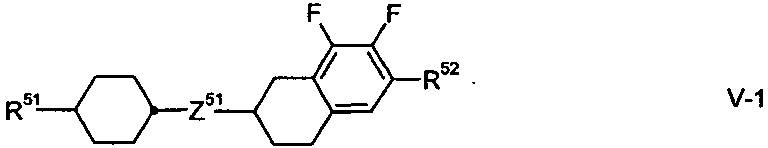 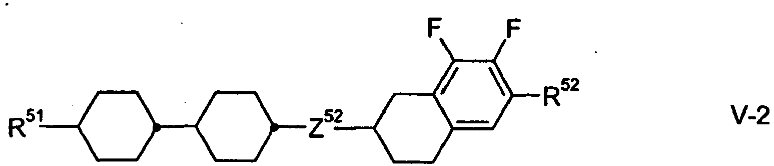 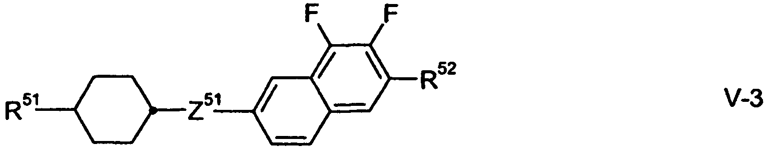 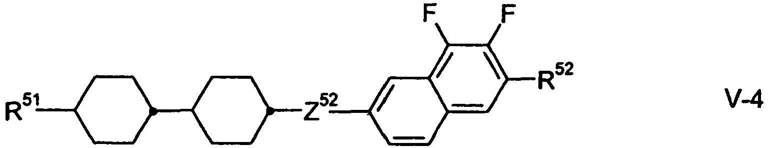 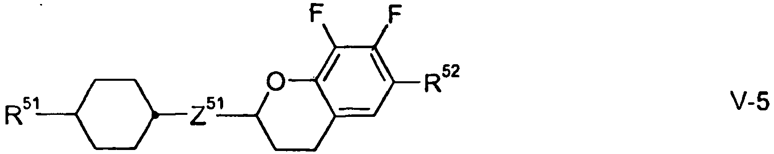 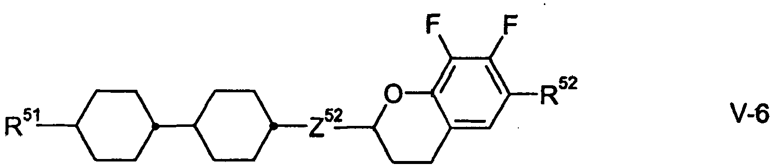 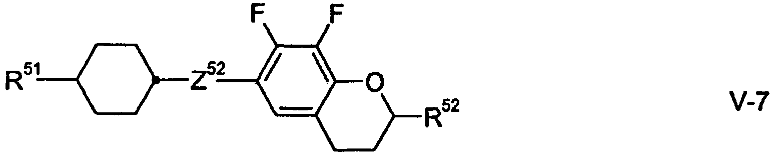 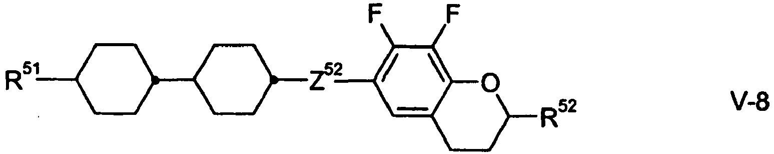 worin die Parameter die jeweilige oben bei Formel V angegebene Bedeutung haben und bevorzugt
- R⁵¹: Alkyl oder Alkenyl und
- R⁵²: Alkyl, Alkenyl, Alkoxy oder Alkenyloxy bedeuten,

In einer weiteren bevorzugten Ausführungsform enthält das Medium (zusätzlich) eine oder mehrere Verbindungen die eine fluorierte Phenanthren-Einheit aufweisen, bevorzugt Verbindungen der Formel V, bevorzugt ausgewählt aus der Gruppe der Verbindungen der Formeln V-9 und V-10 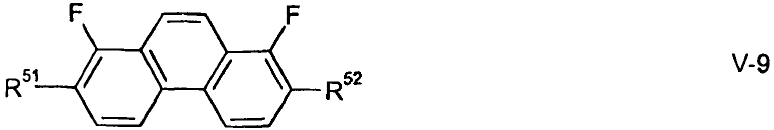 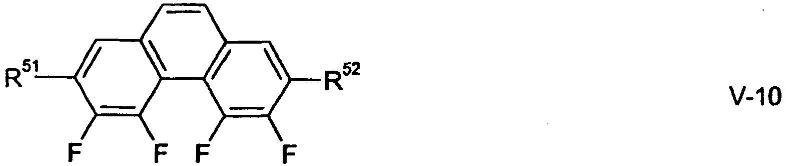 worin die Parameter die jeweilige oben bei Formel V angegebene Bedeutung haben und bevorzugt
- R⁵¹: Alkyl oder Alkenyl und
- R⁵²: Alkyl, Alkenyl, Alkoxy oder Alkenyloxy bedeuten.

In einer weiteren bevorzugten Ausführungsform enthält das Medium (zusätzlich) eine oder mehrere Verbindungen die eine fluorierte Dibenzofuran-Einheit aufweisen, bevorzugt Verbindungen der Formel V, bevorzugt der Formel V-11 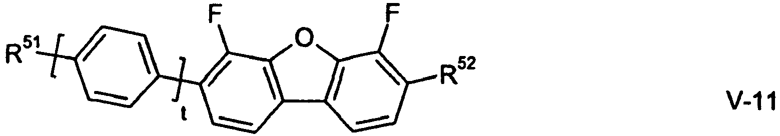 worin die Parameter die jeweilige oben bei Formel V angegebene Bedeutung haben und bevorzugt
- R⁵¹: Alkyl oder Alkenyl und
- R⁵²: Alkyl, Alkenyl, Alkoxy oder Alkenyloxy bedeuten.

Besonders bevorzugt enthält das Medium (zusätzlich) eine oder mehrere Verbindungen die eine dreifach fluorierte Naphthalindiyl-Einheit aufweisen, bevorzugt Verbindungen der Formel V, bevorzugt ausgewählt aus der Gruppe der Formeln V-12 bis V-15 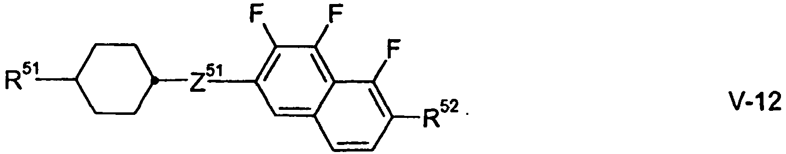 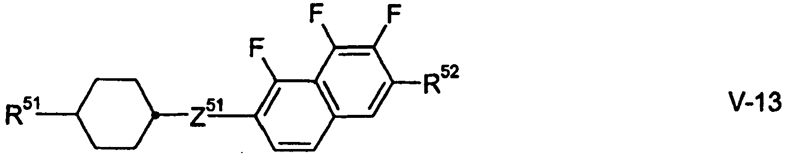 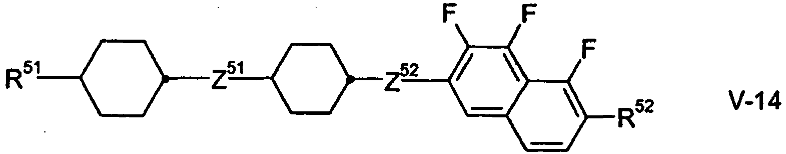 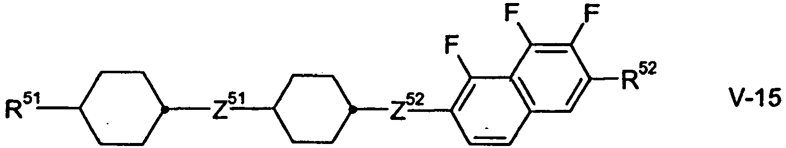 worin die Parameter die jeweilige oben unter Formel V gegebene Bedeutung haben und bevorzugt

in Formel V-12 und V-13
- Z⁵¹: -CH₂-CH₂-, -CH₂-O- oder eine Einfachbindung, bevorzugt -CH₂-O- oder eine Einfachbindung, besonders bevorzugt -CH₂-O-,
in Formel V-14 und V-15
- Z⁵¹: -CH₂-CH₂- oder eine Einfachbindung, bevorzugt eine Einfachbindung und
- Z⁵²: -CH₂-CH₂-, -CH₂-O- oder eine Einfachbindung, bevorzugt -CH₂-O- oder eine Einfachbindung, besonders bevorzugt -CH₂-O-
bedeuten.

Ganz besonders bevorzugt sind die folgenden Verbindungen, die Verbindungen der Formeln V-12a, V-12b, V-14a und V-14b 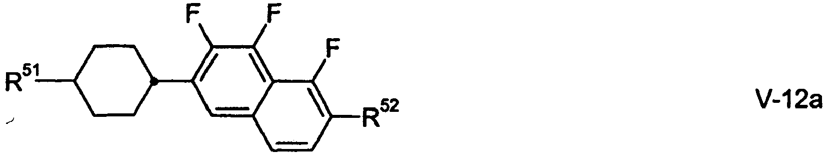 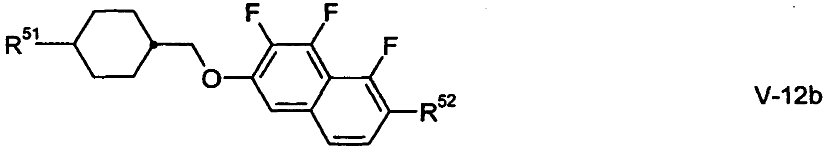 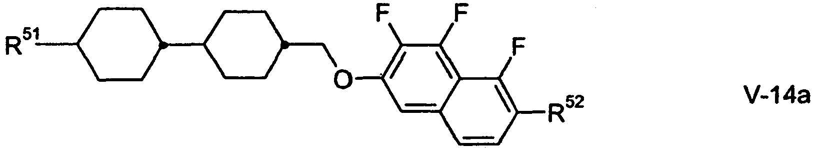 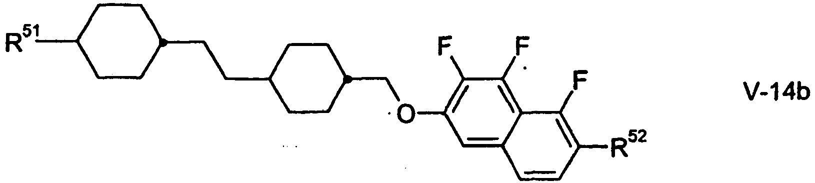 worin die Parameter die oben gegebene Bedeutung besitzen und R⁵¹ bevorzugt Alkyl mit 1 bis 7, bevorzugt mit 1 bis 5, C-Atomen, bevorzugt n-Alkyl und R⁵² bevorzugt Alkoxy mit 1 bis 5, bevorzugt mit 2 bis 4, C-Atomen bedeuten.

Die chirale Verbindung oder die chiralen Verbindungen, die in den Flüssigkristallmedien gemäß der vorliegenden Erfindung verwendet werden können, werden bevorzugte ausgewählt aus den bekannten chiralen Dotierstoffen. Bevorzugt besteht die Komponente E überwiegend, besonders bevorzugt im wesentlichen und ganz besonders bevorzugt nahezu vollständig aus einer oder mehreren Verbindungen ausgewählt aus der Gruppe der Verbindungen der folgenden Formeln VI bis VIII 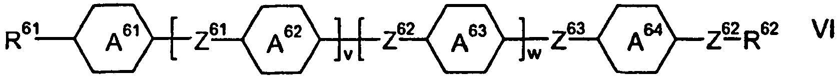 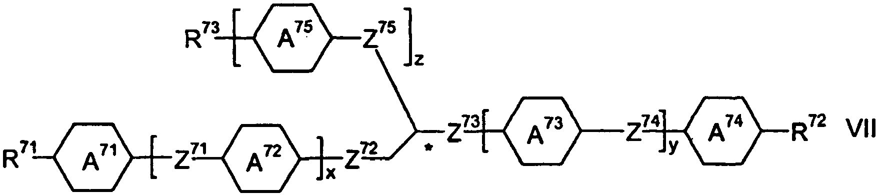 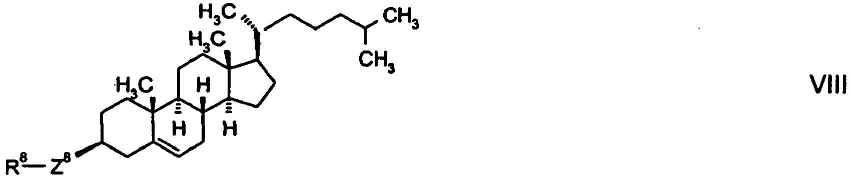 worin
- R⁶¹ und R⁶², R⁷¹ bis R⁷³ und R⁸: jeweils unabhängig voneinander, die oben bei Formel II für R²¹ gegebene Bedeutung besitzen, und alternativ H, CN, F, Cl CF₃, OCF₃, CF₂H oder OCF₂H und mindestens einer von R⁶¹ und R⁶² eine chirale Gruppe bedeuten,
- Z⁶¹ und Z⁶², Z⁷¹ bis Z⁷³ und Z⁸: jeweils unabhängig voneinander -CH₂CH₂-, -CH=CH-, -COO-, -O-CO- oder eine Einfachbindung, bevorzugt Z⁶¹, Z⁶², Z⁷¹, Z⁷⁴ und Z⁷⁵ eine Einfachbindung, Z⁶³, Z⁷² und Z⁷³ -COO- oder eine Einfachbindung, Z⁷² bevorzugt -COO- und Z⁷³ und Z⁸ -O-CO-, 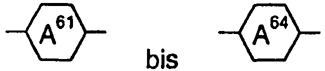 und 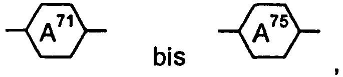 jeweils unabhängig voneinander, 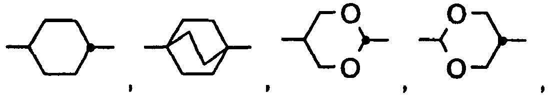 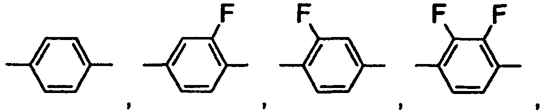 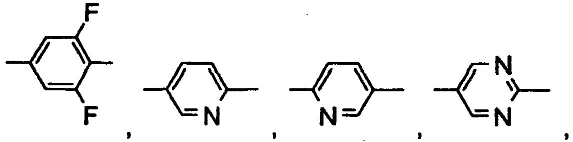 oder 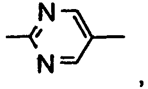
- u und v, und x, y und z: jeweils unabhängig voneinander, 0 oder 1, bevorzugt
- u und v: beide 0 und
- x und v: beide 1, bedeuten.

Besonders bevorzugte Ausführungsformen der vorliegenden Erfindung erfüllen eine oder mehrere der folgenden Bedingungen.
i. Das flüssigkristalline Medium hat eine Doppelbrechung von 0,090 oder mehr.
ii. Das flüssigkristalline Medium enthält eine oder mehrere Verbindungen der Teilformel I-1.
iii. Die Konzentrationen der einzelnen homologen Verbindungen der Formel I liegen im Bereich von 1 bis 20 %, bevorzugt von 2 bis 15 % und besonders bevorzugt von 3 bis 10 %.
iv. Die Gesamtkonzentration der Verbindungen der Formeln II-A bis II-F im Gesamtgemisch beträgt 0,1 Gew.-% oder weniger.
v. Die Gesamtkonzentration der Verbindungen, die eine oder mehrere Gruppen der Formel II-G enthalten, im Gesamtgemisch beträgt 0,1 Gew.-% oder weniger.
vi. Die Konzentrationen der einzelnen homologen Verbindungen der Formel I liegen im Bereich von 2 bis 15 %, bevorzugt von 3 bis 12 % und besonders bevorzugt von 4 bis 10 %.
vi. Der Anteil an Verbindungen der Formel III im Gesamtgemisch beträgt 10 % oder mehr, bevorzugt 70 % oder weniger und besonders bevorzugt 20 Gew.-% oder mehr.
vii. Das flüssigkristalline Medium enthält eine oder mehrere besonders bevorzugte Verbindungen der Formeln III-1c und III-1d ausgewählt aus den nachfolgend genannten den Teilformeln: 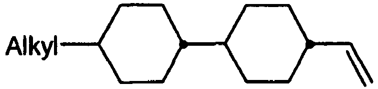 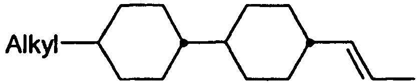 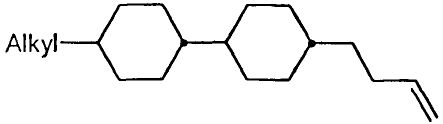 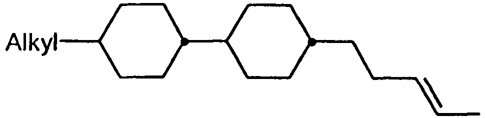 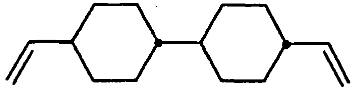 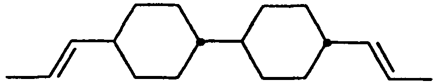 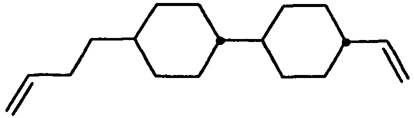 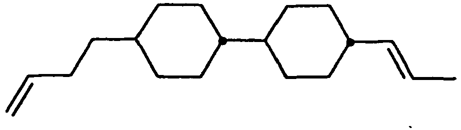 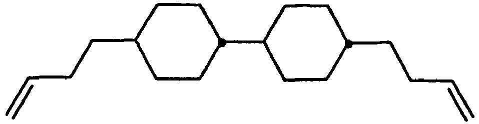 worin Alkyl die oben gegebene Bedeutung besitzt und bevorzugt, jeweils unabhängig voneinander Alkyl mit 1 bis 6, bevorzugt mit 2 bis 5 C-Atomen und besonders bevorzugt n-Alkyl, bedeutet.
vii. Das flüssigkristalline Medium enthält eine oder mehrere Verbindungen der Formel III ausgewählt aus der Gruppe der folgenden Formeln 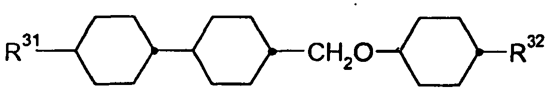 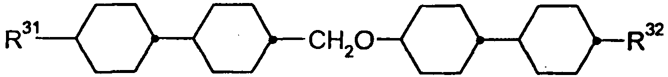 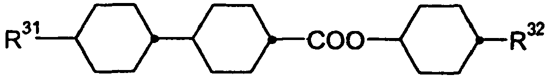 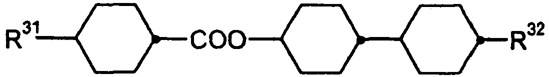 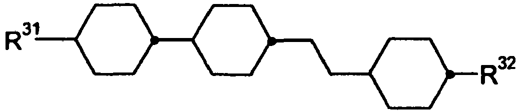 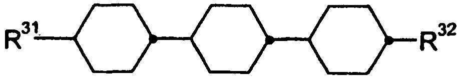 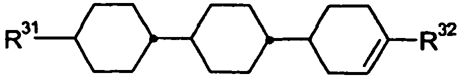 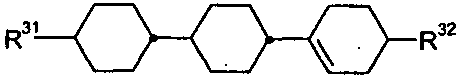 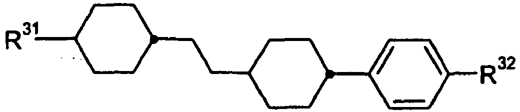 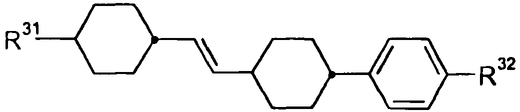 worin R³¹ und R³² die oben angegebene Bedeutung haben und bevorzugt R³¹ und R³² jeweils unabhängig voneinander einen geradkettiger Alkyl-, Alkoxy- oder Alkenylrest mit 1 bzw. 2 bis 7 C-Atomen, besonders bevorzugt geradkettiges Alkyl, ferner Alkenyl, bedeuten.
   Der Anteil dieser Verbindungen in der Mischung beträgt vorzugsweise 5 bis 40 Gew.-%.
ix. Das flüssigkristalline Medium enthält eine oder mehrere Verbindungen der Formel III ausgewählt aus der Gruppe der Verbindungen folgenden Formeln: CC-n-V und/oder CC-n-Vm (z.B. bevorzugt CC-5-V bevorzugt in einer Konzentration von bis zu 25 % oder weniger, CC-3-V, bevorzugt in einer Konzentration von bis zu 60 % oder weniger und/oder CC-3-V1, bevorzugt in einer Konzentration von bis zu 25 % oder weniger und/oder CC-4-V, bevorzugt in einer Konzentration von bis zu 40 % oder weniger) CC-n-m und/oder CC-n-Om (z.B.: bevorzugt CC-3-2 und/oder CC-3-3 und/oder CC-3-4 und/oder CC-3-O2 und/oder CCP-5-O2), CP-n-m und/oder CP-n-Om (z.B.: bevorzugt CP-3-2 und/ oder CP-5-2 und/oder CP-3-01 und/oder CP-3-O2), PP-n-Vm (z.B.: bevorzugt PP-n-2V), PP-n-IVm (z.B.: bevorzugt PP-n-2V1), CCP-n-m (z.B. bevorzugt CCP-n-1), CPP-n-m, CGP-n-m und CCOC-n-m, worin die Bedeutung der Akonyme (Abkürzungen) in den Tabellen A bis C erläutert und in Tabelle D durch Beispiele illustriert sind, bevorzugt in einer Gesamtkonzentration von bis zu 10 % oder mehr bis 70 % oder weniger.
x. Das flüssigkristalline Medium besteht im Wesentlichen aus
   - 2: Gew.-% bis 80 Gew.-% einer oder mehrerer Verbindungen der Formel I,
   - ,50 · 10⁻³: Gew.-% bis 1,0 Gew.-% einer oder mehrerer Verbindungen ausgewählt aus der Gruppe der Verbindungen der Formeln II-A bis II-F,
   - 5,0 ·10⁻⁴: Gew.-% bis 1,0 Gew.-% einer oder mehrerer Verbindungen, die ein, zwei oder mehrere Gruppen der Formel II-G enthalten,
   - 2: Gew.-% bis 80 Gew.-% einer oder mehrerer Verbindungen der Formel III und/oder
   - 2: Gew.-% bis 80 Gew.-% einer oder mehrerer Verbindungen ausgewählt aus der Gruppe der Verbindungen der Formeln IV und/oder V.
xii. Das flüssigkristalline Medium enthält eine oder mehrere Verbindungen der Formel IV vorzugsweise in Mengen von 2 Gew.-% oder mehr, insbesondere von 5 Gew.-% oder mehr, und ganz besonders bevorzugt von 5 Gew.-% oder mehr bis 25 Gew.-% oder weniger, insbesondere im Bereich von 2 Gew.-% oder mehr bis 12 Gew.-% oder weniger pro homologer Einzelverbindung.
xiii. Das flüssigkristalline Medium enthält eine oder mehrere Verbindungen der Formel IV-1 bis IV-3, bevorzugt IV-1 und/oder IV-3, bevorzugt der Formeln IV-1b und/oder IV-1d und/oder IV-3b und/oder IV-3d, besonders bevorzugt IV-1b und/oder IV-3b, vorzugsweise in einer Gesamtkonzentration von 60 % oder weniger und in einer Konzentration von 2 Gew.-% oder mehr, insbesondere von 5 Gew.-% oder mehr, und ganz besonders bevorzugt von 5 Gew.-% oder mehr bis 20 Gew.-% oder weniger pro homologer Einzelverbindung.
xiv. Das flüssigkristalline Medium enthält eine oder mehrere Verbindungen der Formel IV-4 und/oder IV-5, bevorzugt der Formeln IV-4b und/oder IV-4d und/oder IV-5b und/oder IV-5d, besonders bevorzugt IV-4b und/oder IV-5b, vorzugsweise in einer Gesamtkonzentration von 60 % oder weniger und in einer Konzentration von 2 Gew.-% oder mehr, insbesondere von 5 Gew.-% oder mehr, und ganz besonders bevorzugt von 5 Gew.-% oder mehr bis 20 Gew.-% oder weniger pro homologer Einzelverbindung.
xv. Das flüssigkristalline Medium enthält eine oder mehrere Verbindungen der Formel IV-6 und/oder IV-7, bevorzugt der Formeln IV-6a und/oder IV-7a, vorzugsweise in einer Gesamtkonzentration von 50 % oder weniger und bevorzugt in einer Konzentration von 2 Gew.-% oder mehr bis 10 Gew.-% oder weniger pro homologer Einzelverbindung der Formel IV-6 und in einer Konzentration von 2 Gew.-% oder mehr bis 20 Gew.-% oder weniger pro homologer Einzelverbindung der Formel IV-6.
xvi. Das flüssigkristalline Medium enthält eine oder mehrere Verbindungen der Formel IV vorzugsweise in Mengen von 2 Gew.-% oder mehr, insbesondere von 5 Gew.-% oder mehr, und ganz besonders bevorzugt von 5 Gew.-% bis 25 Gew.-% insbesondere im Bereich von 2 Gew.-% bis 12 Gew.-% pro Einzelverbindung.
xvii. Das flüssigkristalline Medium enthält eine oder mehrere Verbindungen der Formel V vorzugsweise in Mengen von 3 Gew.-% oder mehr, insbesondere von 5 Gew.-% oder mehr, und ganz besonders bevorzugt von 5 Gew.-% bis 25 Gew.-%, insbesondere im Bereich von 2 Gew.-% bis 20 Gew.-% pro Einzelverbindung.

Ein weiterer Gegenstand der Erfindung ist eine elektrooptische Anzeige mit einer Aktivmatrix-Adressierung basierend auf dem VA- bzw. ECB-Effekt, dadurch gekennzeichnet, dass sie als Dielektrikum ein flüssigkristallines Medium gemäß der vorliegenden Erfindung enthält.

Vorzugsweise weist die Flüssigkristallmischung einen nematischen Phasenbereich mit einer Breite von mindestens 60 Grad und eine Fließviskosität v₂₀ von maximal 30 mm² · s⁻¹ bei 20 °C auf.

Die erfindungsgemäße Flüssigkristallmischung weist ein Δε von etwa -0,5 bis -8,0, insbesondere von etwa -2,5 bis -6,0 auf, wobei Δε die dielektrische Anisotropie bedeutet. Die Rotationsviskosität γ₁ ist vorzugsweise 200 mPa·s oder weniger, insbesondere 170 mPa·s oder weniger.
Die Doppelbrechung Δn in der Flüssigkristallmischung liegt in der Regel, zwischen 0,06 und 0,16, vorzugsweise zwischen 0,08 und 0,14.

Die erfindungsgemäßen Mischungen sind für alle VA-TFT-Anwendungen geeignet, wie z.B. VAN, MVA, (S)-PVA und ASV. Weiterhin sind sie für IPS (ln plane switching)-, FFS (Fringe field switching)- und PALC-Anwendungen mit negativem Δε geeignet.

Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Die erfindungsgemäßen flüssigkristallinen Medien enthalten bevorzugt 4 bis 15, insbesondere 5 bis 12, und besonders bevorzugt 10 oder weniger, Verbindungen. Diese sind vorzugsweise ausgewählt aus der Gruppe der Verbindungen der Formeln I, II-A bis II-F, der Verbindungen, die eine oder mehrere Gruppen der Teilformel II-G enthalten, der Formeln und/oder III und/oder IV und/oder V.

Die erfindungsgemäßen flüssigkristallinen Medien können optional auch mehr als 18 Verbindungen enthalten. In diesem Fall enthalten sie vorzugsweise 18 bis 25 Verbindungen.

Neben Verbindungen der Formeln I bis V und gegebenenfalls der Formeln Vi bis VIII, können auch noch andere Bestandteile zugegen sein, z. B. in einer Menge von bis zu 45 % der Gesamtmischung, vorzugsweise jedoch bis zu 35 %, insbesondere bis zu 10 %.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexan-car bonsäurephenyl- oder -cyclohexylester, Phenylcyclohexane, Cyclohexylbiphenyle, Cyclohexylcyctohexane, Cyclohexylnaphthaline, 1,4-Bis-cyclohexylbiphenyle oder Cylohexylpyrimidine, Phenyl- oder Cyclohexyldioxane, gegebenenfalls halogenierten Stilbene, Benzylphenylether, Tolane und substituierten Zimtsäureestern.

Die wichtigsten als Bestandteile derartiger Flüssigkristallphasen in Frage kommenden Verbindungen lassen sich durch die Formel IX charakterisieren,

R⁹¹-L-G-E-R⁹² IX

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

| | | |
|---|---|---|
| G | -CH=CH- | -N(O)=N- |
| | -CH-CQ- | -CH=N(O)- |
| | -C≡C- | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂- | -OCH₂- |
| | -(CH₂)₄- | -(CH₂)₃O- |

oder eine C-C-Einfachbindung, Q Halogen, vorzugsweise Chlor, oder -CN, und R⁹¹ und R⁹² jeweils Alkyl, Alkenyl, Alkoxy, Alkanoyloxy oder Alkoxycarbonyloxy mit bis zu 18, vorzugsweise bis zu 8 Kohlenstoffatomen, oder einer dieser Reste auch CN, NC, NO₂, NCS, CF₃, OCF₃, F, Cl oder Br bedeuten.

Bei den meisten dieser Verbindungen sind R⁹¹ und R⁹² voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Die Konzentration der Verbindungen der Formel IX in der Gesamtmischung beträgt bevorzugt 1 % bis 25 %, besonders bevorzugt 1 bis 15 % und ganz besonders bevorzugt 2 % bis 9 %.

Optional können die erfindungsgemäßen Medien auch eine dielektrisch positive Komponente enthalten, deren Gesamtkonzentration bevorzugt 10 Gew.-% oder weniger bezogen auf das gesamte Medium beträgt.

In einer bevorzugten Ausführungsform enthalten die erfindungsgemäßen Flüssigkristallmedien insgesamt bezogen auf die Gesamtmischung 5 % oder mehr bis 60 % oder weniger, bevorzugt 10 % oder mehr bis 50 % oder weniger, bevorzugt 15 % oder mehr bis 40 % oder weniger und besonders bevorzugt 20 % oder mehr bis 35 % oder weniger und ganz besonders bevorzugt 25 % oder mehr bis 30 % oder weniger an Verbindungen der Formel I und

1 % oder mehr bis 45 % oder weniger, bevorzugt 2 % oder mehr bis 40 % oder weniger, bevorzugt 3 % oder mehr bis 35 % oder weniger und besonders bevorzugt 5 % oder mehr bis 30 % oder weniger und ganz besonders bevorzugt 10 % oder mehr bis 20 % oder weniger an Verbindungen der Formel III und

5 % oder mehr bis 80 % oder weniger, bevorzugt 25 % oder mehr bis 75 % oder weniger, besonders bevorzugt 35 % oder mehr bis 70 % oder weniger und ganz besonders bevorzugt 40 % oder mehr bis 65 % oder weniger an Verbindungen der Formeln IV und/oder V.

Wobei die jeweiligen verschiedenen bevorzugten Bereiche der Konzentrationen der Verbindungen der jeweiligen verschiedenen Formeln beliebig miteinander kombiniert werden können, jedoch die Gesamtkonzentration aller Verbindungen in den Medien jeweils 100 % nicht überschreitet.

In einer bevorzugten Ausführungsform enthalten die erfindungsgemäßen Flüssigkristallmedien Verbindungen ausgewählt aus der Gruppe der Verbindungen der Formeln I, II-A bis II-F, II-G und **III** bis V, bevorzugt bestehen sie überwiegend, besonders bevorzugt im wesentlichen und ganz besonders bevorzugt nahezu vollständig aus den Verbindungen der genannten Formeln.

Die erfindungsgemäßen Flüssigkristallmedien weisen bevorzugt eine nematische Phase von jeweils mindestens von -20°C oder weniger bis 70°C oder mehr, besonders bevorzugt von -30°C oder weniger bis 80°C oder mehr, ganz besonders bevorzugt von -40°C oder weniger bis 85°C oder mehr und am allermeisten bevorzugt von -40°C oder weniger bis 90°C oder mehr auf.

Hierbei bedeutet der Begriff ,,eine nematische Phase aufweisen" einerseits, dass bei tiefen Temperaturen bei der entsprechenden Temperatur keine smektische Phase und keine Kristallisation beobachtet wird und andererseits, dass beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen einer der elektrooptischen Anwendung entsprechenden Schichtdicke für mindestens 100 Stunden überprüft. Wenn die Lagerstabilität bei einer Temperatur von -20°C in einer entsprechenden Testzelle 1.000 h oder mehr beträgt, wird das Medium als bei dieser Temperatur stabil bezeichnet. Bei Temperaturen von -30°C bzw. -40°C betragen die entsprechenden Zeiten 500 h bzw. 250 h. Bei hohen Temperaturen wird der Klärpunkt nach üblichen Methoden in Kapillaren gemessen.

In einer bevorzugten Ausführungsform sind die erfindungsgemäßen Flüssigkristallmedien durch Werte der optischen Anisotropien im mittleren bis niedrigen Bereich gekennzeichnet. Die Werte der Doppelbrechung liegen bevorzugt im Bereich von 0,065 oder mehr bis 0,130 oder weniger, besonders bevorzugt im Bereich von 0,080 oder mehr bis 0,120 oder weniger und ganz besonders bevorzugt im Bereich von 0,085 oder mehr bis 0,110 oder weniger.

In dieser Ausführungsform haben die erfindungsgemäßen Flüssigkristallmedien eine negative dielektrische Anisotropie und weisen relativ hohe Werte des Betrags der dielektrischen Anisotropie (|Δε|) auf, die bevorzugt im Bereich von 2,7 oder mehr bis 5,3 oder weniger, bevorzugt bis 4,5 oder weniger, bevorzugt von 2,9 oder mehr bis 4,5 oder weniger, besonders bevorzugt von 3,0 oder mehr bis 4,0 oder weniger und ganz besonders bevorzugt von 3,5 oder mehr bis 3,9 oder weniger, liegen.

Die erfindungsgemäßen Flüssigkristallmedien weisen relativ kleine Werte für die Schwellenspannung (V₀) im Bereich von 1,7 V oder mehr bis 2,5 V oder weniger, bevorzugt von 1,8 V oder mehr bis 2,4 V oder weniger, besonders bevorzugt von 1,9 V oder mehr bis 2,3 V oder weniger und ganz besonders bevorzugt von 1,95 V oder mehr bis 2,1 V oder weniger, auf.

In einer weiteren bevorzugten Ausführungsform weisen die erfindungsgemäßen Flüssigkristallmedien bevorzugt relativ niedrige Werte der mittleren dielektrischen Anisotropie (ε_{av.} ≡ ε (ε_{∥}+ 2ε_{⊥})/3) auf, die bevorzugt im Bereich von 5,0 oder mehr bis 7,0 oder weniger, bevorzugt von 5,5 oder mehr bis 6,5 oder weniger, noch mehr bevorzugt von 5,7 oder mehr bis 6,4 oder weniger, besonders bevorzugt von 5,8 oder mehr bis 6,2 oder weniger und ganz besonders bevorzugt von 5,9 oder mehr bis 6,1 oder weniger, liegen.

In einer bevorzugten Ausführungsform, die sich insbesondere zur Anwendung in LCD TV Anzeigen eignet, weisen die erfindungsgemäßen Flüssigkristallmedien Werte des Betrags der dielektrischen Anisotropie (|Δε|) auf, die bevorzugt im Bereich von 1,7 oder mehr bis 4,9 oder weniger, bevorzugt bis 4,3 oder weniger, bevorzugt von 2,3 oder mehr bis 4,0 oder weniger, besonders bevorzugt von 2,8 oder mehr bis 3,8 oder weniger, liegen.

In dieser Ausführungsform weisen die erfindungsgemäßen Flüssigkristallmedien Werte für die Schwellenspannung (V₀) im Bereich von 1,9 V oder mehr bis 2,5 V oder weniger, bevorzugt von 2,1 V oder mehr bis 2,3 V oder weniger, auf.

Außerdem weisen die erfindungsgemäßen Flüssigkristallmedien hohe Werte für die VHR in Flüssigkristallzellen auf.
Diese sind in frisch gefüllten Zellen bei 20°C in den Zellen größer oder gleich 95 %, bevorzugt größer oder gleich 97 %, besonders bevorzugt größer oder gleich 98 % und ganz besonders bevorzugt größer oder gleich 99 % und nach 5 Minuten im Ofen bei 100°C in den Zellen größer oder gleich 90 %, bevorzugt größer oder gleich 93 %, besonders bevorzugt größer oder gleich 96 % und ganz besonders bevorzugt größer oder gleich 98 %.

In der Regel weisen dabei Flüssigkristallmedien mit einer geringen Ansteuerspannung bzw. Schwellenspannung eine geringere VHR auf als solche mit einer größeren Ansteuerspannung bzw. Schwellenspannung und umgekehrt.

Diese bevorzugten Werte für die einzelnen physikalischen Eigenschaften werden von den erfindungsgemäßen Medien bevorzugt auch jeweils miteinander kombiniert eingehalten.
In der vorliegenden Anmeldung bedeutet der Begriff "Verbindungen", auch geschrieben als "Verbindung(en)", sofern nicht explizit anders angegeben, sowohl eine als auch mehrere Verbindungen.

Die einzelnen Verbindungen werden, sofern nichts anderes angegeben, in den Mischungen in Konzentrationen generell jeweils von 1 % oder mehr bis 30 % oder weniger, bevorzugt von 2 % oder mehr bis 30 % oder weniger und besonders bevorzugt von 3 % oder mehr bis 16 % oder weniger eingesetzt.

Für die vorliegende Erfindung bedeutet im Zusammenhang mit der Angabe der Bestandteile der Zusammensetzungen, wenn nicht im Einzelfall anders angegeben:
- "enthalten": die Konzentration der betreffenden Bestandteile in der Zusammensetzung beträgt bevorzugt 5 % oder mehr, besonders bevorzugt 10 % oder mehr, ganz besonders bevorzugt 20 % oder mehr,
- "überwiegend bestehen aus": die Konzentration der betreffenden Bestandteile in der Zusammensetzung beträgt bevorzugt 50 % oder mehr, besonders bevorzugt 55 % oder mehr und ganz besonders bevorzugt 60 % oder mehr,
- "im wesentlichen bestehen aus": die Konzentration der betreffenden Bestandteile in der Zusammensetzung beträgt bevorzugt 80 % oder mehr, besonders bevorzugt 90 % oder mehr und ganz besonders bevorzugt 95 % oder mehr und
- "nahezu vollständig bestehen aus": die Konzentration der betreffenden Bestandteile in der Zusammensetzung beträgt bevorzugt 98 % oder mehr, besonders bevorzugt 99 % oder mehr und ganz besonders bevorzugt 100,0 %.

Dies gilt sowohl für die Medien als Zusammensetzungen mit ihren Bestandteilen, die Komponenten und Verbindungen sein können, als auch für die Komponenten mit ihren Bestandteilen, den Verbindungen. Lediglich in Bezug auf die Konzentration einer einzelnen Verbindung im Verhältnis zum gesamten Medium bedeutet der Begriff enthalten: die Konzentration der betreffenden Verbindung beträgt bevorzugt 1 % oder mehr, besonders bevorzugt 2 % oder mehr, ganz besonders bevorzugt 4 % oder mehr.
Für die vorliegende Erfindung bedeutet "≤" kleiner oder gleich, bevorzugt kleiner und "≥" größer oder gleich, bevorzugt größer.

Für die vorliegende Erfindung bedeuten 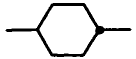 trans-1,4-Cyclohexylen und 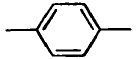 1,4-Phenylen.

Für die vorliegende Erfindung bedeuten die Begriffe ,,dielektrisch positive Verbindungen" solche Verbindungen mit einem Δε > 1,5, "dielektrisch neutrale Verbindungen" solche mit -1,5 ≤ Δε ≤ 1,5 und "dielektrisch negative" Verbindungen solche mit Δε < -1,5. Hierbei wird die dielektrische Anisotropie der Verbindungen bestimmt, indem 10 % der Verbindungen in einem flüssigkristallinen Host gelöst werden und von der resultierenden Mischung die Kapazität in mindestens jeweils einer Testzelle mit 20 µm Schichtdicke mit homeotroper und mit homogener Oberflächenorientierung bei 1 kHz bestimmt wird. Die Messspannung beträgt typischerweise 0,5 V bis 1,0 V, sie ist jedoch stets niedriger als die kapazitive Schwelle der jeweiligen untersuchten Flüssigkristallmischung.

Als Hostmischung für dielektrisch positive und dielektrisch neutrale Verbindungen wird ZLI-4792 und für dielektrisch negative Verbindungen ZLI-2857, beide von Merck KGaA, Deutschland, verwendet. Aus der Änderung der Dielektrizitätskonstante der Hostmischung nach Zugabe der zu untersuchenden Verbindung und Extrapolation auf 100 % der eingesetzten Verbindung werden die Werte für die jeweiligen zu untersuchenden Verbindungen erhalten. Die zu untersuchende Verbindung wird zu 10 % in der Hostmischung gelöst. Wenn die Löslichkeit der Substanz hierzu zu gering ist, wird die Konzentration schrittweise solange halbiert, bis die Untersuchung bei der gewünschten Temperatur erfolgen kann.

Die erfindungsgemäßen Flüssigkristallmedien können bei Bedarf auch weitere Zusatzstoffe wie z. B. Stabilisatoren und/oder pleochroitische Farbstoffe und/oder chirale Dotierstoffe in den üblichen Mengen enthalten. Die eingesetzte Menge dieser Zusatzstoffe beträgt bevorzugt insgesamt 0 % oder mehr bis 10 % oder weniger bezogen auf die Menge der gesamten Mischung, besonders bevorzugt 0,1 % oder mehr bis 6 % oder weniger. Die Konzentration der einzelnen eingesetzten Verbindungen beträgt bevorzugt 0,1 % oder mehr bis 3 % oder weniger. Die Konzentration dieser und ähnlicher Zusatzstoffe wird bei der Angabe der Konzentrationen sowie der Konzentrationsbereiche der Flüssigkristallverbindungen in den Flüssigkristallmedien in der Regel nicht berücksichtigt.

In einer bevorzugten Ausführungsform enthalten die erfindungsgemäßen Flüssigkristallmedien einen Polymervorläufer, der eine oder mehrere reaktive Verbindungen, bevorzugt reaktive Mesogene und bei Bedarf auch weitere Zusatzstoffe wie z. B. Polymerisationsinitiatoren und/oder Polymerisationsmoderatore in den üblichen Mengen enthalten. Die eingesetzte Menge dieser Zusatzstoffe beträgt insgesamt 0 % oder mehr bis 10 % oder weniger bezogen auf die Menge der gesamten Mischung bevorzugt 0,1 % oder mehr bis 2 % oder weniger. Die Konzentration dieser und ähnlicher Zusatzstoffe wird bei der Angabe der Konzentrationen sowie der Konzentrationsbereiche der Flüssigkristallverbindungen in den Flüssigkristallmedien nicht berücksichtigt.

Die Zusammensetzungen bestehen aus mehreren Verbindungen, bevorzugt aus 3 oder mehr bis 30 oder weniger, besonders bevorzugt aus 6 oder mehr bis 20 oder weniger und ganz besonders bevorzugt aus 10 oder mehr bis 16 oder weniger Verbindungen, die auf herkömmliche Weise gemischt werden. In der Regel wird die gewünschte Menge der in geringerer Menge verwendeten Komponenten in den Komponenten gelöst, die den Hauptbestandteil der Mischung ausmachenden. Dies erfolgt zweckmäßigerweise bei erhöhter Temperatur. Liegt die gewählte Temperatur über dem Klärpunkt des Hauptbestandteils, so ist die Vervollständigung des Lösungsvorgangs besonders leicht zu beobachten. Es ist jedoch auch möglich, die Flüssigkristallmischungen auf anderen üblichen Wegen, z. B. unter Verwendung von Vormischungen oder aus einem so genannten ,,Multi Bottle System" herzustellen.

Die erfindungsgemäßen Mischungen zeigen sehr breite nematische Phasenbereiche mit Klärpunkten 65°C oder mehr, sehr günstige Werte für die kapazitive Schwelle, relativ hohe Werte für die Holding Ratio und gleichzeitig sehr gute Tieftemperaturstabilitäten bei -30°C und -40°C. Weiterhin zeichnen sich die erfindungsgemäßen Mischungen durch niedrige Rotationsviskositäten γ₁ aus.

Es versteht sich für den Fachmann von selbst, dass die erfindungsgemäßen Medien für die Verwendung in VA-, IPS-, FFS- oder PALC-Anzeigen auch Verbindungen enthalten kann, worin beispielsweise H, N, O, Cl, F durch die entsprechenden Isotope ersetzt sind.

Der Aufbau der erfindungsgemäßen Flüssigkristallanzeigen entspricht der üblichen Geometrie, wie sie z. B. in EP-OS 0 240 379, beschrieben wird.

Mittels geeigneter Zusatzstoffe können die erfindungsgemäßen Flüssigkristallphasen derart modifiziert werden, dass sie in jeder bisher bekannt gewordenen Art von z. B. ECB-, VAN-, IPS-, GH- oder ASM-VA-LCD-Anzeige einsetzbar sind.

In der nachfolgenden Tabelle E werden mögliche Dotierstoffe angegeben, die den erfindungsgemäßen Mischungen zugesetzt werden können. Sofern die Mischungen einen oder mehrere Dotierstoffe enthalten, wird er in Mengen von 0,01 bis 4 Gew.-%, vorzugsweise 0,1 bis 1;0 Gew.-%, eingesetzt.

Stabilisatoren, die beispielsweise den erfindungsgemäßen Mischungen zugesetzt werden können, vorzugsweise in Mengen von 0,01 bis 6 Gew.-%, insbesondere 0,1 bis 3 Gew.-%, werden nachfolgend in Tabelle F genannt.

Alle Konzentrationen sind für die Zwecke der vorliegenden Erfindung, soweit nicht explizit anders vermerkt, in Massenprozent angegeben und beziehen sich auf die entsprechende Mischung oder Mischungskomponente, soweit nicht explizit anders angegeben.

Alle angegebenen Werte für Temperaturen in der vorliegenden Anmeldung, wie z. B. der Schmelzpunkt T(C,N), der Übergang von der smektischen (S) zur nematischen (N) Phase T(S,N) und der Klärpunkt T(N,I), sind in Grad Celsius (°C) und alle Temperaturdifferenzen entsprechend Differenzgrad (° oder Grad) angegeben, sofern nicht explizit anders angegeben.

Der Begriff "Schwellenspannung" bezieht sich für die vorliegende Erfindung auf die kapazitive Schwelle (V₀), auch Freedericksz-Schwelle genannt, sofern nicht explizit anders angegeben.

Alle physikalischen Eigenschaften werden und wurden nach "Merck Liquid Crystals, Physical Properties of Liquid Crystals", Status Nov. 1997, Merck KGaA, Deutschland bestimmt und gelten für eine Temperatur von 20°C und Δn wird bei 589 nm und Δε bei 1 kHz bestimmt, sofern nicht jeweils explizit anders angegeben.

Die elektrooptischen Eigenschaften, z. B. die Schwellenspannung (V₀) (kapazitive Messung) werden, ebenso wie das Schaltverhalten, in bei der Merck Japan^{Ltd}. hergestellten Testzellen bestimmt. Die Messzellen haben Substrate aus Natriumglas (Sodalime Glas) und sind in einer ECB- bzw. VA-Konfiguration mit Polyimidorientierungsschichten (SE-1211 mit Verdünner **26 (Mischungsverhältnis 1:1) beide der Firma Nissan Chemicals, Japan), die senkrecht zueinander gerieben sind und die eine homöotrope Orientierung der Flüssigkristalle bewirken, ausgeführt. Die Fläche der durchsichtigen, nahezu quadratischen Elektroden aus ITO beträgt 1 cm².

Die verwendeten Flüssigkristallmischungen sind, wenn nicht anders angegeben, nicht mit einem chiralen Dotierstoff versetzt, sie eignen sich aber auch besonders für Anwendungen, in denen eine solche Dotierung erforderlich ist.

Die VHR wird in bei der Merck Japan^{Ltd.} hergestellten Testzellen bestimmt. Die Messzellen haben Substrate aus Natriumglas (Sodalime Glas) und sind mit Polyimidorientierungsschichten (AL-3046 der Firma Japan Synthetic Rubber, Japan) mit einer Schichtdicke von 50 nm, die senkrecht zueinander gerieben sind ausgeführt. Die Schichtdicke beträgt einheitlich 6,0 µm. Die Fläche der durchsichtigen Elektroden aus ITO beträgt 1 cm². Die VHR wird bei 20°C (VHR₂₀) und nach 5 Minuten im Ofen bei 100°C (VHR₁₀₀) in einem kommerziell erhältlichen Gerät der Firma Autronic Melchers, Deutschland bestimmt. Die verwendete Spannung hat eine Frequenz von 60 Hz.

Die Genauigkeit der Messwerte der VHR hängt vom jeweiligen Wert der VHR ab. Dabei nimmt die Genauigkeit mit geringer werdenden Werten ab. Die bei Werten in den verschiedenen Größenbereichen in der Regel beobachten Abweichungen sind in ihrer Größenordnung in der folgenden Tabelle zusammen gestellt.

| VHR-Bereich | | Abweichung |
|---|---|---|
| VHR-Werte | | (relativ) /% |
| von | bis | |
| 95,6% | 100% | +/- 0,1 |
| 99,0 % | 99,6 % | +/- 0,2 |
| 98 % | 99 % | +/- 0,3 |
| 95 % | 98 % | +/- 0.5 |
| 90% | 95 % | +/- 1 |
| 80% | 95 % | +/-2 |
| 60% | 80% | +/- 4 |
| 40% | 60 % | +/- 8 |
| 20% | 40% | +/- 10 |
| 10% | 20% | +/- 20 |

Die Stabilität gegen Bestrahlung mit UV wird in einem ,,Suntest CPS" einem kommerziellen Gerät der Firma Heraeus, Deutschland untersucht. Dabei werden die versiegelten Testzellen 2,0 Stunden ohne zusätzliche thermische Belastung bestrahlt. Die Bestrahlungsleistung im Wellenlängebereich von 300 nm bis 800 nm beträgt 765 W/m² V. Es wird ein UV "cut-off" Filter mit einer Kantenwellenlänge von 310 nm verwendet um den sogenannten Fensterglasmodus (Englisch: "window glass mode") zu simulieren. Bei jeder Versuchsserie werden für jede Bedingung mindestens vier Testzellen untersucht und die jeweiligen Ergebnisse werden als Mittelwerte der entsprechenden einzelnen Messungen angegeben.

Die Rotationsviskosität wird mit der Methode des rotierenden Permanentmagneten und die Fließviskosität in einem modifizierten Ubbelohde-Viskosimeter bestimmt. Für die Flüssigkristallmischungen ZLI-2293, ZLI-4792 und MLC-6608, alle Produkte der Firma Merck KGaA, Darmstadt, Deutschland, betragen die bei 20°C bestimmten Werte der Rotationsviskosität 161 mPa·s, 133 mPa·s bzw. 186 mPa·s und die der Fließviskosität (v) 21 mm² ·s⁻¹, 14 mm² ·s⁻¹ bzw. 27 mm²·s⁻¹.

Es werden die folgenden Symbole verwendet:
- Vₒ: Schwellenspannung, kapazitiv [V] bei 20°C,
- nₑ: außerordentlicher Brechungsindex gemessen bei 20°C und 589 nm,
- nₒ: ordentlicher Brechungsindex gemessen bei 20°C und 589 nm,
- Δn: optische Anisotropie gemessen bei 20°C und 589 nm,
- ε_{⊥}: dielektrische Suszeptibilität senkrecht zum Direktor bei 20°C und 1 kHz,
- ε∥: dielektrische Suszeptibilität parallel zum Direktor bei 20°C und 1 kHz,
- Δε: dielektrische Anisotropie bei 20°C und 1 kHz, cp. bzw.
- T(N,I): Klärpunkt [°C],
- γ₁: Rotationsviskosität gemessen bei 20°C [mPa·s],
- K₁: elastische Konstante, "splay"-Deformation bei 20°C [pN],
- K₂: elastische Konstante, "twist"-Deformation bei 20°C [pN],
- K₃: elastische Konstante, "bend"-Deformation bei 20°C [pN] und
- LTS: "low temperature stability" (Stabilität der Phase), bestimmt in Testzellen.

Die folgenden Beispiele erläutern die vorliegende Erfindung ohne sie zu begrenzen. Sie zeigen dem Fachmann jedoch bevorzugte Mischungskonzepte mit bevorzugt einzusetzenden Verbindungen und deren jeweiligen Konzentrationen sowie deren Kombinationen miteinander. Außerdem illustrieren die Beispiele, welche Eigenschaften und Eigenschaftskombinationen zugänglich sind.

Für die vorliegende Erfindung und in den folgenden Beispielen sind die Strukturen der Flüssigkristallverbindungen durch Acronyme angegeben, wobei die Transformation in chemische Formeln gemäß folgender Tabellen A bis C erfolgt. Alle Reste CₙH₂ₙ₊₁, CₘH₂ₘ₊₁ und CₗH₂ₗ₊₁ bzw. CₙH₂ₙ, CₘH₂ₘ und CₗH₂ₗ sind geradkettige Alkylreste bzw. Alkylenreste jeweils mit n, m bzw. I C-Atomen. In Tabelle A sind die Ringelemente der Kerne der Verbindung codiert, in Tabelle B sind die Brückenglieder aufgelistet und in Tabelle C sind die Bedeutungen der Symbole für die linken bzw. rechten Endgruppen der Moleküle aufgelistet. Die Akronyme werden aus den Codes für die Ringelemente mit optionalen Verknüpfungsgruppen, gefolgt von einem ersten Bindestrich und den Codes für die linke Endgruppe, sowie einem zweiten Bindestrich und den Codes für die rechts Endgruppe, zusammengesetzt. In Tabelle D sind Beispielstrukturen von Verbindungen mit ihren jeweiligen Abkürzungen zusammengestellt.

**Tabelle A: Ringelemente**

| | | | |
|---|---|---|---|
| **C** | 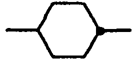 | | |
| **D** | 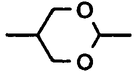 | **DI** | 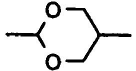 |
| **A** | 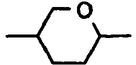 | **AI** | 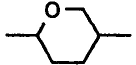 |
| **P** | 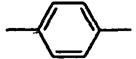 | | |
| **G** | 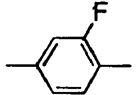 | **GI** | 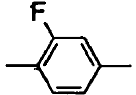 |
| **U** | 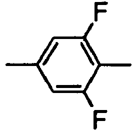 | **UI** | 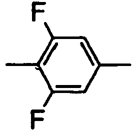 |
| **Y** | 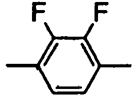 | | |
| **P(F, CI)Y** | 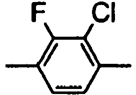 | **P(CI,F)Y** | 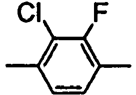 |
| **np** | 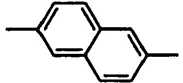 | | |
| **n3f** | 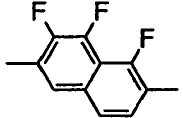 | **nN3fl** | 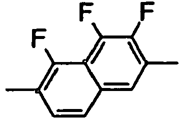 |
| **th** | 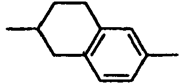 | **thl** | 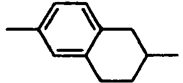 |
| **tH2f** | 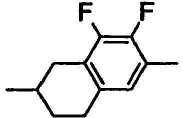 | **tH2fl** | 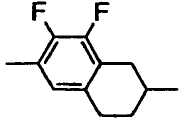 |
| **o2f** | 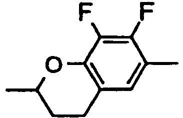 | **o2fl** | 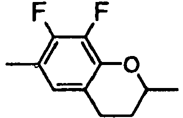 |
| **dh** | 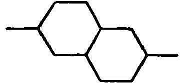 | | |
| **K** | 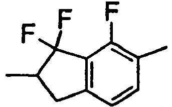 | **KI** | 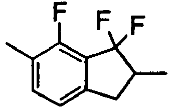 |
| **L** | 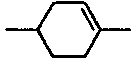 | **LI** | 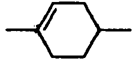 |
| **F** | 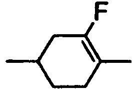 | **FI** | 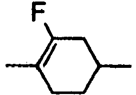 |

**Tabelle B: Brückenglieder**

| | | | |
|---|---|---|---|
| **E** | -CH₂-CH₂- | | |
| **V** | -CH=CH- | | |
| **T** | -C=C- | | |
| **W** | -CF₂-CF₂- | | |
| **B** | -CF=CF- | | |
| **Z** | -CO-O- | **ZI** | -O-CO- |
| **X** | -CF=CH- | **XI** | -CH=CF- |
| **O** | -CH₂-O- | **OI** | -O-CH₂- |
| **Q** | -CF₂-O- | **QI** | -O-CF₂- |

**Tabelle C: Endgruppen**

| **Links einzelstehend oder in Kombination** | | **Rechts einzelstehend oder in Kombination** | |
|---|---|---|---|
| **-n-** | CₙH₂ₙ₊₁- | **-n** | -CₙH₂ₙ₊₁ |
| **-nO-** | CₙH₂ₙ₊₁-O- | **-nO** | -O- CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH- CₙH₂ₙ- | **-Vn** | -CH=CH-CₙH₂ₙ₊₁ |
| **-nVm-** | CₙH₂ₙ₊₁-CH=CH-CₘH₂ₘ- | **-nVm** | - CₙH₂ₙ-CH=CH-CₘH₂ₘ₊₁ |
| **-N-** | N=C- | **-N** | -C=N |
| **-S-** | S=C=N- | **-S** | -N=C=S |
| **-F-** | F- | **-F** | -F |
| **-CL-** | Cl- | **-CL** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O - | **-OM** | -OCFH₂ |
| **-DO-** | CF₂HO - | **-OD** | -OCF₂H |
| **-TO-** | CF₃O - | **-OT** | -OCF₃ |
| **-A-** | H-C=C- | **-A** | -C≡C-H |
| **-nA-** | CₙH₂ₙ₊₁-C≡C- | **-An** | -C≡C-CₙH₂ₙ₊₁ |
| **-NA-** | N≡C-C≡C- | **-AN** | -C≡C-C≡N |

| **Links nur in Kombination** | | **Rechts nur in Kombination** | |
|---|---|---|---|
| **-...n...-** | -CₙH₂ₙ- | **-...n...** | -CₙH₂ₙ- |
| **-...M...-** | -CFH- | **-...M...** | -CFH- |
| **...D...-** | -CF₂- | **-...D...** | -CF₂- |
| **-...V...-** | -CH=CH- | **-...V...** | -CH=CH- |
| **-...Z...-** | -CO-O- | **-...Z...** | -CO-O- |
| **-...ZI ...-** | -O-CO- | **-...Z...** | -O-CO- |
| **-...K...-** | -CO- | **-...K...** | -CO- |
| **-...W...-** | -CF=CF- | **-...W...** | -CF=CF- |

worin n und m jeweils ganze Zahlen und die drei Punkte "..." Platzhalter für andere Abkürzungen aus dieser Tabelle sind.

Vorzugsweise enthalten die erfindungsgemäßen Mischungen neben den Verbindungen der Formeln I eine oder mehrere Verbindungen der nachfolgend genannten Verbindungen.

Folgende Abkürzungen werden verwendet:
(n, m und I sind unabhängig voneinander jeweils eine ganze Zahl, bevorzugt 1 bis 6 und die Alkylreste sind bevorzugt n-Alkylreste)

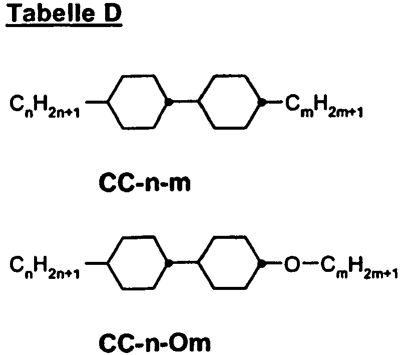

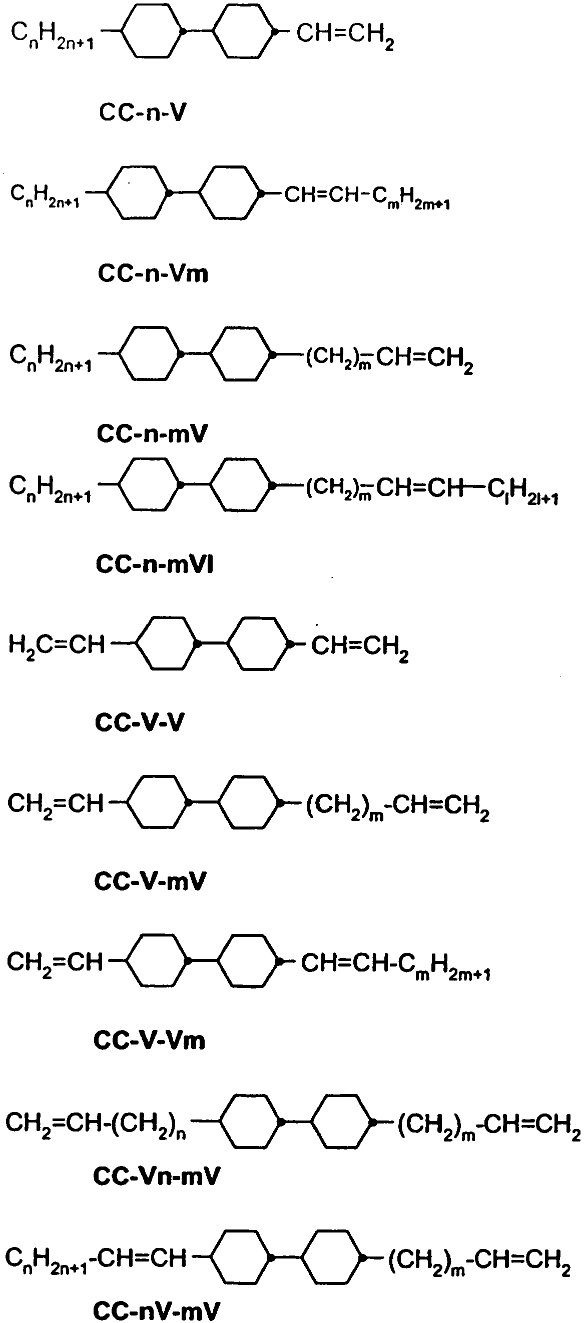

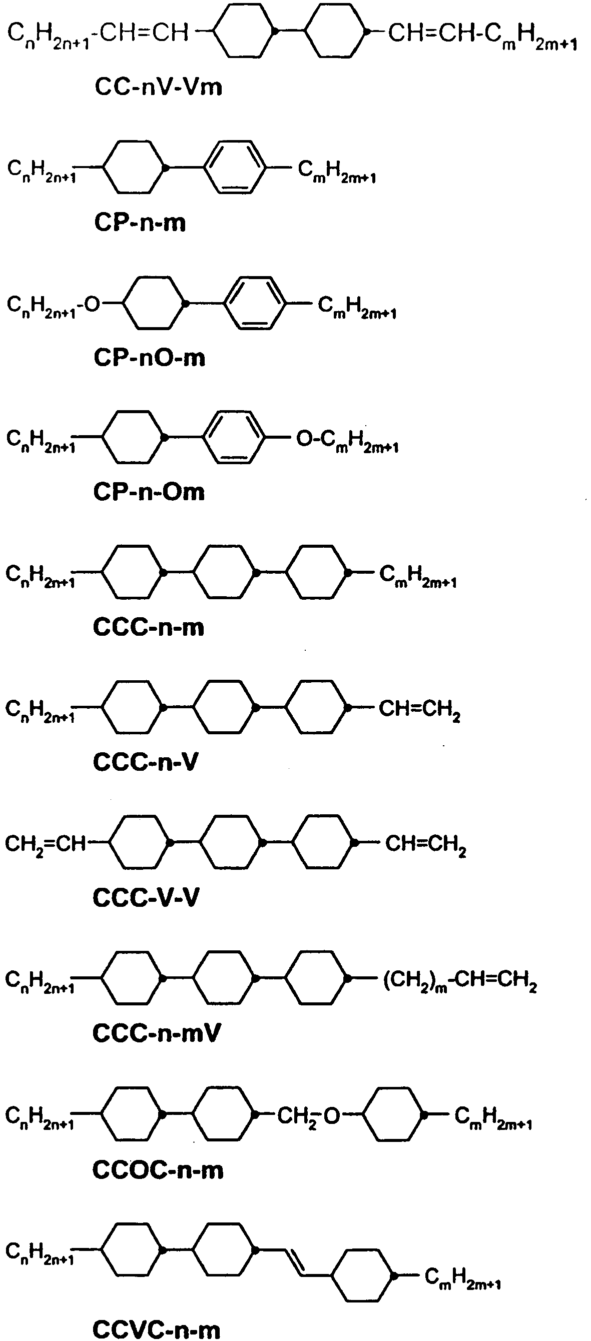

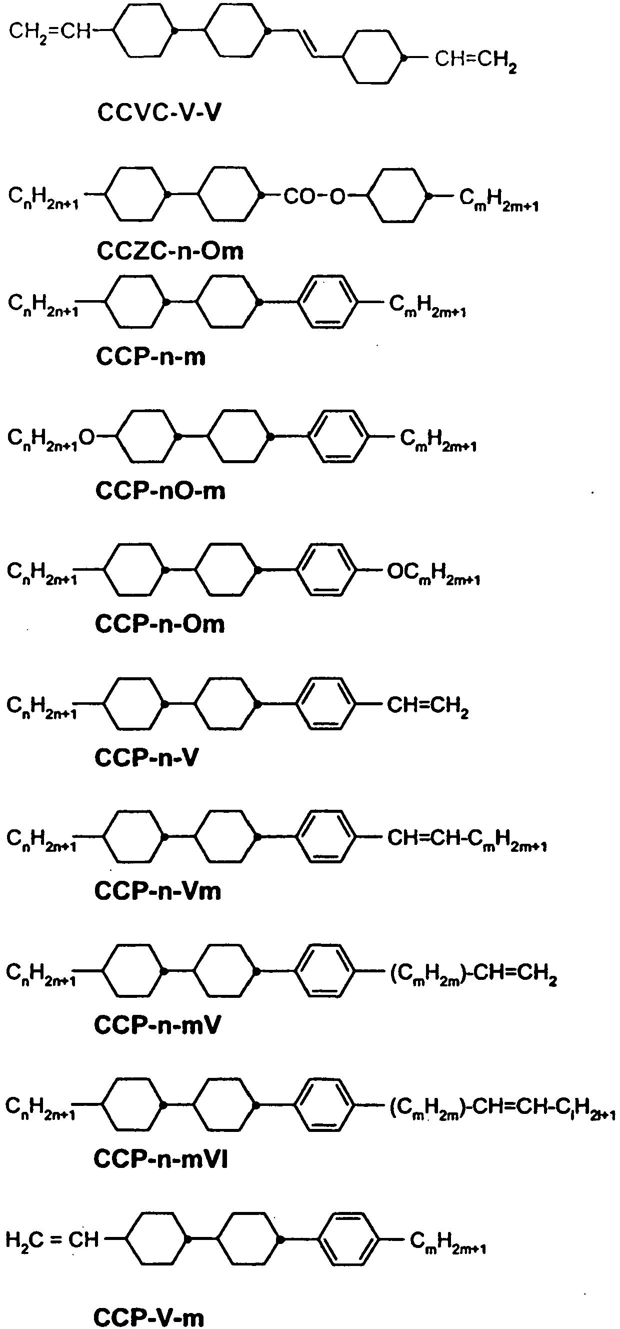

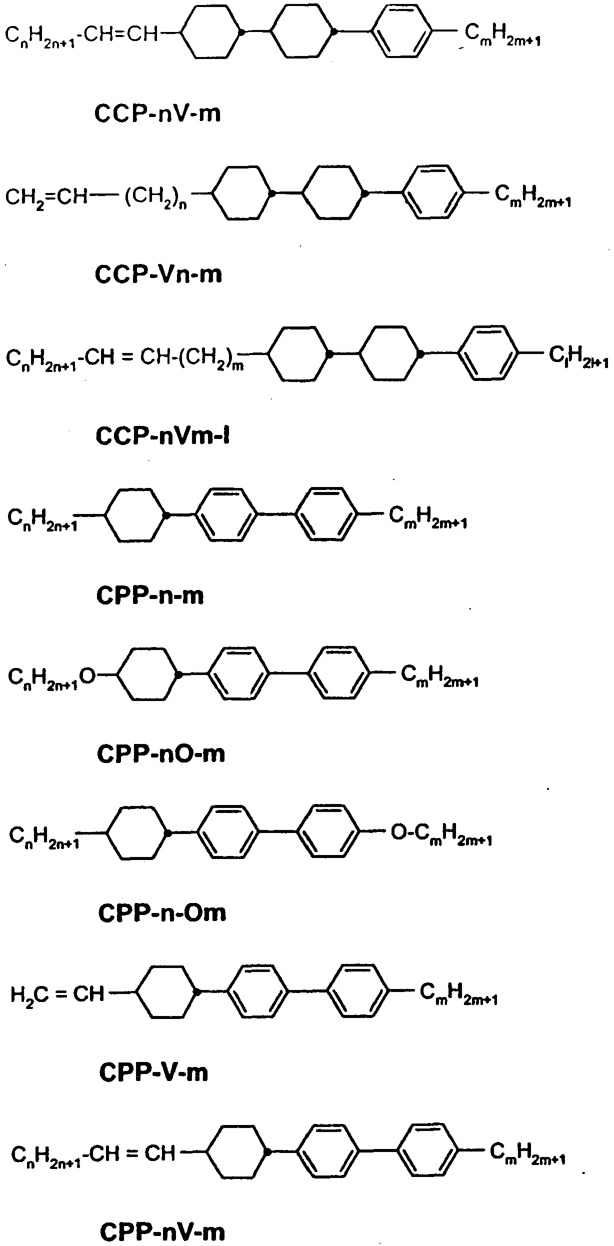

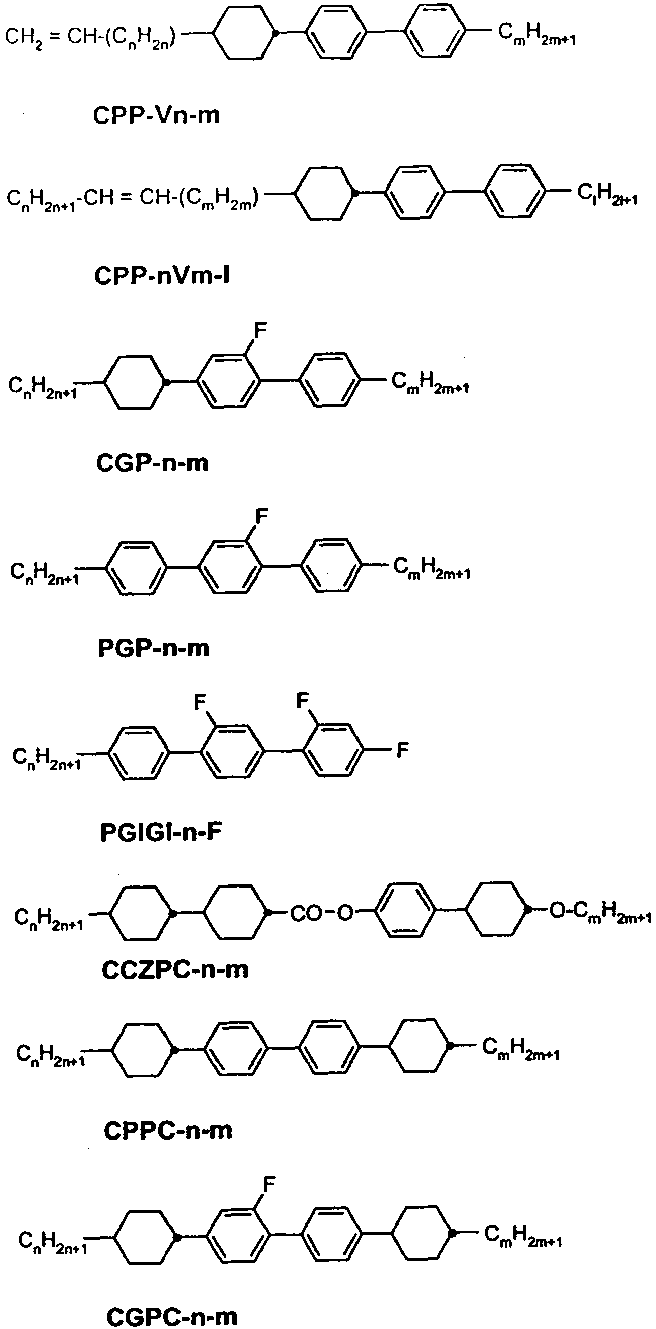

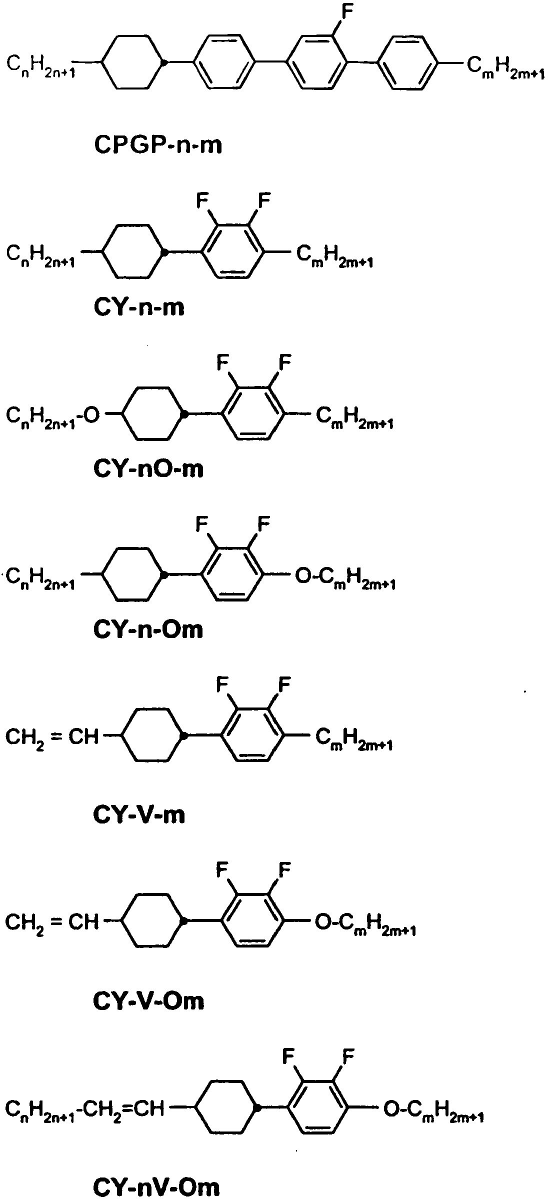

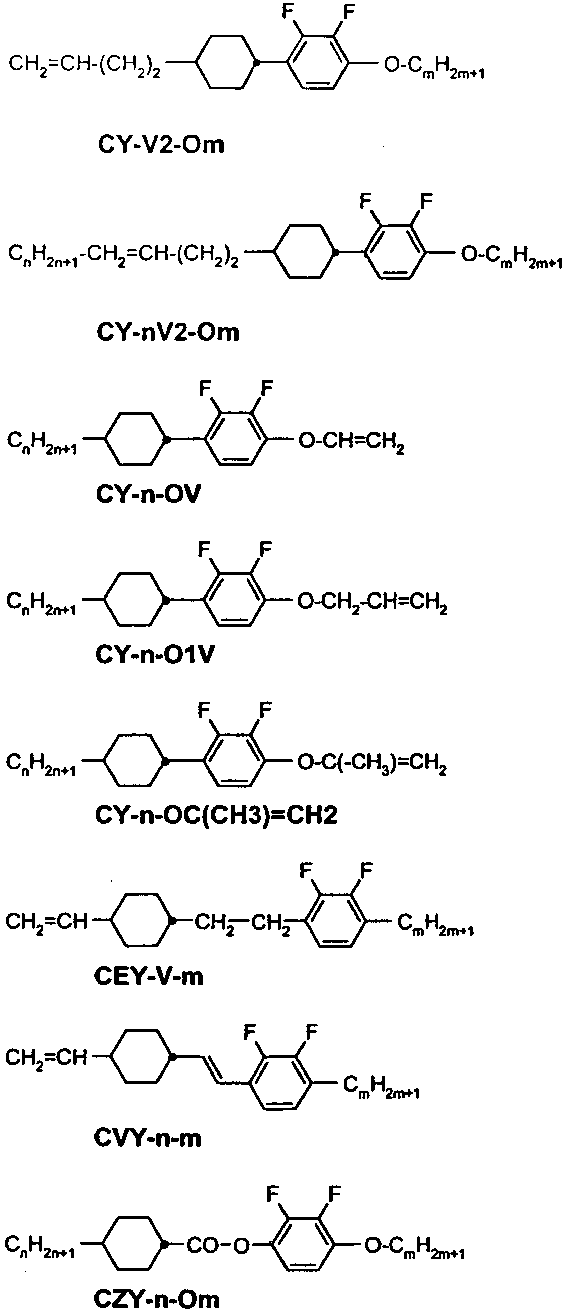

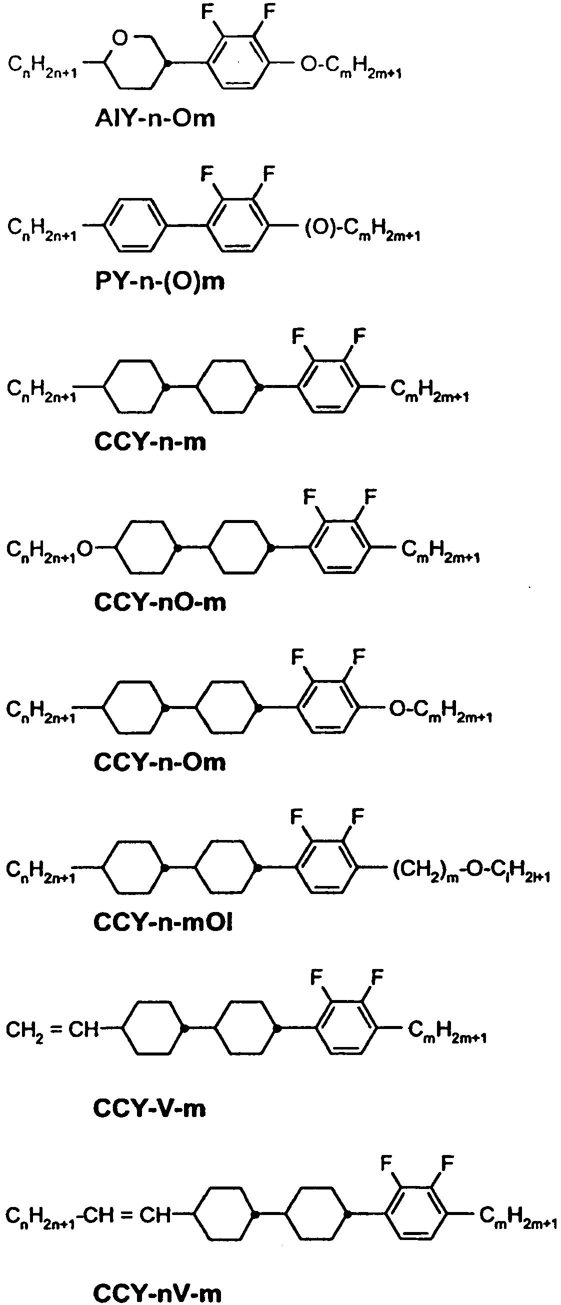

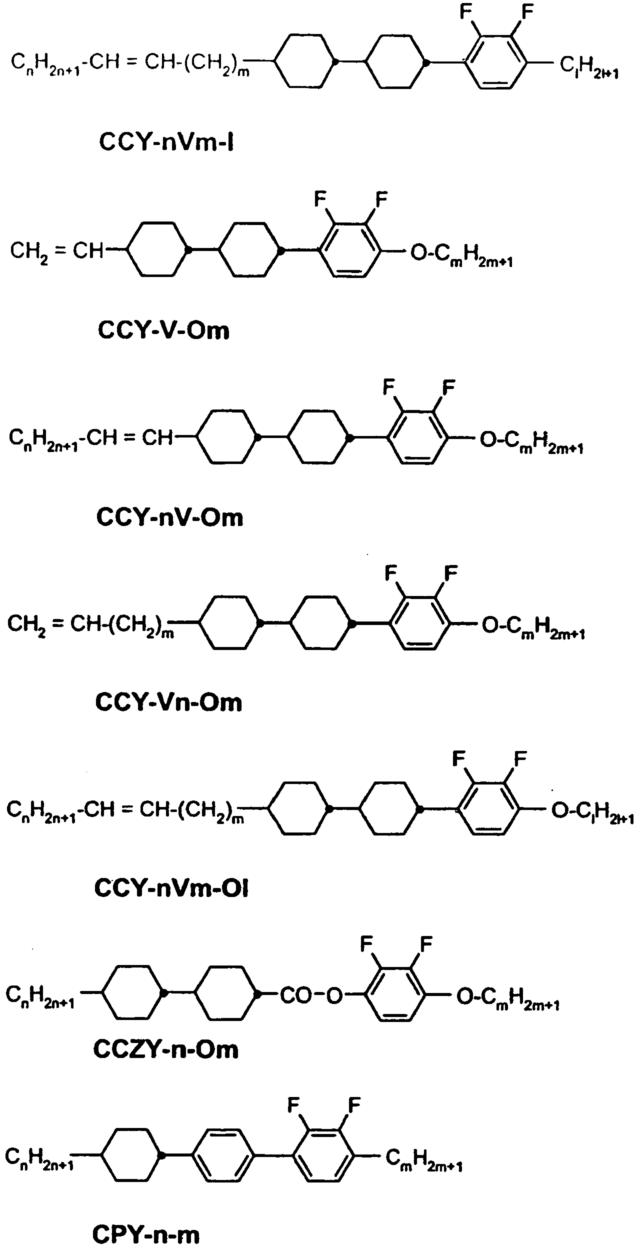

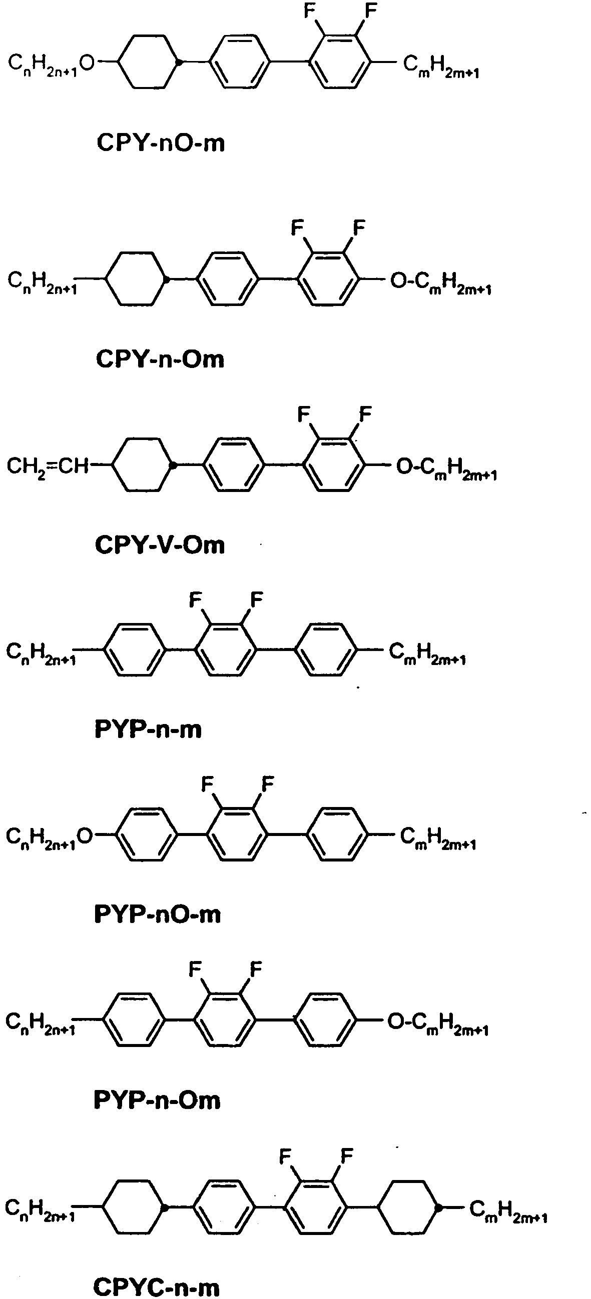

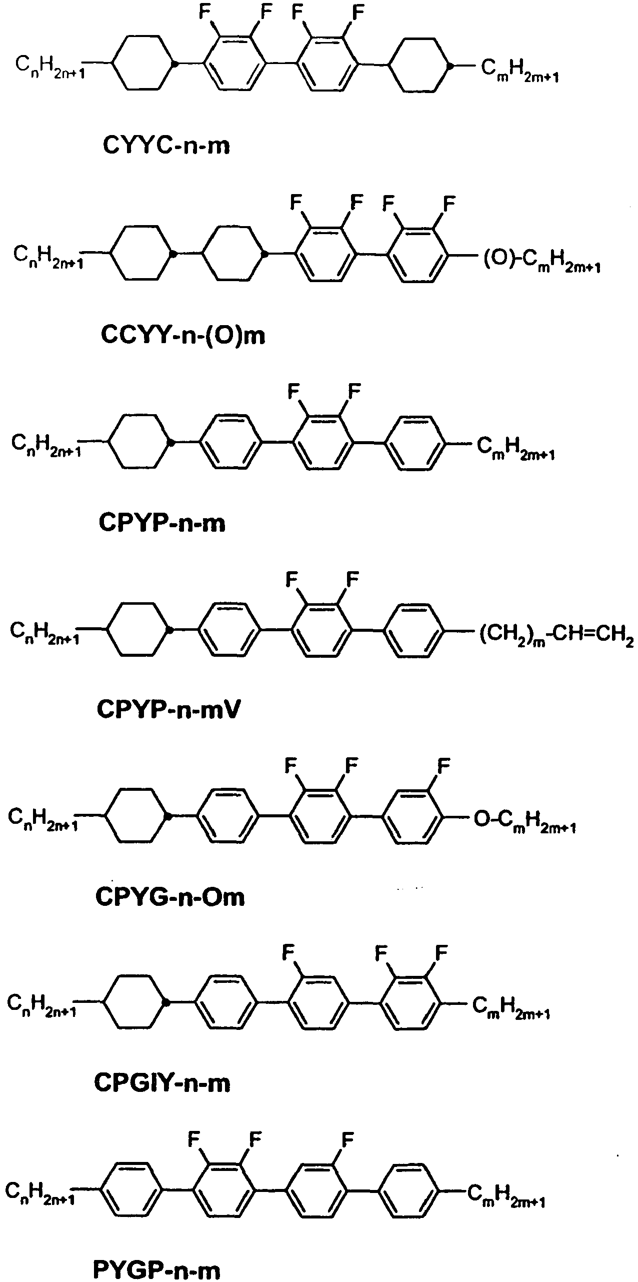

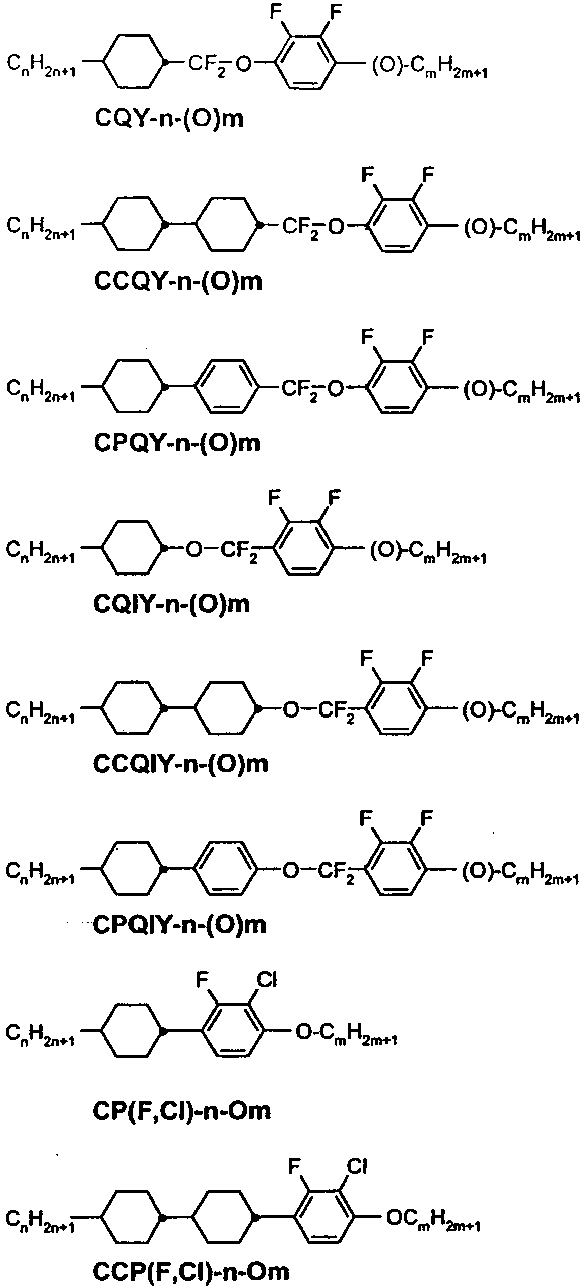

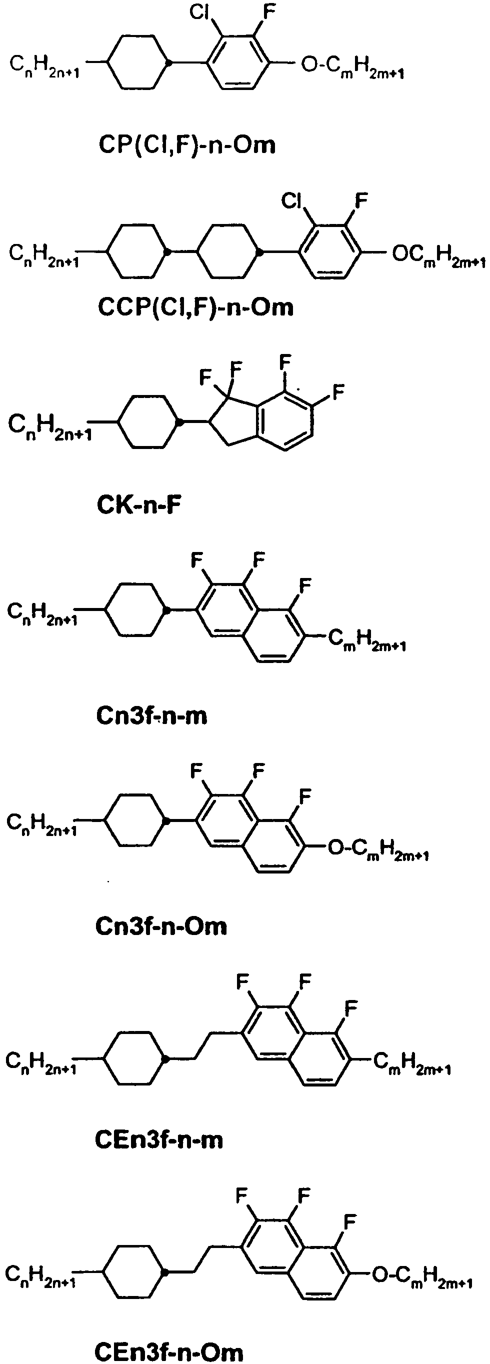

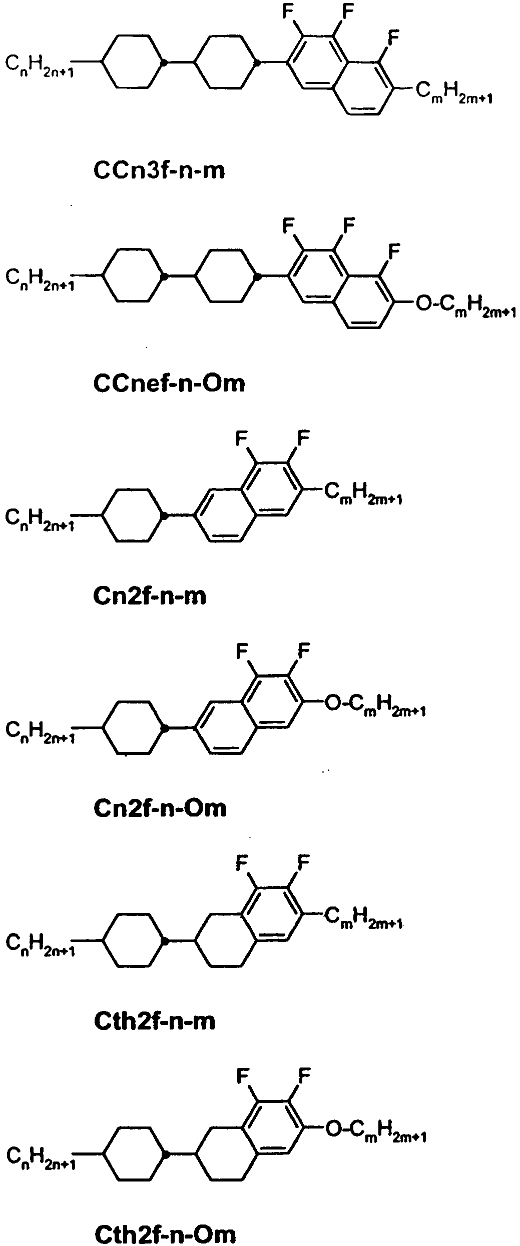

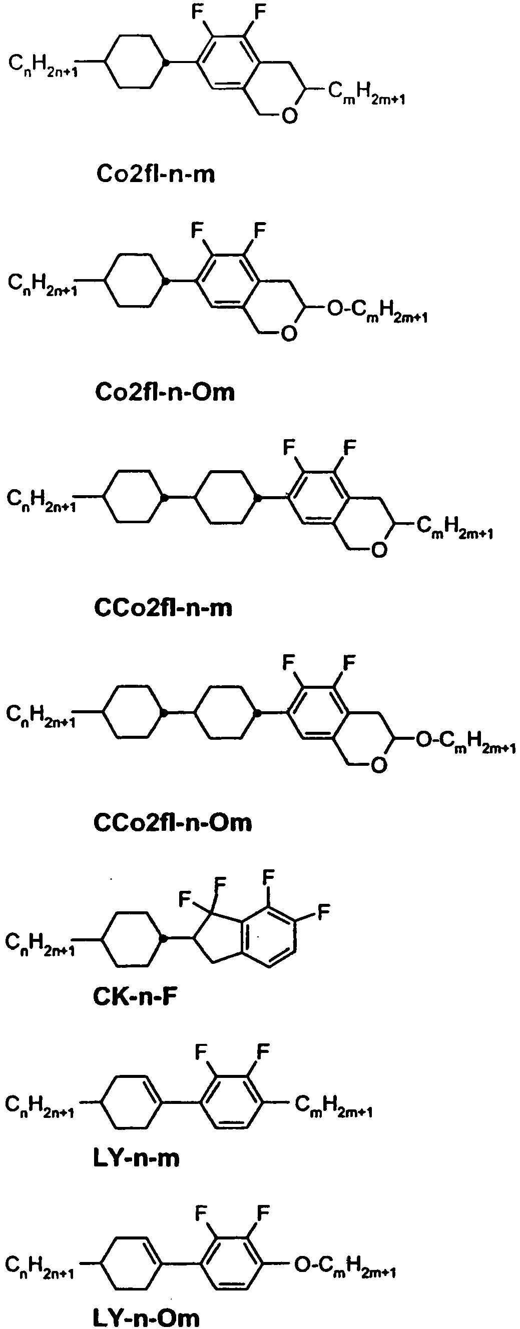

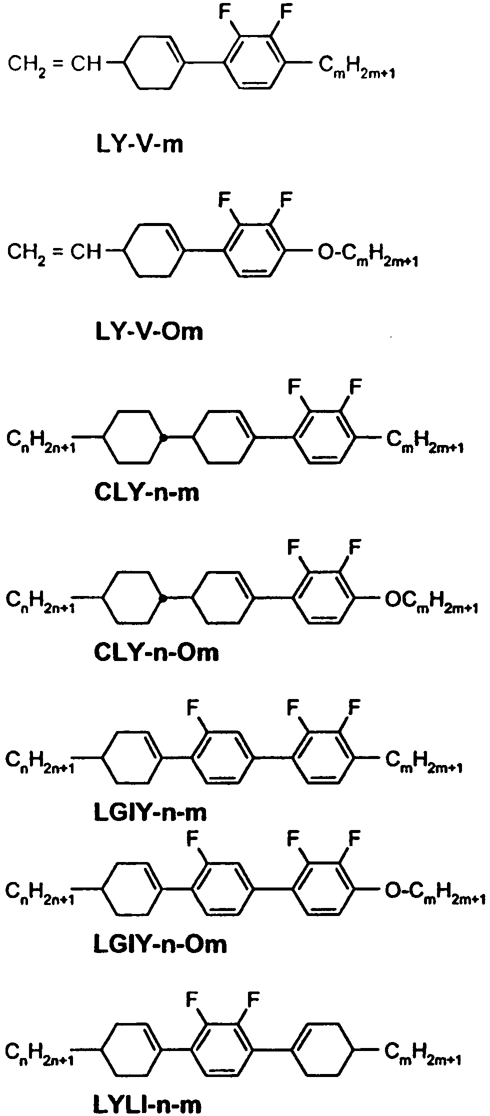

In der Tabelle E werden chirale Dotierstoffe genannt, die bevorzugt in den erfindungsgemäßen Mischungen eingesetzt werden.

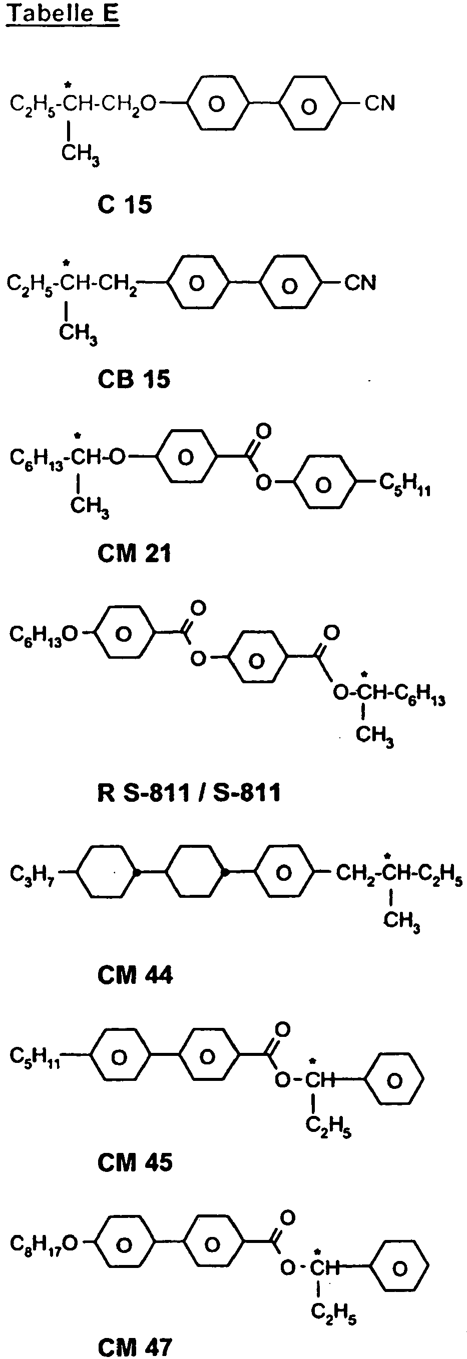

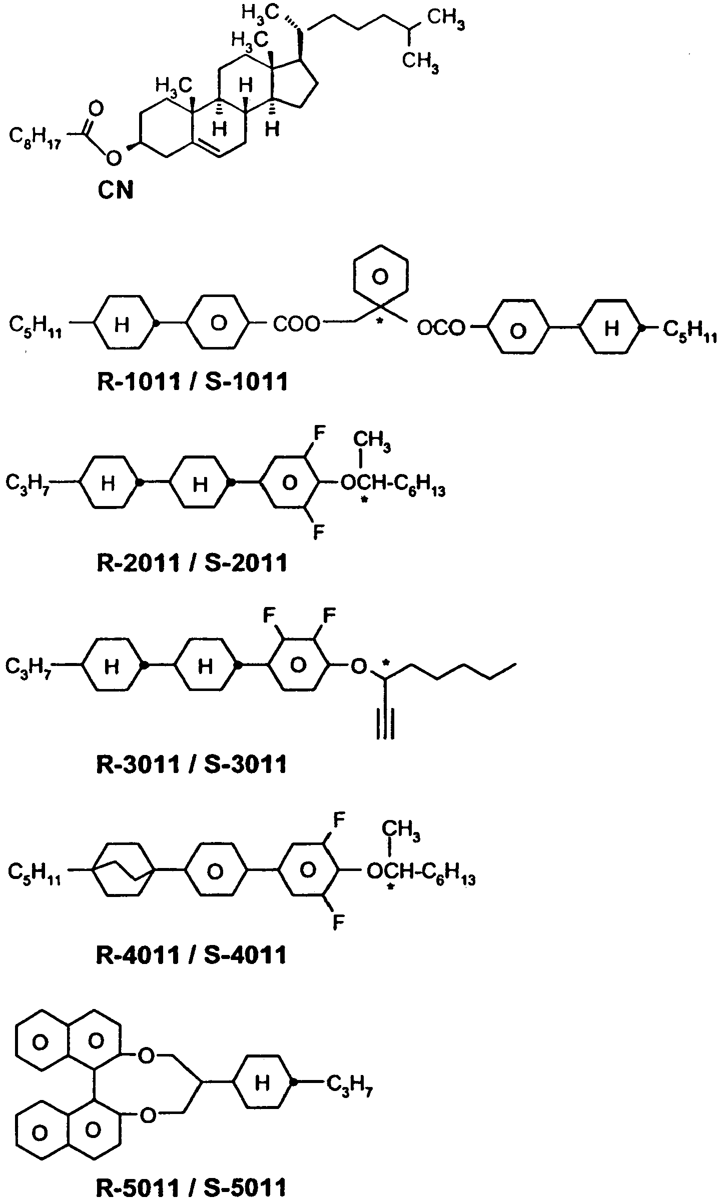

In einer bevorzugten Ausführungsform der vorliegenden Erfindung enthalten die erfindungsgemäßen Medien eine oder mehrere Verbindungen, ausgewählt aus der Gruppe der Verbindungen der Tabelle E.

In der Tabelle F werden Stabilisatoren genannt, die bevorzugt in den erfindungsgemäßen Mischungen eingesetzt werden.

**Tabelle F**

| | |
|---|---|
| (n bedeutet hier eine ganze Zahl von 1 bis 12.) | |
| 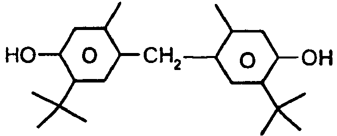 | 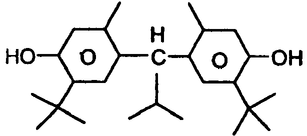 |
| 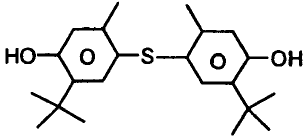 | 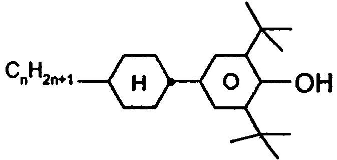 |
| 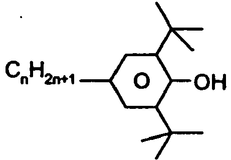 | 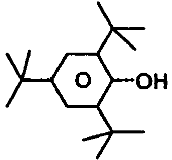 |
| 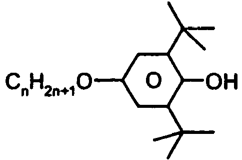 | 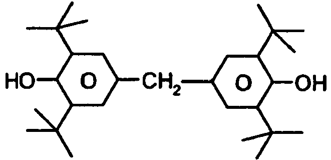 |
| 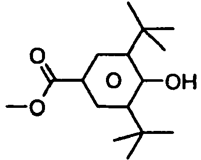 | 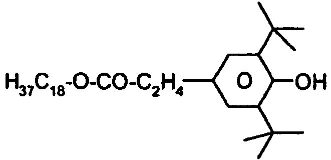 |
| 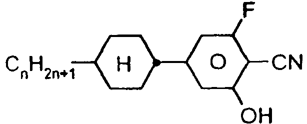 | 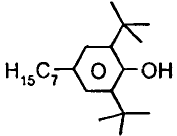 |
| 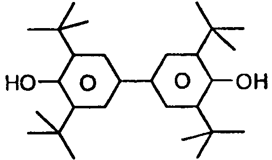 | 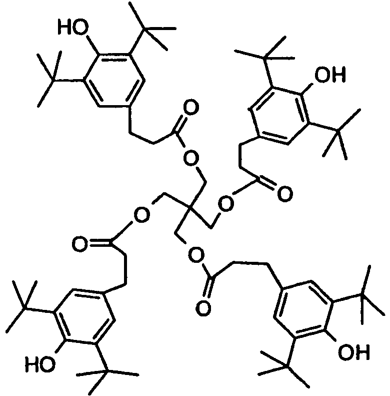 |
| 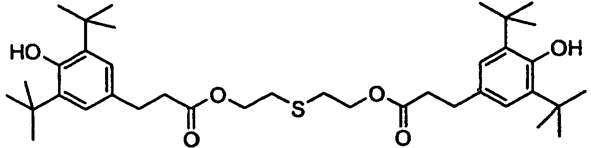 | |
| 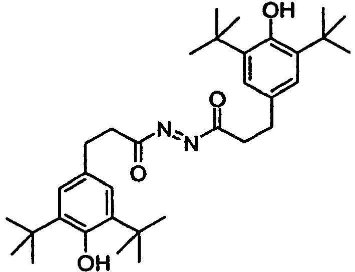 | 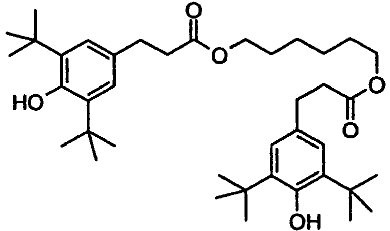 |
| 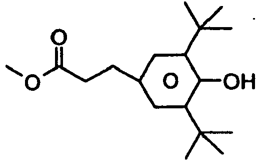 | 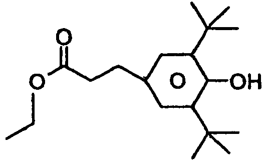 |
| 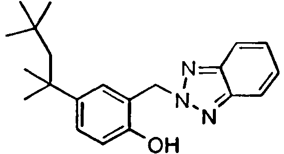 | 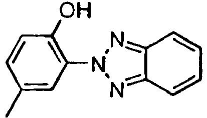 |
| 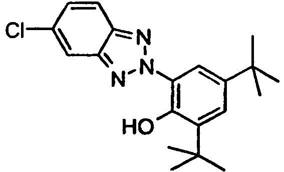 | 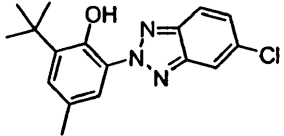 |
| 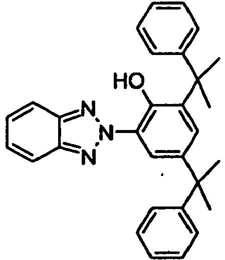 | 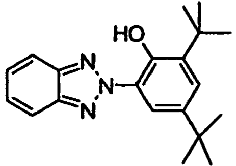 |
| 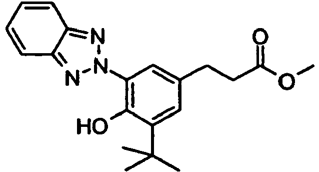 | 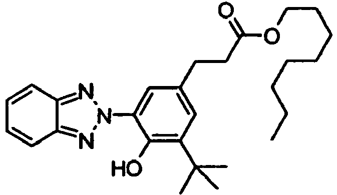 |
| 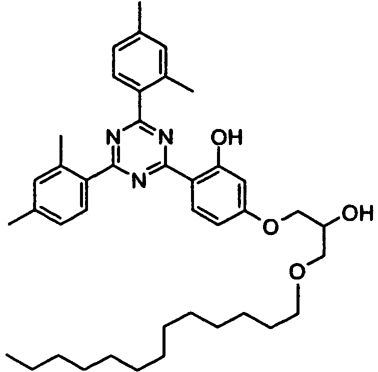 | 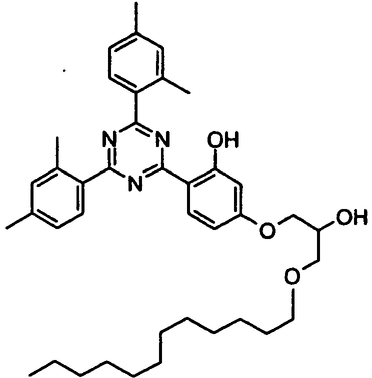 |
| 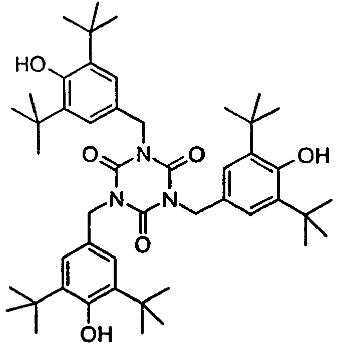 | 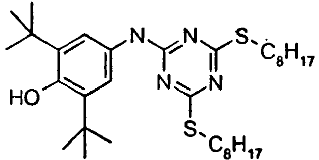 |

In einer bevorzugten Ausführungsform der vorliegenden Erfindung enthalten die erfindungsgemäßen Medien eine oder mehrere Verbindungen, ausgewählt aus der Gruppe der Verbindungen der Tabelle F.

In der Tabelle G werden Stabilisatoren ausgewählt aus der Gruppe der Verbindungen II-A bis II-F genannt, die eine oder mehrere Gruppierungen der Formel II-G enthalten, die bevorzugt in den erfindungsgemäßen Mischungen eingesetzt werden.

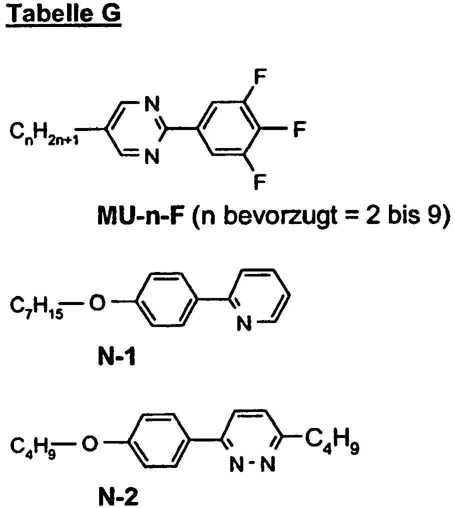

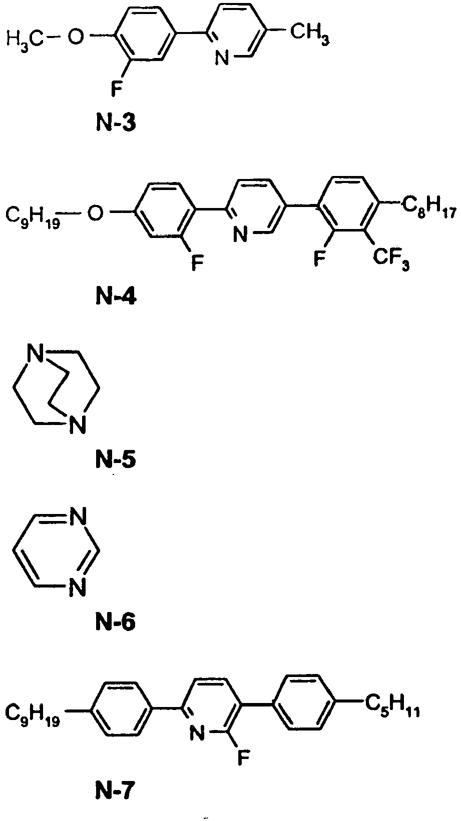

In der Tabelle H werden Stabilisatoren genannt, die eine oder mehrere Gruppierungen der Formel II-G enthalten, die bevorzugt in den erfindungsgemäßen Mischungen eingesetzt werden.

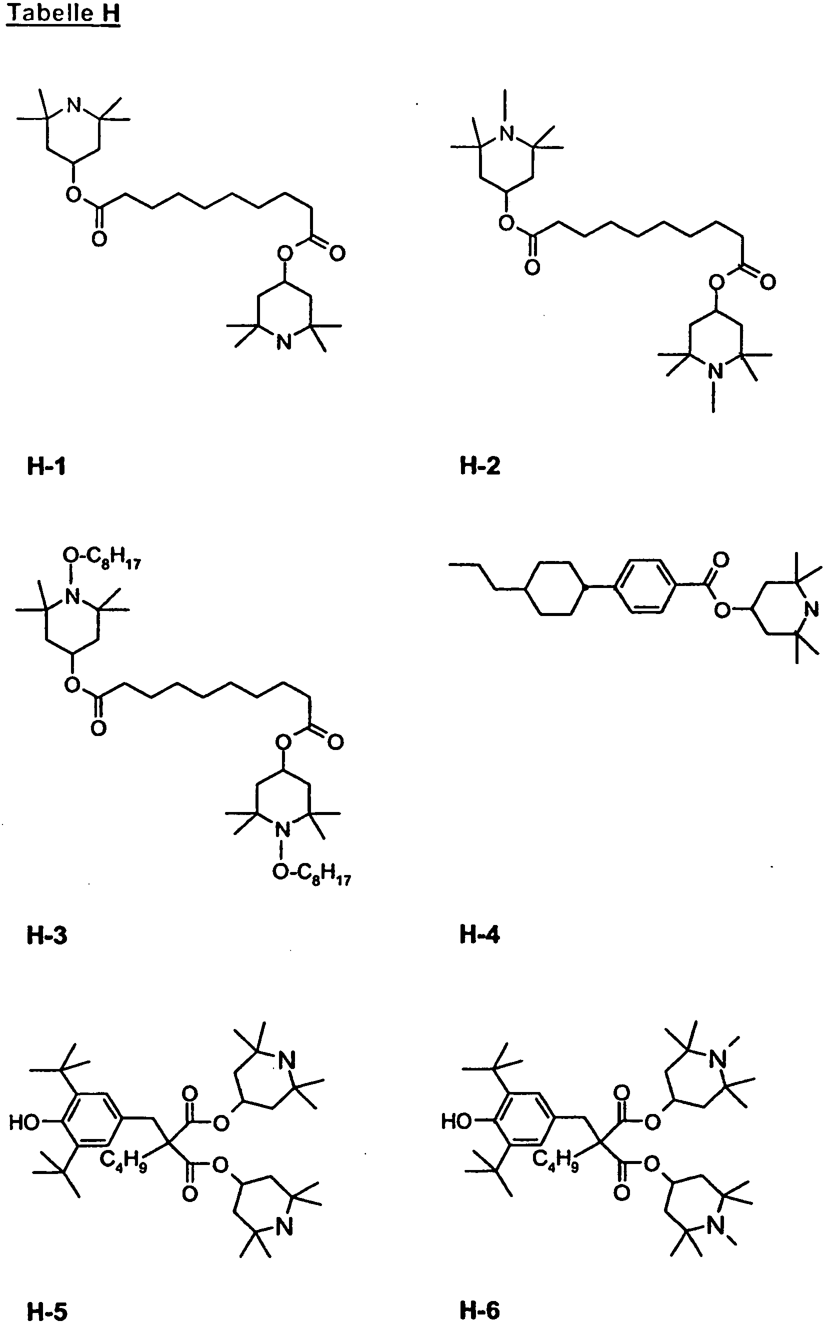

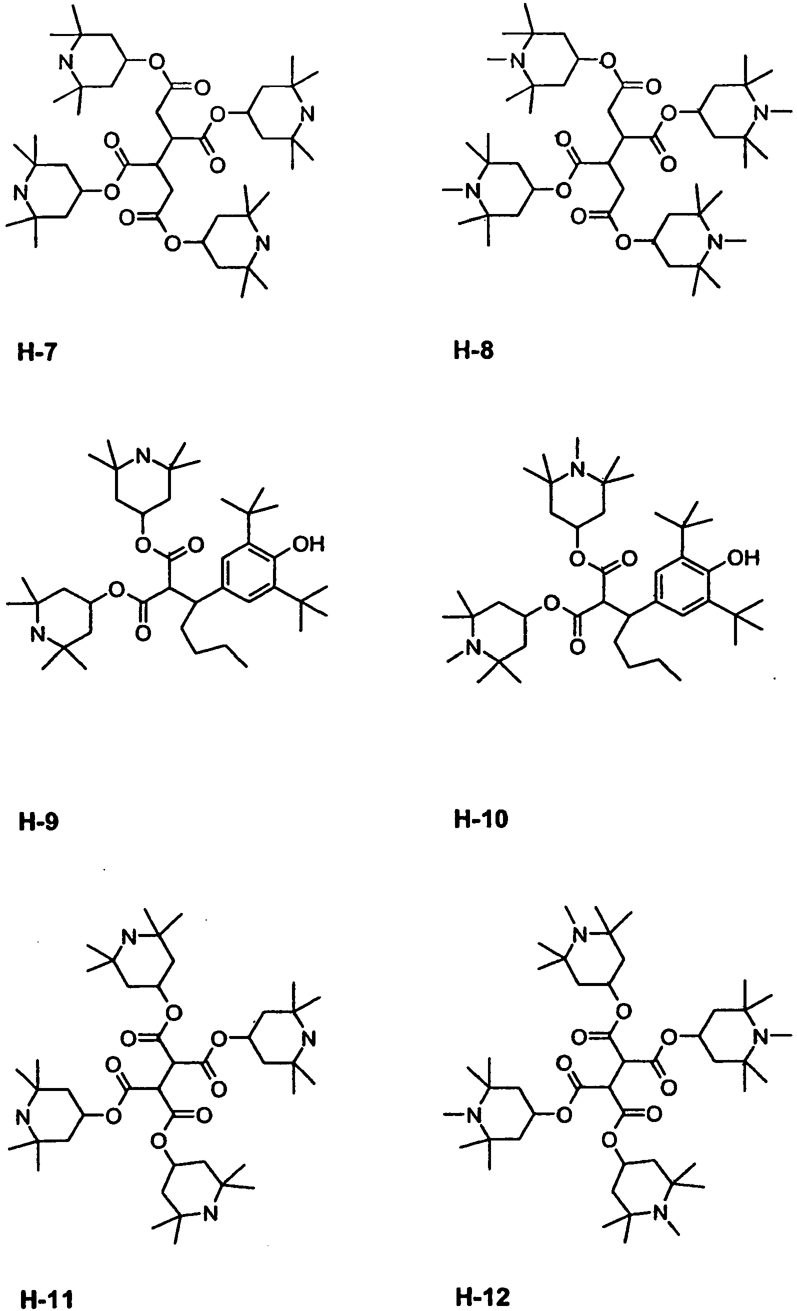

In einer bevorzugten Ausführungsform der vorliegenden Erfindung enthalten die erfindungsgemäßen Medien eine oder mehrere Verbindungen, ausgewählt aus der Gruppe der Verbindungen der Tabelle G.

### Beispiele

Die folgenden Beispiele erläutern die vorliegende Erfindung, ohne sie in irgendeiner Weise zu beschränken.

Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann gut definiert.

Es werden Flüssigkristallmischungen mit der Zusammensetzung und den Eigenschaften wie in den folgenden Tabellen angegeben hergestellt und untersucht.

### Beispiel 1:

### Mischung A-0

| Zusammensetzung | | | Physikalische Eigenschaften | | | |
|---|---|---|---|---|---|---|
| Verbindung | | Konzentration | T(N, I) | = | 75,5 | °C |

| No. | Abkürzung | /Massen-% | | | | |
|---|---|---|---|---|---|---|
| 1 | CK-3-F | 3,0 | nₑ(20°C, 589 nm) | = | 1,5763 | |
| 2 | CK-4-F | 4,0 | Δn(20°C, 589 nm) | = | 0,0951 | |
| 3 | CK-5-F | 3,0 | | | | |
| 4 | CY-5-O2 | 17,0 | ε_{⊥}(20°C, 1 kHz) | = | 6,6 | |
| 5 | CCY-3-O3 | 5,0 | Δε(20a.C., 1 Khz.) | = | -2,9 | |
| 6 | CPY-2-O2 | 8,0 | | | | |
| 7 | CPY-3-O2 | 8,0 | k₁(20°C) | = | 12,9 | pN |
| 8 | PYP-2-3 | 5,0 | k₃/k₁(20°C) | = | 1,15 | |
| 9 | CC-3-V | 28,0 | | | | |
| 10 | CC-3-V1 | 9,0 | γ₁(20°C) | = | 86 | mPa·s |
| 11 | CCP-V-1 | 10,0 | | | | |
| ∑ | | 100,0 | V₀(20°C) | = | 2,39 | V |

Die Ausgangsmischung A-0, im folgenden auch Wirtsmischung oder kurz Wirt genannt, wird in versiegelten Testzellen wie oben beschrieben bezüglich ihrer Stabilität gegen Temperaturbelastung (vier Stunden lang bei 150°C) und anschließend zusätzlich gegen Bestrahlung mit UV (einem Sun-Test Gerät der Firma Heraeus, Deutschland zwei Stunden lang) untersucht. Dazu wurde jeweils nach erfolgter Belastung die VHR der Zellen nach 5 Minuten im Ofen bei 100°C gemessen. Die Ergebnisse für die Mischung A-0 sind in der folgenden Tabelle zum Vergleich aufgenommen.

Die Reproduzierbarkeit der ,,Voltage Holding Ratio"-Werte bei verschiedenen Meßserien, bei denen die Ergebnisse klein oder sogar sehr klein waren, typischer Weise im Bereich um 30 % oder sogar im Bereich von 10 % bis 20 %, war die Reproduzierbarkeit der Ergebnisse teilweise deutlich schlechter, als die in diesem Bereich ohnehin schon geringe Meßgenauigkeit. Allerdings ist dies' für die vorliegenden Untersuchung nicht besonders kritisch, da innerhalb dergleichen Meßreihe sehr wohl noch Vergleiche möglich sind.

Für die meisten praktische Anwendungen ist jedoch bei diesen niedrigsten Werten von einer unzureichenden Stabilität auszugehen.

Dann wird der Ausgangsmischung jeweils die Verbindung MU-5-F, eine Verbindung der Formel II-A gemäß der Vorliegenden Anmeldung, und die Verbindung H-1, eine Verbindung die eine Gruppe der Formel II-G enthält, zugesetzt. Dabei wird das Konzentrationsverhältnis dieser beiden Verbindungen konstant gehalten, und zwar bei 1,0. Die Konzentration der beiden Einzelverbindungen wird von 250 ppm über 500 ppm auf 1,000 ppm variiert. Die Ergebnisse der resultierenden Mischungen (A-1 bis A-3) sind in der folgenden Tabelle zusammengestellt. Bei jeder Versuchsserie werden für jede Bedingung mindestens vier Testzellen untersucht und die jeweiligen Ergebnisse werden als Mittelwerte der entsprechenden einzelnen Messungen angegeben.

| Exp. Nr. | Mischung Nr. | MU-5-F | H-1 | Farbe | VHR_{100°C} | VHRuv |
|---|---|---|---|---|---|---|
| | | Konz./ppm | | | /% | |
| 1.0a | A-0 | 0 | 0 | gelb | 21 | 12 |
| 1.1 | A-1 | 250 | 250 | farblos | 90,8 | 70,0 |
| 1.2 | A-2 | 500 | 500 | farblos | 90,0 | 66,6 |
| 1.3 | A-3 | 1.000 | 1.000 | farblos | 86,9 | 56,4 |

Als nächstes werden verschieden Proben der Wirtsmischung A-0 jeweils 500 ppm der Verbindung H-1 und zusätzlich 500 ppm einer von mehreren verschieden Verbindungen mit einem stickstoffhaltigen heterozyclischen Ring zugesetzt. Die jeweiligen, bei den einzelnen Mischungen A-2 und A-4 bis A-9 eingesetzten, zuletzt genannten Verbindungen werden in der folgenden Tabelle genannt. In dieser Tabelle sind auch die entsprechenden Ergebnisse zusammengefasst.

| Exp Nr. | Misch. Nr. | Verb. | | H-1 | Farbe | VHR_{100°C} | VHRuv |
|---|---|---|---|---|---|---|---|
| | | Abk. | Konz. /ppm | Konz. /ppm | | /% | |
| Serie 1 | | | | | | | |
| 1.0a | A-0 | MU-5-F | 0 | 0 | gelb | 21 | 12 |
| 1.2 | A-2 | MU-5-F | 500 | 500 | farblos | 90,0 | 66,6 |

| Serie 2 | | | | | | | |
|---|---|---|---|---|---|---|---|
| 1.0b* | A-0* | N-1 | 0 | 0 | gelb | 33 | 10 |
| 1.4 | A-4 | N-1 | 500 | 500 | farblos | 87,0 | 41 |
| 1.5 | A-5 | N-2 | 500 | 500 | farblos | 84,4 | 30 |
| 1.6 | A-6 | N-3 | 500 | 500 | farblos | 90,1 | 40,2 |
| 1.7 | A-7 | N-4 | 500 | 500 | farblos | 86,6 | 31 |
| 1.8 | A-8 | N-5 | 500 | 500 | farblos | 83,1 | 40 |
| 1.9 | A-9 | N-6 | 500 | 500 | farblos | 84,3 | 57,8 |

| | | | | | | | |
|---|---|---|---|---|---|---|---|
| Bemerkung: *) neue Meßreihe. | | | | | | | |

### Beispiel 2:

### Mischung B-0

| Zusammensetzung | | | Physikalische Eigenschaften | | | |
|---|---|---|---|---|---|---|
| Verbindung | | Konzentration | T(N, I) | = | 95,5 | °C |

| No. | Abkürzung | /Massen-% | | | | |
|---|---|---|---|---|---|---|
| 1 | CK-3-F | 4,0 | nₑ(20°C, 589 nm) | = | 1,5820 | |
| 2 | CK-4-F | 5,0 | Δn(20°C, 589 nm) | = | 0,0994 | |
| 3 | CK-5-F | 4,0 | | | | |
| 4 | CY-5-O2 | 3,0 | ε_{⊥}(20°C, 1 kHz) | = | 6,9 | |
| 5 | CCY-3-O2 | 11,0 | ΔεE(20°C, 1 kHz) | = | -3.2 | |
| 6 | CCY-3-O3 | 4,0 | | | | |
| 7 | CCY-4-O2 | 5,0 | k₁(20°C) | = | 15,8 | pN |
| 8 | CPY-2-O2 | 2,0 | k₃k₁(20°C) | = | 1,06 | |
| 9 | CPY-3-O2 | 10,0 | | | | |
| 10 | PYP-2-3 | 8,0 | γ₁(20°C) | = | 124 | mPa·s |
| 11 | CC-3-V1 | 11,0 | | | | |
| 12 | CC-4-V | 19,0 | V₀(20°C) | = | 2,41 | V |
| 13 | CC-3-4 | 2,0 | | | | |
| 14 | CC-3-O1 | 5,0 | | | | |
| 15 | CCP-V-1 | 7,0 | | | | |
| ∑ | | 100,0 | | | | |

Die Wirtsmischung B-0 wird wie in Beispiel 1 beschrieben untersucht und wie die Mischung A-2 mit jeweils 500 ppm der beiden entsprechenden Stabilisatoren versetzt. Die Ergebnisse sind in der folgenden Tabelle zusammen gefasst.

| Exp. | Wirt B-0 | MU-5-F | H-1 | Farbe | VHR_{100°C} | VHRuv |
|---|---|---|---|---|---|---|
| Nr. | Mischung | Konz./ppm | | | / % | |
| 2.0 | B-0 | 0 | 0 | gelb | 25 | 10 |
| 2.1 | B-1 | 500 | 500 | farblos | 65,5 | 45 |

### Beispiel 3:

### Mischung C-0

| Zusammensetzung | | | Physikalische Eigenschaften | | | |
|---|---|---|---|---|---|---|
| Verbindung | | Konzentration | T(N, I) | = | 80,5 | °C |

| No. | Abkürzung | /Massen-% | | | | |
|---|---|---|---|---|---|---|
| 1 | CK-3-F | 4,0 | nₑ(20°C, 589 nm) | = | 1,5750 | |
| 2 | CK-4-F | 4,0 | Δn(20°C, 589 nm) | = | 0,0932 | |
| 3 | CK-5-F | 4,0 | | | | |
| 4 | CY-3-O4 | 13,5 | ε_{⊥}(20°C, 1 kHz) | = | 7,8 | |
| 5 | CY-5-O4 | 10,0 | Δε(20°C, 1 kHz) | = | -3.8 | |
| 6 | CCY-2-1 | 3,0 | | | | |
| 7 | CCY-3-O2 | 4,0 | k₁(20°C) | = | 12,8 | pN |
| 8 | CCY-3-O3 | 4,5 | k₃/k₁(20°C) | = | 1,07 | |
| 9 | CPY-2-O2 | 10,0 | | | | |
| 10 | CPY-3-O2 | 6,0 | γ₁(20°C) | = | 135 | mPa·s |
| 11 | CC-3-V1 | 8,0 | | | | |
| 12 | CC-4-V | 13,0 | V₀(20°C) | = | 2,04 | V |
| 13 | CCP-V-1 | 12,0 | | | | |
| 14 | CCP-V2-1 | 4.0 | | | | |
| ∑ | | 100,0 | | | | |

Die Wirtsmischung C-0 wird wie in Beispiel 1 beschrieben untersucht und wie die Mischung A-2 mit jeweils 500 ppm der beiden entsprechenden Stabilisatoren versetzt. Die Ergebnisse sind in der folgenden Tabelle zusammen gefasst.

| Exp. Nr. | Mischung Nr. | MU-5-F | H-1 | Farbe | VHR_{100°C} | VHRuv |
|---|---|---|---|---|---|---|
| | | Konz./ppm | | | / % | |
| 3.0 | C-0 | 0 | 0 | gelb | 20 | 13 |
| 3.1 | C-1 | 500 | 500 | farblos | 82,1 | 63,1 |

### Beispiel 4:

### Mischung D-0

| Zusammensetzung | | | Physikalische Eigenschaften | | | |
|---|---|---|---|---|---|---|
| Verbindung | | Konzentration | T(N, I) | = | 80,0 | °C |

| No. | Abkürzung | /Massen-% | | | | |
|---|---|---|---|---|---|---|
| 1 | CK-3-F | 4,0 | nₑ(20°C, 589 nm) | = | 1,5725 | |
| 2 | CK-4-F | 4,0 | Δn(20°C, 589nm) | = | 0,0940 | |
| 3 | CK-5-F | 4,0 | | | | |
| 4 | CY-3-O4 | 19,0 | ε⊥(20°C, 1 kHz) | = | 9,3 | |
| 5 | CY-5-O4 | 11,0 | Δ_{ε}(20°C, 1 kHz) | = | -5.1 | |
| 6 | CCY-3-1 | 7,0 | | | | |
| 7 | CCY-3-O2 | 10,0 | k₁(25°C) | = | 13,1 | pN |
| 8 | CCY-3-O3 | 7,0 | k₃k₁(25°C) | = | 1,11 | |
| 9 | CPY-2-O2 | 10,0 | | | | |
| 10 | CC-3-V1 | 10,0 | γ₁(20°C) | = | 182 | mPa·s |
| 11 | CC-4-V | 3,0 | | | | |
| 12 | CCP-V-1 | 11,0 | V₀(25°C) | = | 1,84 | V |
| ∑ | | 100,0 | | | | |

Die Wirtsmischung C-0 wird wie in Beispiel 1 beschrieben untersucht und wie die Mischung A-2 mit jeweils 500 ppm der beiden entsprechenden Stabilisatoren versetzt. Die Ergebnisse sind in der folgenden Tabelle zusammen gefasst.

Die Wirtsmischung D-0 wird wie in Beispiel 1 beschrieben untersucht und zunächst, zum Vergleich mit 500 ppm der Verbindung H-1 versetzt (Mischung D-1) und dann wie bei der Mischung A-2 des Beispiels 1 mit jeweils 500 ppm der beiden Substanzen MU-5-F und H-1 versetzt. Der letzte Versuch wird einmal wiederholt. Die Ergebnisse sind in der folgenden Tabelle zusammen gefasst.

| Exp. Nr. | Mischung Nr. | MU-5-F | H-1 | Farbe | VHR_{100°C} | VHRuv |
|---|---|---|---|---|---|---|
| | | Konz./ppm | | | /% | |
| Serie 1 | | | | | | |
| 4.0a | D-0 | 0 | 0 | gelb | 17 | 15 |
| 4.1 | D-1 | 0 | 500 | gelb | 48 | 33 |
| 4.2a | D-2 | 500 | 500 | farblos | 90,8 | 70,0 |

| Serie 2 | | | | | | |
|---|---|---|---|---|---|---|
| 4.0b* | D-0* | 0 | 0 | gelb | 18 | 15 |
| 4.2b* | D-2* | 500 | 500 | farblos | 80,9 | 62 |

| | | | | | | |
|---|---|---|---|---|---|---|
| Bemerkung: *) neue Meßreihe. | | | | | | |

Anschließend wird, wie in den Beispielen 1.4 bis 1.9 beschrieben, verschiedenen Proben je einer von verschiedenen stickstoffhaltigen Stabilisatoren zugegeben. Dabei wird die Wirtsmischung D-0 wird wie in Beispiel 1 beschrieben untersucht und diesmal jedoch mit verschiedenen HALS-Verbindungen als Stabilisatoren versetzt. Dabei werden zunächst, wie bei Beispiel 4.1, zum Vergleich jeweils 500 ppm jeweils einer der beiden Verbindungen H-3 bzw. H-6 verwendet (Mischungen D-3 bzw. D-5) und dann analog zur Mischung A-2 des Beispiels 1 jeweils gleichzeitig mit 500 ppm einer der beiden genannten Verbindungen (H-3 bzw. H-6) und 500 ppm der Verbindung MU-5-F verwendet (Mischungen D-4 bzw. D-6. Die Ergebnisse sind in der folgenden Tabelle zusammen gefasst. Die obigen Ergebnisse der Mischungen 4.1 und 4.2 mit der HALS-Verbindung H-1 sind zum Vergleich noch einmal aufgeführt. Die Ergebnisse sind in der folgenden Tabelle zusammen gefasst.

| Exp. Nr. | Mischung Nr. | MU-5-F | Verbindung | | Farbe | VHR_{100°C} | VHRuv |
|---|---|---|---|---|---|---|---|
| | | Cnc. /ppm | Abk. | Cnc. /ppm | | /% | /% |
| Serie 1 | | | | | | | |
| 4.0a | D-0 | 0 | H-1 | 0 | gelb | 17 | 15 |
| 4.1 | D-1 | 0 | H-1 | 500 | farblos | 48 | 33 |
| 4.2a | D-2 | 500 | H-1 | 500 | farblos | 90,8 | 70,0 |

| Serie 2 | | | | | | | |
|---|---|---|---|---|---|---|---|
| 4.0b* | D-0 | 0 | H-1 | 0 | gelb | 18 | 15 |
| 4.2b* | D-2 | 500 | H-1 | 500 | farblos | 80,9 | 61,7 |
| 4.3^{§} | D-3 | 0 | H-3 | 500 | n.b. | n.b. | n.b. |
| 4.4 | D-4 | 500 | H-3 | 500 | farblos | 34 | 30 |
| 4.5^{§} | D-5 | 0 | H-6 | 500 | gelb | 16 | 16 |
| 4.6 | D-6 | 500 | H-6 | 500 | farblos | 51 | 36 |

| | | | | | | | |
|---|---|---|---|---|---|---|---|
| Bemerkungen: *) neue Meßreihe, ^{§)} Vergleich und n.b.: nicht bestimmt | | | | | | | |

## Patentansprüche

1. Flüssigkristallines Medium mit einer nematischen Phase und einer negativen dielektrischen Anisotropie, welches
a) eine oder mehrere Verbindungen der Formel I 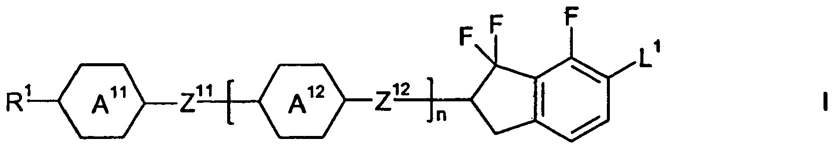 worin
R¹ H, einen unsubstituierten Alkyl- oder Alkenylrest mit bis zu 15 C-Atomen, wobei in diesen Resten auch eine oder mehrere CH₂-Gruppen durch -O-, -S-, 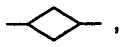 -C≡C-, -CF₂-O-, -O-CF₂-, -CO-O- oder -O-CO- so ersetzt sein können, dass O-Atome nicht direkt miteinander verknüpft sind, wobei in allen Gruppen eine oder mehrere H-Atome durch Halogenatome ersetzt sein können,
L¹ H oder F, 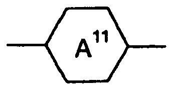 und 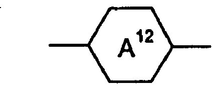 unabhängig voneinander 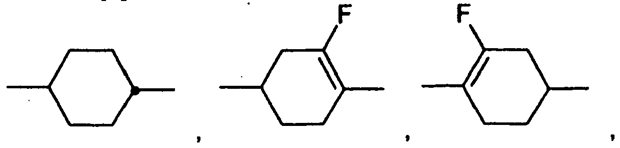 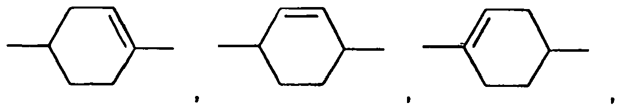 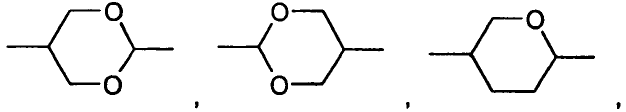 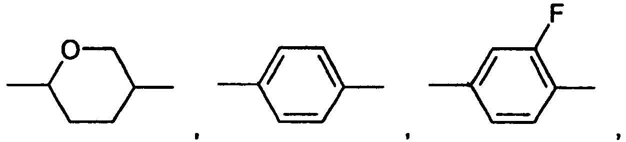 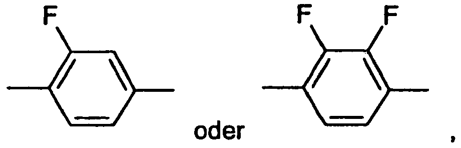
Z¹¹ und Z¹² jeweils unabhängig voneinander -CH₂-CH₂-, -CH₂-CF₂-, -CF₂-CH₂-, -CF₂-CF₂-, -CH=CH-, -CF=CH-, -CH=CF-, -CF=CF-, -C≡C-, -CH₂-O-, -O-CH₂-, -O-, -CH₂-, -CO-O-, -O-CO-, -CF₂-O-, -O-CF₂- oder eine Einfachbindung und
n 0 oder 1
bedeuten,
b) 5,0·10⁻³ Gew.-% bis 1,0 Gew.-% einer oder mehrerer Verbindungen ausgewählt aus der Gruppe der Verbindungen der Formeln II-A bis II-F 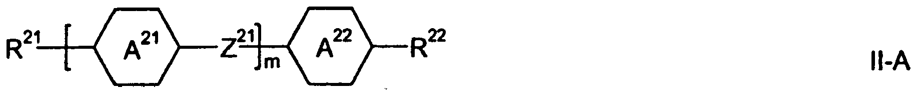 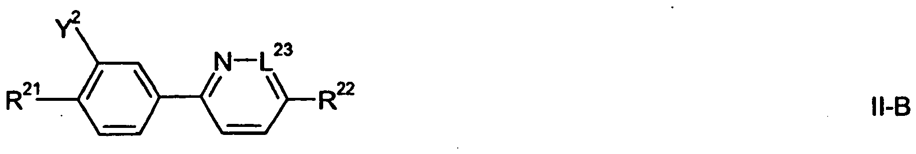 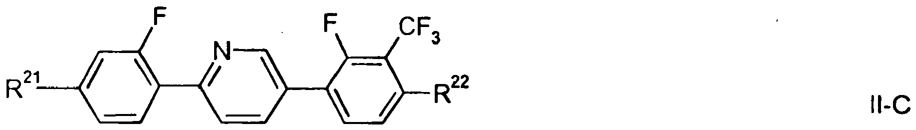 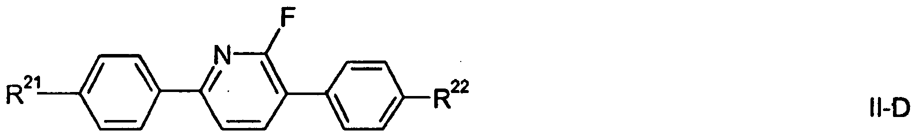 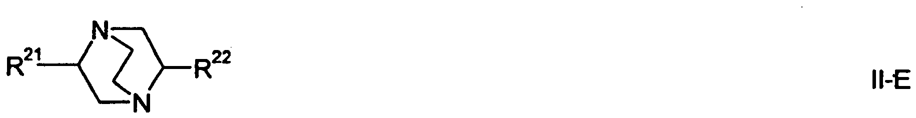 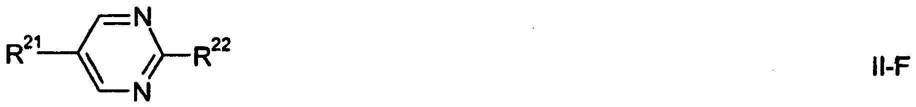 worin
R²¹ und R²² jeweils unabhängig voneinander H, einen unsubstituierten Alkyl- oder Alkenylrest mit bis zu 15 C-Atomen, wobei in diesen Resten auch eine oder mehrere CH₂-Gruppen durch -O-, -S-, 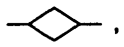 -C≡C-, -CF₂-O-, -O-CF₂-, -CO-O- oder -O-CO- so ersetzt sein können, dass O-Atome nicht direkt miteinander verknüpft sind und R²² alternativ auch X², und in Formeln II-B und II-C R²¹ bevorzugt Alkoxy und R²² bevorzugt H oder Alkyl,
X² F, Cl, CN oder -OCF₃,
einer der vorhandenen Ringe 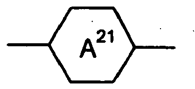 und 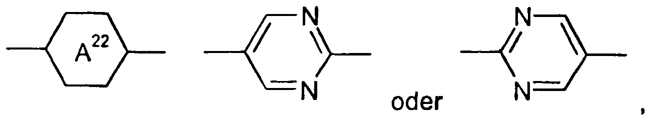 und der andere, soweit vorhanden, 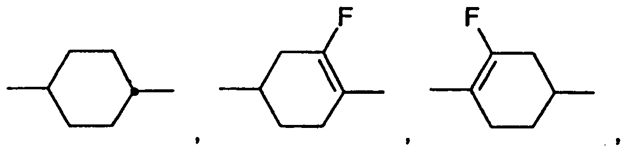 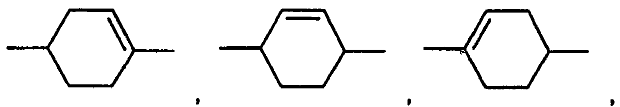 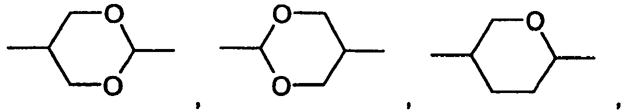 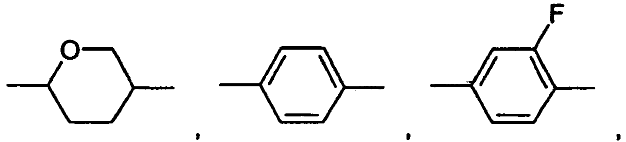 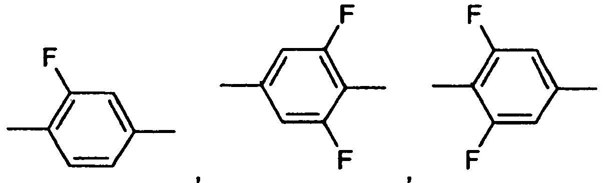 oder 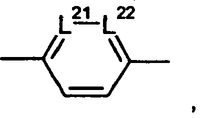 einer von
L²¹ und L²² =C(-F)- oder =N- und der andere =C(-F)-,
L²³ =C(-H)- oder =N-,
Y² H oder F,
Z²¹ -CH₂-CH₂-, -CH₂-CF₂-, -CF₂-CH₂-, -CF₂-CF₂-, -CH=CH-, -CF=CH-, -CH=CF-, -CF=CF-, -C≡C-, -CH₂-O-, -O-CH₂-, -O-, -CH₂-, -CO-O-, -O-CO-, -CF₂-O-, -O-CF₂- oder eine Einfachbindung und
m 0 oder 1
bedeuten, und
c) 5,0· 10⁻⁴ Gew.-% bis 1,0 Gew.-% einer oder mehrerer Verbindungen, die eine, zwei oder mehr Gruppen der Formel II-G 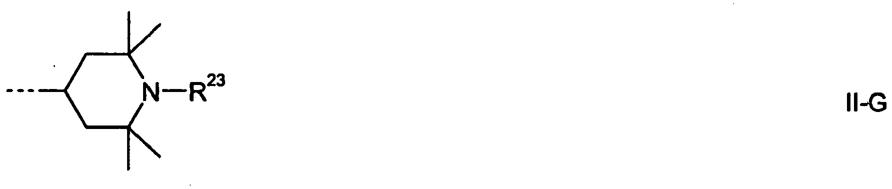 worin
R²³ H oder einen unsubstituierten Alkylrest mit bis zu 15 C-Atomen, wobei in diesen Resten auch eine oder mehrere CH₂-Gruppen durch -O-, -S-, 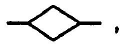 -C≡C-, -CF₂-O-, -O-CF₂-, -CO-O- oder -O-CO- so ersetzt sein können, dass O-Atome nicht direkt miteinander und N-Atome weder direkt mit O- noch mit S-Atomen verknüpft sind, bedeutet, enthalten,
enthält.

2. Medium nach Anspruch 1, **dadurch gekennzeichnet, dass** es eine oder mehrere Verbindungen der Formel I-1 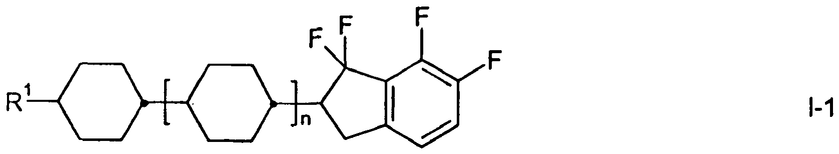 worin die Parameter die jeweiligen in Anspruch 1 angegebenen Bedeutungen besitzen, enthält.

3. Medium nach Anspruch 1 oder 2, **dadurch gekennzeichnet**, es eine oder mehrere Verbindungen ausgewählt aus der Gruppe der Verbindungen der Formeln II-A-1 und II-A-2 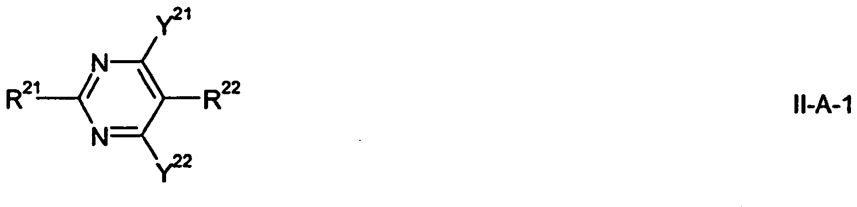 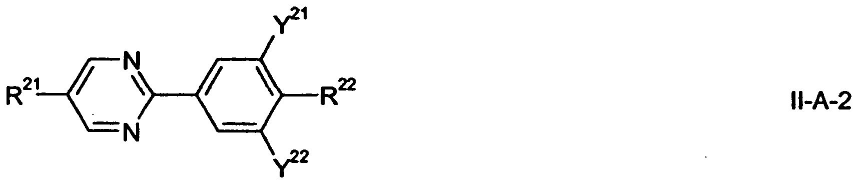 worin
Y²¹ und Y²² unabhängig voneinander H oder F bedeuten und
die übrigen Parameter die jeweiligen in Anspruch 1 angegebenen Bedeutungen besitzen, enthält.

4. Medium nach einem oder mehreren der der Ansprüche 1 bis 3, **dadurch gekennzeichnet**, es eine oder mehrere Verbindungen ausgewählt aus der Gruppe der Verbindungen der Formeln II-G-1 bis II-G-7 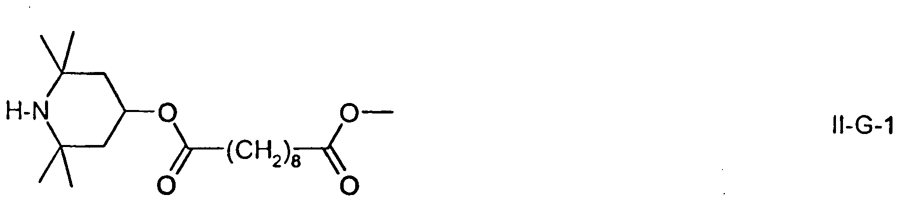 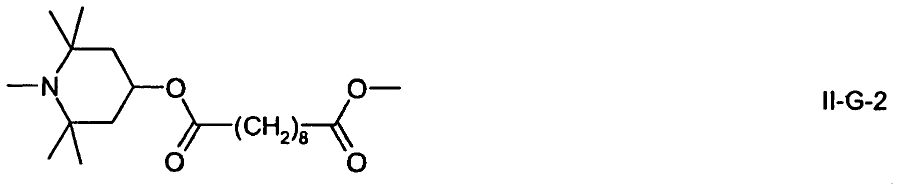 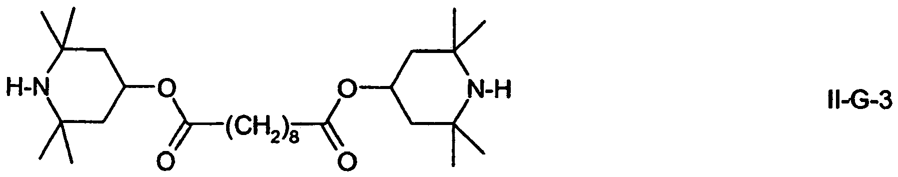 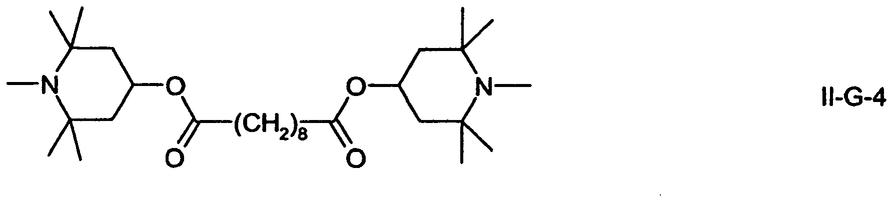 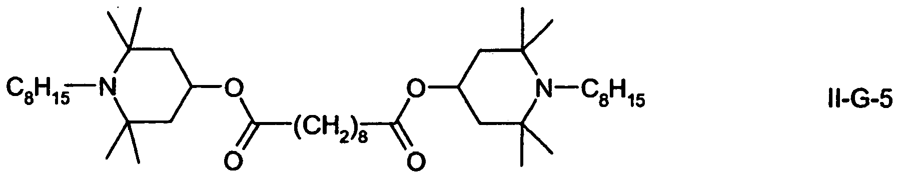 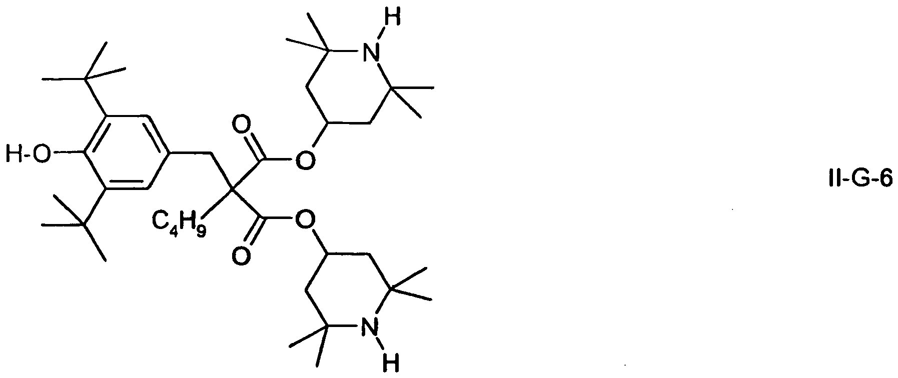 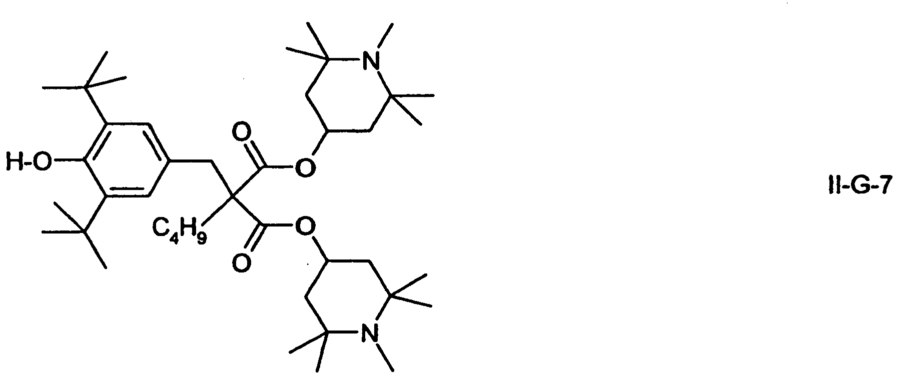 enthält.

5. Medium nach einem oder mehreren der der Ansprüche 1 bis 4, **dadurch gekennzeichnet, dass** die Gesamtkonzentration der Verbindungen der Formel I 2 Gew.-% oder mehr bis 40 Gew.-% oder weniger beträgt.

6. Medium nach einem oder mehreren der der Ansprüche 1 bis 5, **dadurch gekennzeichnet**, es
d) eine oder mehrere Verbindungen der Formel III 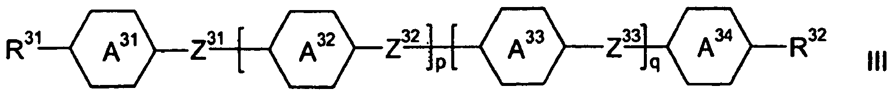 worin
R³¹ und R³² jeweils unabhängig voneinander eine der in Anspruch 1 für R¹ gegebenen Bedeutungen haben 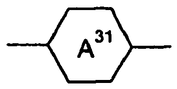 bis 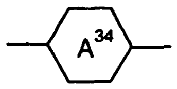 jeweils unabhängig voneinander 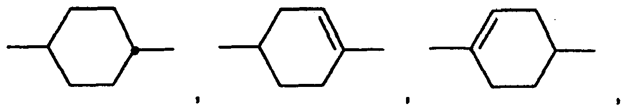 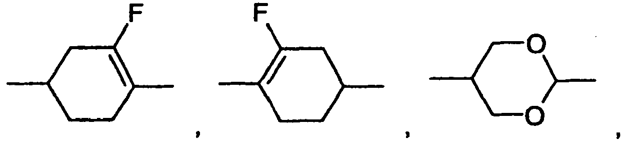 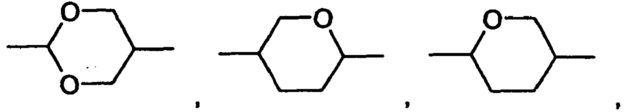 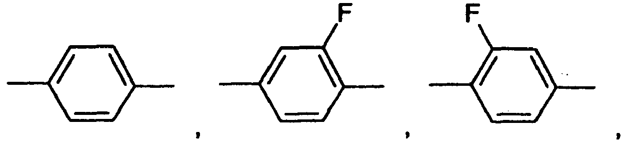 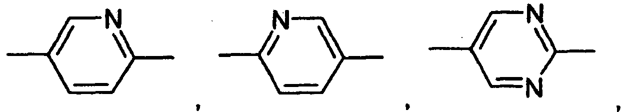 oder 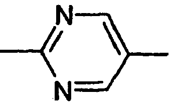 bedeuten,
Z³¹ bis Z³³ jeweils unabhängig voneinander eine der in Anspruch 1 für Z¹¹ gegebenen Bedeutungen haben,
p und q jeweils unabhängig voneinander 0 oder 1,
bedeuten, enthält.

7. Medium nach einem oder mehreren der Ansprüche 1 bis 6, **dadurch gekennzeichnet, dass** es
e) eine oder mehrere Verbindungen ausgewählt aus der Gruppe der Verbindungen der Formeln IV und V 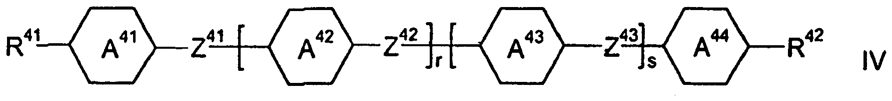 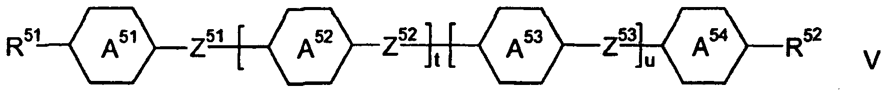 worin
R⁴¹, R⁴², R⁵¹ und R⁵² jeweils unabhängig voneinander eine der in Anspruch 1 für R²¹ gegebenen Bedeutungen haben,
einer der vorhandenen Ringe 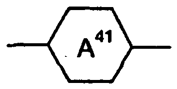 bis 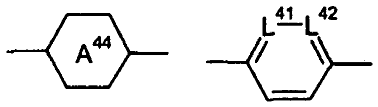 und die anderen Ringe, soweit vorhanden, jeweils unabhängig voneinander 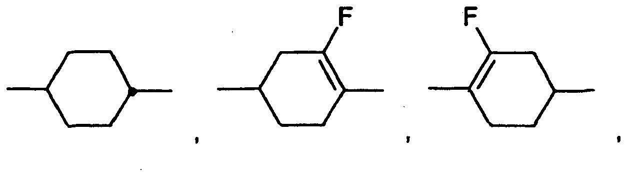 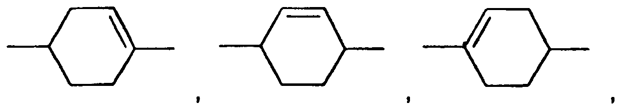 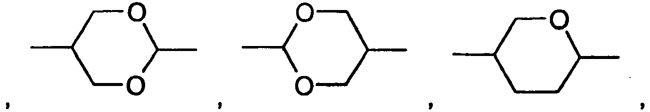 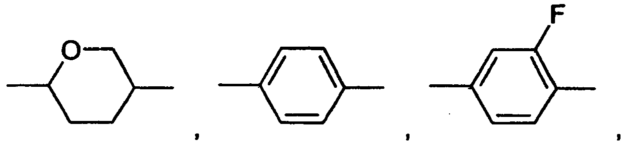 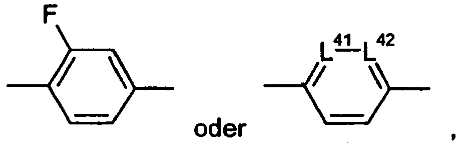
L⁴¹ und L⁴² jeweils unabhängig voneinander =C(X⁴)- und einer von oder L⁴¹ und L⁴² alternativ auch =N-,
X⁴ F, Cl, OCF₃, CF₃, CH₃, CH₂F, CHF₂,
einer der Ringe
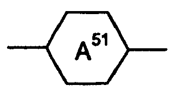 bis 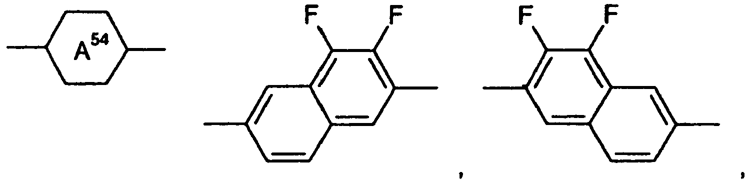 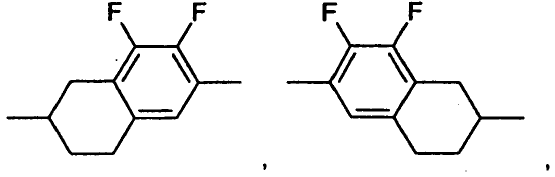 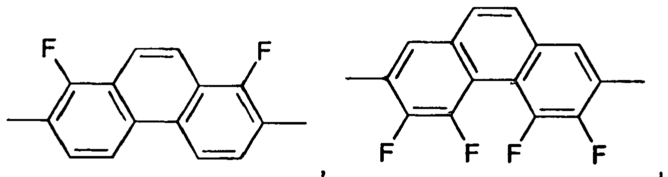 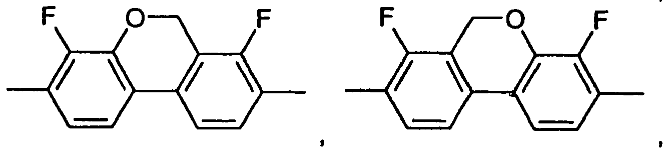 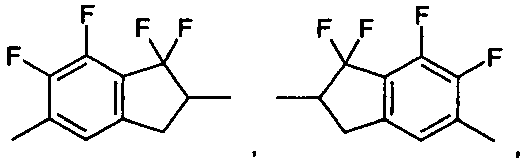 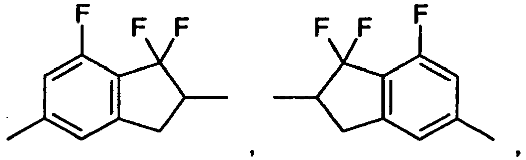 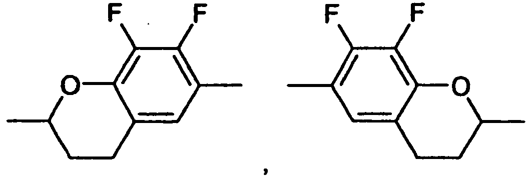 oder 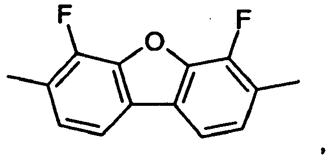 und die anderen, soweit vorhanden, jeweils unabhängig voneinander 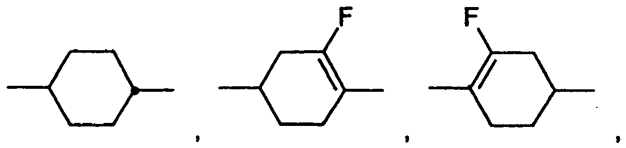 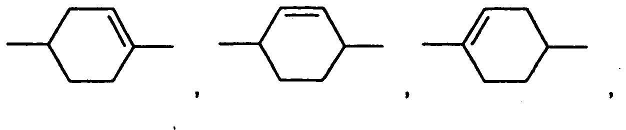 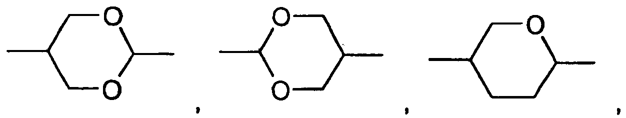 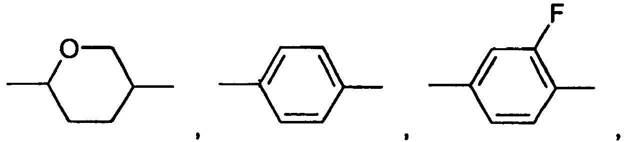 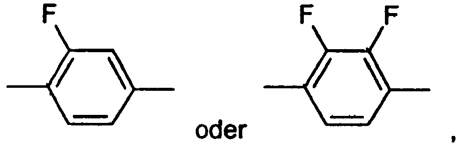 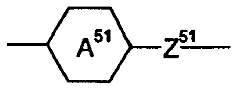 zusammen optional auch eine Einfachbindung,
Z⁴¹ bis Z⁴³ und Z⁵¹ bis Z⁵³ jeweils unabhängig voneinander eine der in Anspruch 1 für Z¹¹ gegebenen Bedeutungen haben,
r und s jeweils unabhängig voneinander 0 oder 1,
t und u jeweils unabhängig voneinander 0 oder 1,
bedeuten, wobei die Verbindungen der Formel I nach Anspruch 1 hier ausgeschlossen sind, enthält.

8. Medium nach einem oder mehreren der Ansprüche 1 bis 7, **dadurch gekennzeichnet, dass** es zusätzlich eine oder mehrere chirale Verbindungen enthält.

9. Medium nach einem oder mehreren der Ansprüche 6 bis 8, **dadurch gekennzeichnet, dass** es
10 - 60 Gew.-% einer oder mehrerer Verbindungen der Formel III und/oder
30 - 80 Gew.-% einer oder mehrerer Verbindungen ausgewählt aus der Gruppe der Verbindungen der Formeln IV und/oder V
enthält, wobei der Gesamtgehalt aller Verbindungen in dem Medium 100 Gew.-% beträgt.

10. Elektrooptische Anzeige oder elektrooptische Komponente **dadurch gekennzeichnet, dass** sie ein flüssigkristallines Medium nach einem oder mehreren der Ansprüche 1 bis 9 enthält.

11. Anzeige nach Anspruch 10, **dadurch gekennzeichnet, dass** sie auf dem VA- oder dem ECB-Effekt basiert.

12. Anzeige nach Anspruch 10 oder 11, **dadurch gekennzeichnet, dass** sie eine Aktivmatrix-Adressierungsvorrichtung aufweist.

13. Verwendung eines flüssigkristallinen Mediums nach einem oder mehreren der Ansprüche 1 bis 9 in einer elektrooptischen Anzeige oder in einer elektrooptischen Komponente.

14. Verfahren zur Herstellung eines flüssigkristallinen Mediums, **dadurch gekennzeichnet, dass** eine oder mehrere Verbindungen der Formel I nach Anspruch 1 mit einer oder mehreren Verbindungen ausgewählt aus der Gruppe der Verbindungen der Formeln II-A bis II-F nach Anspruch 1 und einer oder mehreren Verbindungen, die eine oder mehrer Gruppen der Formel II-G nach Anspruch 1 enthalten, gemischt wird.

15. Verfahren zur Stabilisierung eines flüssigkristallinen Mediums, das eine oder mehrere Verbindungen der Formel I nach Anspruch 1 enthält, **dadurch gekennzeichnet, dass** dem Medium eine oder mehrere Verbindungen ausgewählt aus der Gruppe der Verbindungen der Formeln II-A bis II-F nach Anspruch 1 und eine oder mehrere Verbindungen, die eine oder mehrer Gruppen der Formel II-G nach Anspruch 1 enthalten, zugesetzt werden.

## Claims

1. Liquid-crystalline medium having a nematic phase and negative dielectric anisotropy which comprises
a) one or more compounds of the formula I 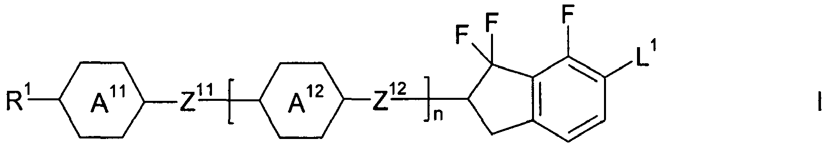 in which
R¹ denotes H, an unsubstituted alkyl or alkenyl radical having up to 15 C atoms, where, in addition, one or more CH₂ groups in these radicals may be replaced by -O-, -S-, 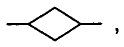 -C≡C-, -CF₂-O-, -O-CF₂-, -CO-O- or -O-CO- in such a way that O atoms are not linked directly to one another, where, in all groups, one or more H atoms may be replaced by halogen atoms,
L¹ denotes H or F, 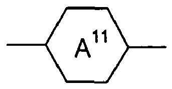 and 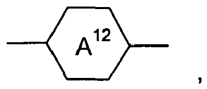 independently of one another, denote 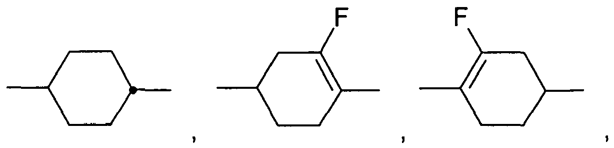 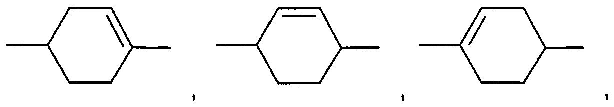 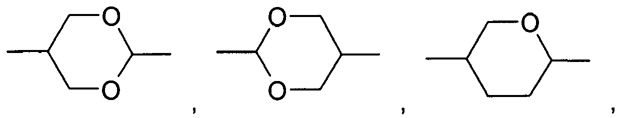 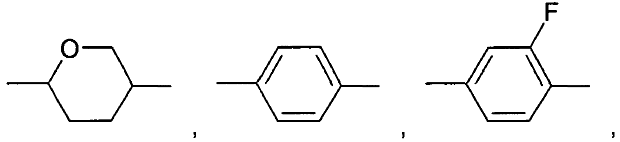 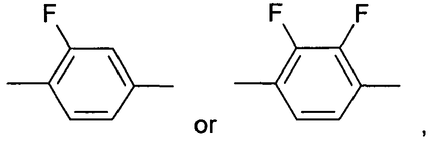
Z¹¹ and Z¹² each, independently of one another, denote -CH₂-CH₂-, -CH₂-CF₂-, -CF₂-CH₂-, -CF₂-CF₂-, -CH=CH-, -CF=CH-, -CH=CF-, -CF=CF-, -C≡C-, -CH₂-O-, -O-CH₂-, -O-, -CH₂-, -CO-O-, -O-CO-, -CF₂-O-, -O-CF₂- or a single bond, and
n denotes 0 or 1,
b) 5.0· 10⁻³% by weight to 1.0% by weight of one or more compounds selected from the group of the compounds of the formulae II-A to II-F 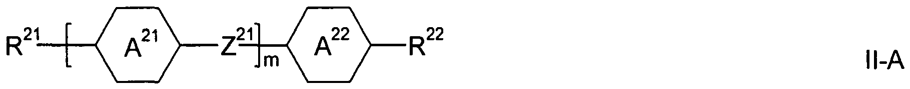 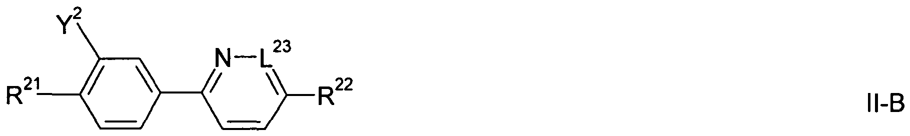 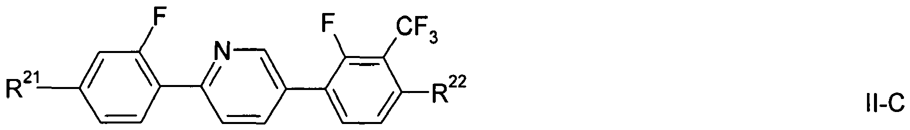 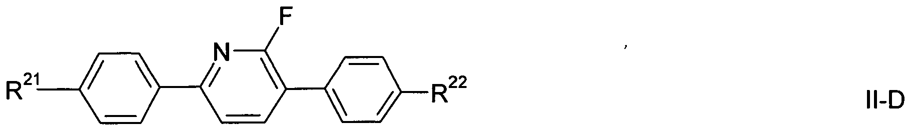 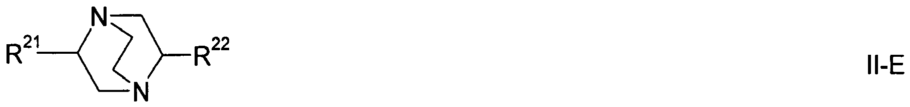 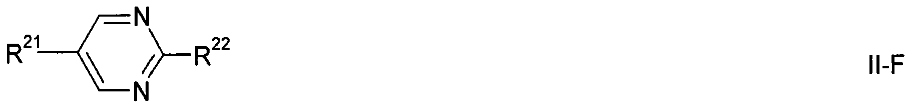 in which
R²¹ and R²² each, independently of one another, denote H, an unsubstituted alkyl or alkenyl radical having up to 15 C atoms, where, in addition, one or more CH₂ groups in these radicals may be replaced by -O-, -S-, 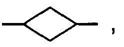 -C≡C-, -CF₂-O-, -O-CF₂-, -CO-O- or -O-CO- in such a way that O atoms are not linked directly to one another, and R²² alternatively also denotes X², and in formulae II-B and II-C R²¹ preferably denotes alkoxy and R²² preferably denotes H or alkyl,
X² denotes F, Cl, CN or -OCF₃,
one of the rings 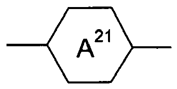 and 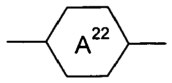 present denotes 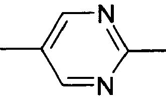 or 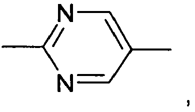 and the other, if present, denotes 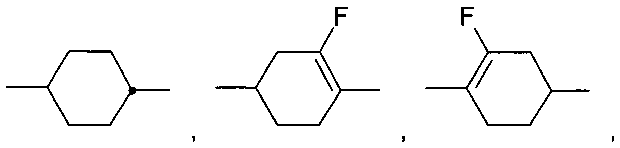 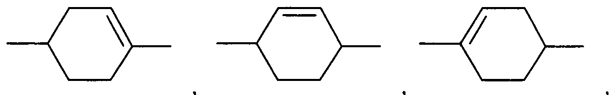 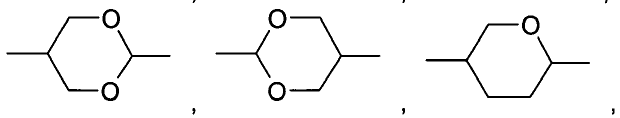 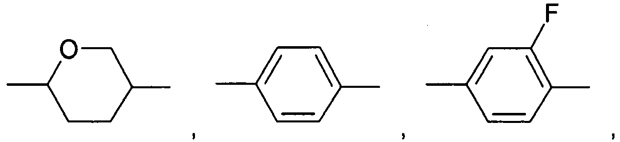 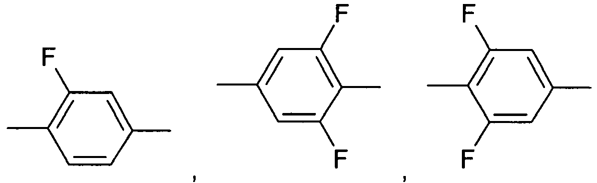 or 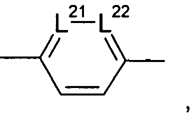 one of
L²¹ and L²² denotes =C(-F)- or =N- and the other denotes =C(-F)-,
L²³ denotes =C(-H)- or =N-,
Y² denotes H or F,
Z²¹ denotes -CH₂-CH₂-, -CH₂-CF₂-, -CF₂-CH₂-, -CF₂-CF₂-, -CH=CH-, -CF=CH-, -CH=CF-, -CF=CF-, -C≡C-, -CH₂-O-, -O-CH₂-, -O-, -CH₂-, -CO-O-, -O-CO-, -CF₂-O-, -O-CF₂- or a single bond, and
m denotes 0 or 1,
and
c) 5.0· 10⁻⁴% by weight to 1.0% by weight of one or more compounds which contain one, two or more groups of the formula II-G 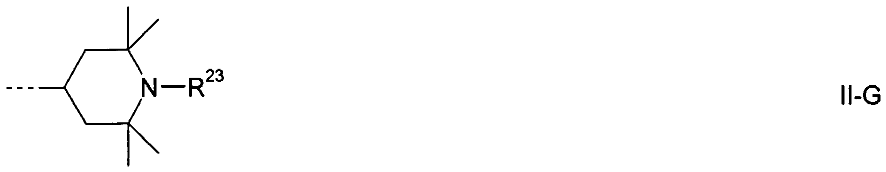 in which
R²³ denotes H or an unsubstituted alkyl radical having up to 15 C atoms, where, in addition, one or more CH₂ groups in these radicals may be replaced by -O-, -S-, -C≡C-, -CF₂-O-, -O-CF₂-, -CO-O- or -O-CO- in such a way that O atoms are not linked directly to one another and N atoms are not linked directly either to O atoms or to S atoms.

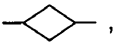

2. Medium according to Claim 1, **characterised in that** it comprises one or more compounds of the formula I-1 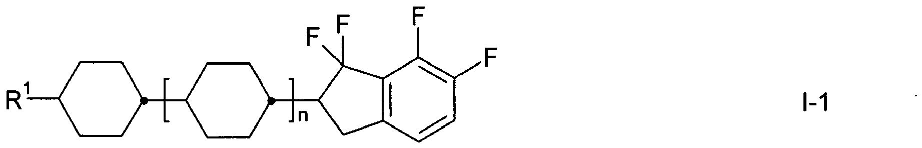 in which the parameters have the respective meanings indicated in Claim 1.

3. Medium according to Claim 1 or 2, **characterised in that** it comprises one or more compounds selected from the group of the compounds of the formulae II-A-1 and II-A-2 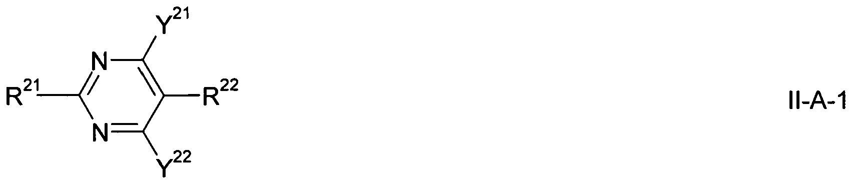 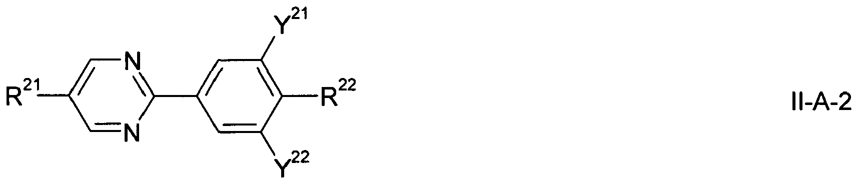 in which
Y²¹ and Y²², independently of one another, denote H or F and
the other parameters have the respective meanings indicated in Claim 1.

4. Medium according to one or more of Claims 1 to 3, **characterised in that** it comprises one or more compounds selected from the group of the compounds of the formulae II-G-1 to II-G-7

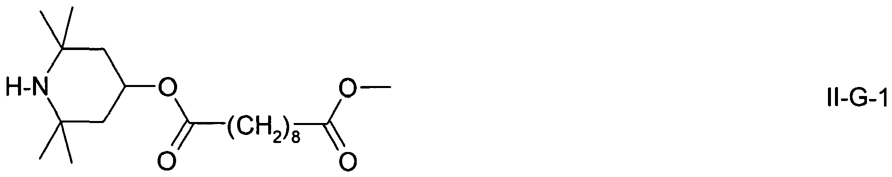

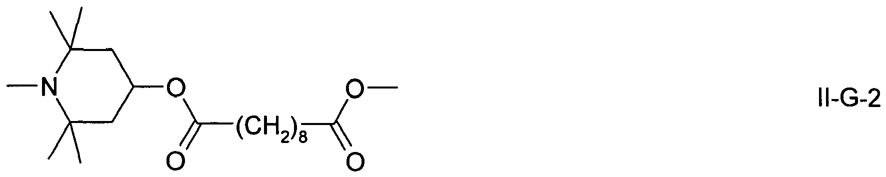

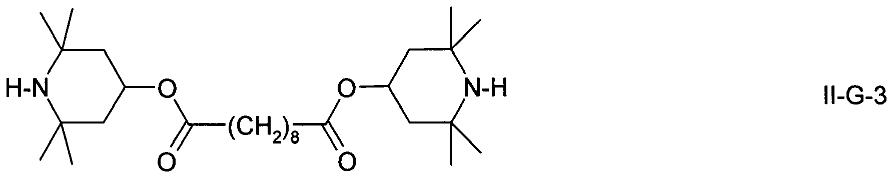

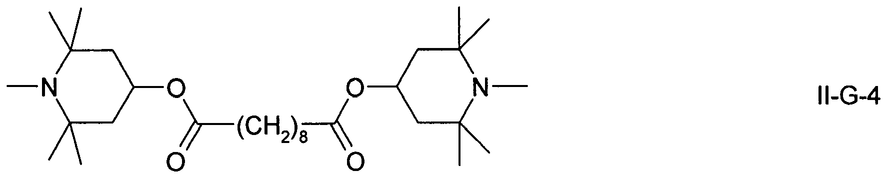

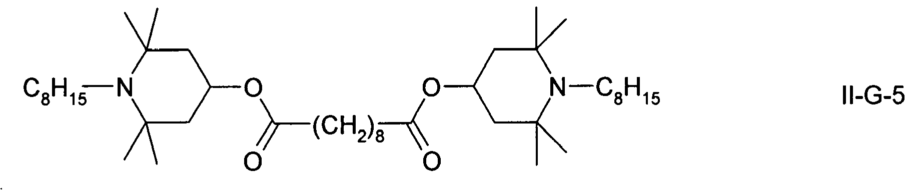

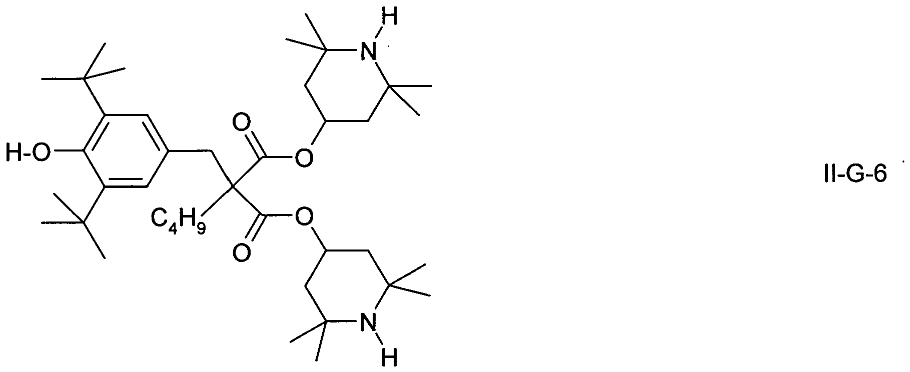

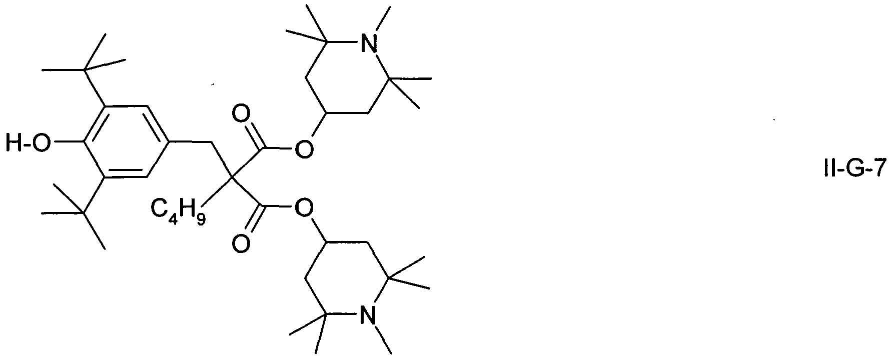

5. Medium according to one or more of Claims 1 to 4, **characterised in that** the total concentration of the compounds of the formula I is 2% by weight or more to 40% by weight or less.

6. Medium according to one or more of Claims 1 to 5, **characterised in that** it comprises
d) one or more compounds of the formula III 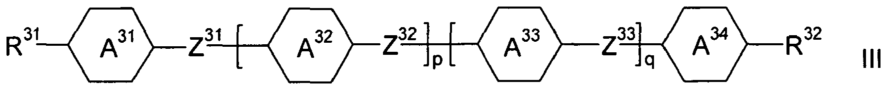 in which
R³¹ and R³² each, independently of one another, have one of the meanings given for R¹ in Claim 1, 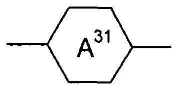 to 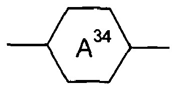 each, independently of one another, denote 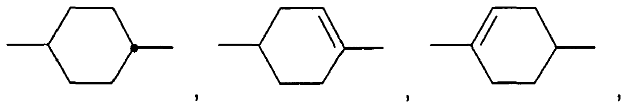 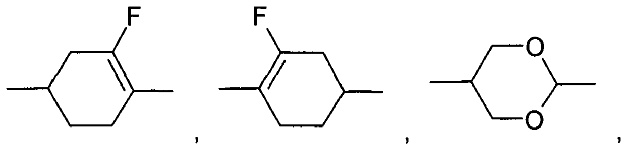 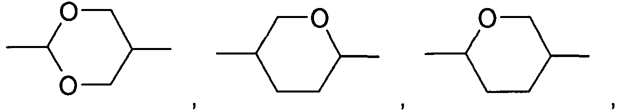 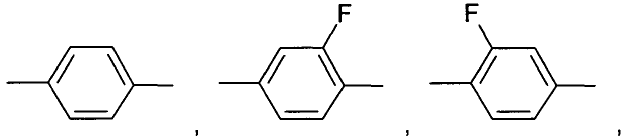 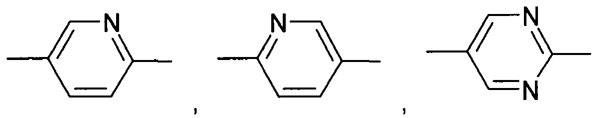 or 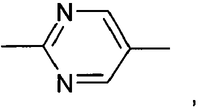
Z³¹ to Z³³ each, independently of one another, have one of the meanings given for Z¹¹ in Claim 1,
p and q each, independently of one another, denote 0 or 1.

7. Medium according to one or more of Claims 1 to 6, **characterised in that** it comprises
e) one or more compounds selected from the group of the compounds of the formulae IV and V 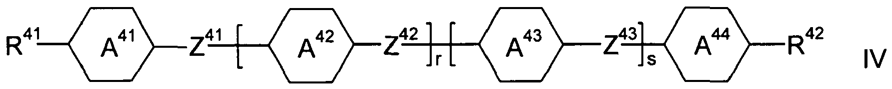 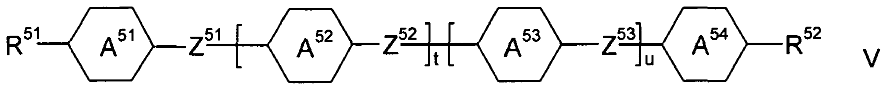 in which
R⁴¹, R⁴², R⁵¹ and R⁵² each, independently of one another, have one of the meanings given for R²¹ in Claim 1,one of the rings 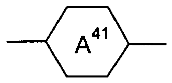 to 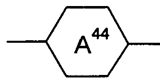 present denotes 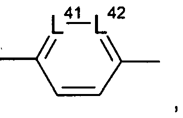 and the other rings, if present, each, independently of one another, denote 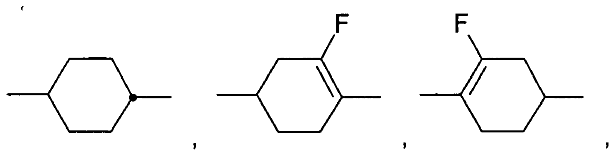 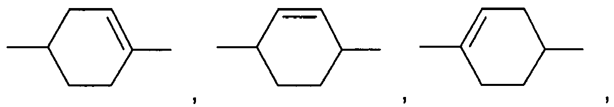 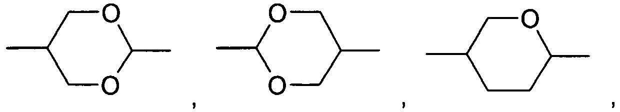 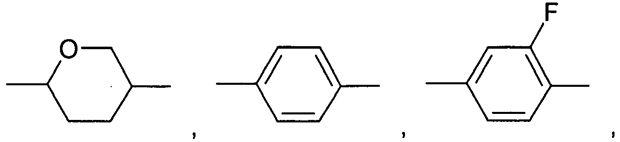 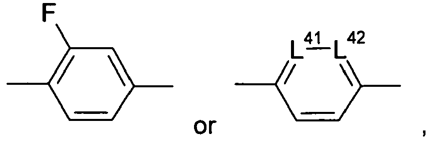
L⁴¹ and L⁴² each, independently of one another, denote =C(X⁴)-, and one of L⁴¹ and L⁴² alternatively also denotes =N-,
X⁴ denotes F, Cl, OCF₃, CF₃, CH₃, CH₂F, CHF₂,one of the rings 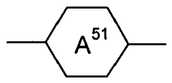 to 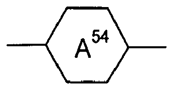 denotes 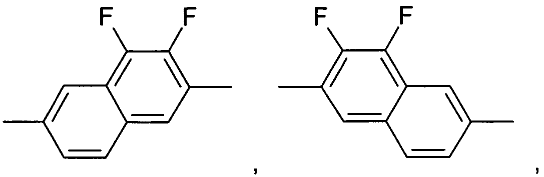 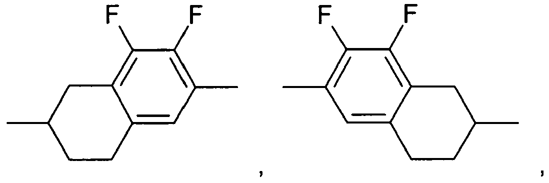 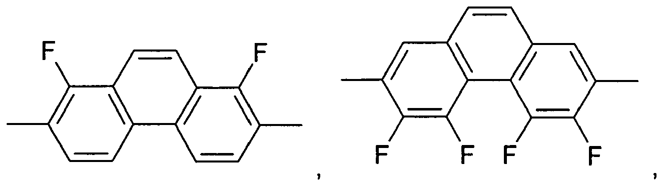 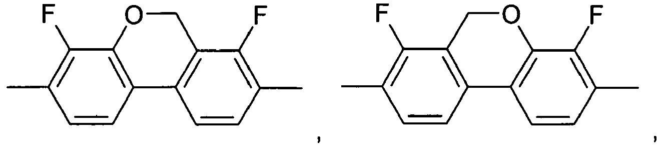 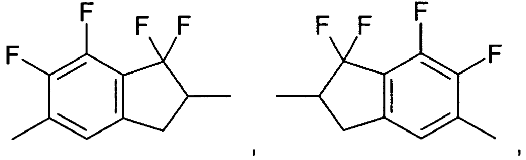 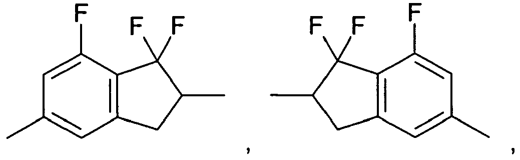 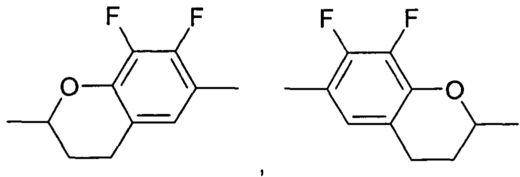 or 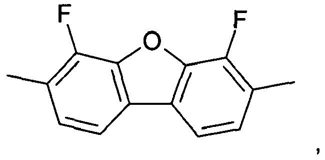 and the others, if present, each, independently of one another, denote 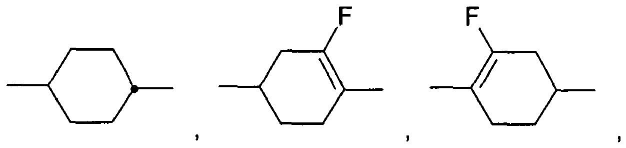 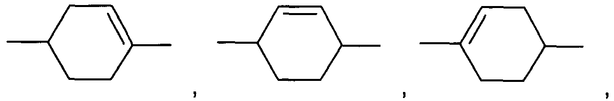 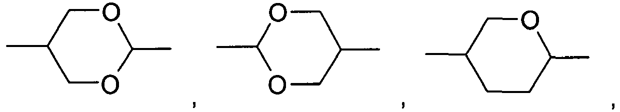 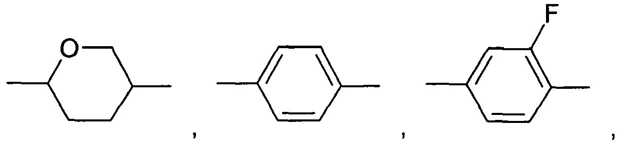 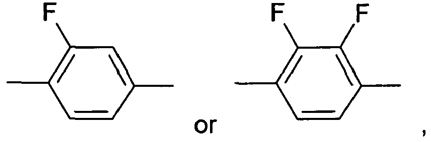 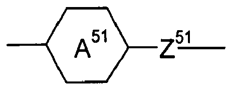 together optionally also denote a single bond,
Z⁴¹ to Z⁴³ and Z⁵¹ to Z⁵³ each, independently of one another, have one of the meanings given for Z¹¹ in Claim 1,
r and s each, independently of one another, denote 0 or 1,
t and u each, independently of one another, denote 0 or 1,
where the compounds of the formula I according to Claim 1 are excluded here.

8. Medium according to one or more of Claims 1 to 7, **characterised in that** it additionally comprises one or more chiral compounds.

9. Medium according to one or more of Claims 6 to 8, **characterised in that** it comprises
10 - 60% by weight of one or more compounds of the formula III and/or
30 - 80% by weight of one or more compounds selected from the group of the compounds of the formulae IV and/or V,
where the total content of all compounds in the medium is 100% by weight.

10. Electro-optical display or electro-optical component, **characterised in that** it comprises a liquid-crystalline medium according to one or more of Claims 1 to 9.

11. Display according to Claim 10, **characterised in that** it is based on the VA or ECB effect.

12. Display according to Claim 10 or 11, **characterised in that** it has an active-matrix addressing device.

13. Use of a liquid-crystalline medium according to one or more of Claims 1 to 9 in an electro-optical display or in an electro-optical component.

14. Process for the preparation of a liquid-crystalline medium, **characterised in that** one or more compounds of the formula I according to Claim 1 are mixed with one or more compounds selected from the group of the compounds of the formulae II-A to II-F according to Claim 1 and one or more compounds which contain one or more groups of the formula II-G according to Claim 1.

15. Process for the stabilisation of a liquid-crystalline medium which comprises one or more compounds of the formula I according to Claim 1, **characterised in that** one or more compounds selected from the group of the compounds of the formulae II-A to II-F according to Claim 1 and one or more compounds which contain one or more groups of the formula II-G according to Claim 1 are added to the medium.

## Revendications

1. Milieu cristallin liquide présentant une phase nématique et une anisotropie diélectrique négative, lequel comprend :
a) un ou plusieurs composés de la formule I 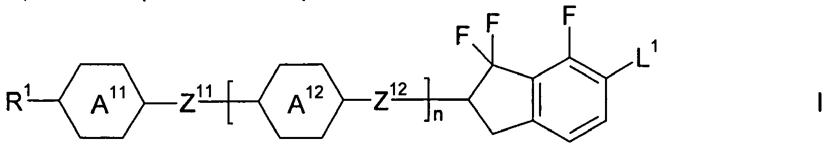 dans laquelle
R¹ représente H, un radical alkyle ou alkényle non substitué comportant jusqu'à 15 atomes de C, où, en outre, un ou plusieurs groupes CH₂ dans ces radicaux peut/peuvent être remplacé(s) par -O-, -S-, 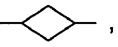 -C=C-, -CF₂-O-, -O-CF₂-, -CO-O- ou -O-CO- de telle sorte que des atomes de O ne soient pas liés directement les uns aux autres, où, dans tous les groupes, un ou plusieurs atomes de H peut/ peuvent être remplacé(s) par des atomes d'halogène,
L¹ représente H ou F, 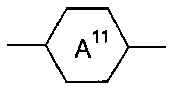 et 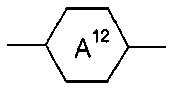 représentent, indépendamment l'un de l'autre, 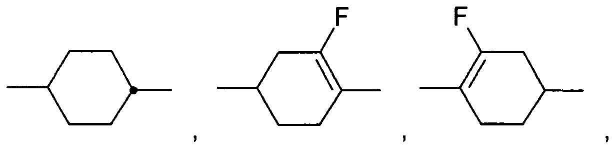 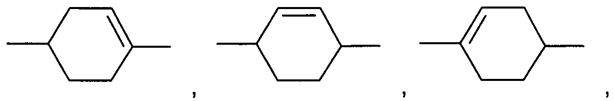 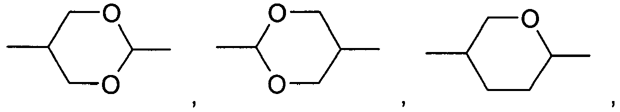 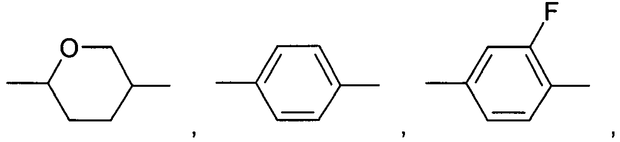 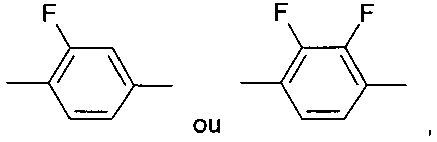
Z¹¹ et Z¹² représentent, chacun indépendamment de l'autre, -CH₂-CH₂-, -CH₂-CF₂-, -CF₂-CH₂-, -CF₂-CF₂-, -CH=CH-, -CF=CH-, -CH=CF-, -CF=CF-, -C≡C-, -CH₂-O-, -O-CH₂-, -O-, -CH₂-, -CO-O-, -O-CO-, -CF₂-O-, -O-CF₂- ou une liaison simple, et
n représente 0 ou 1,
b) 5,0· 10⁻³ % en poids à 1,0 % en poids d'un ou de plusieurs composés choisis parmi le groupe des composés des formules II-A à II-F 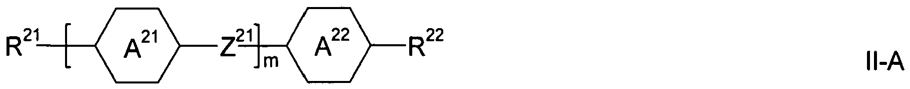 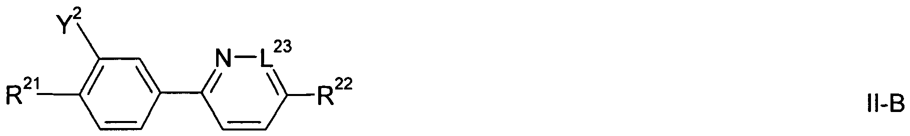 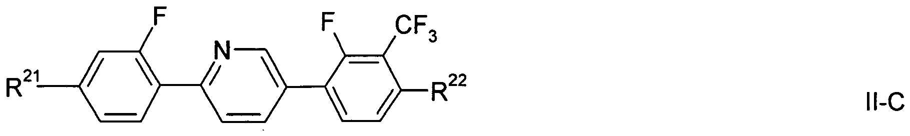 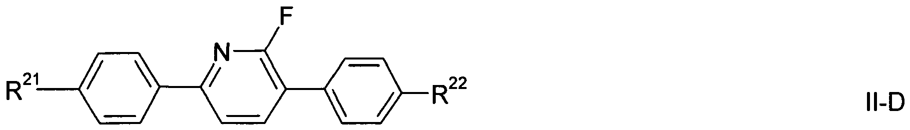 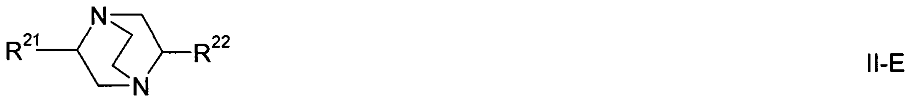 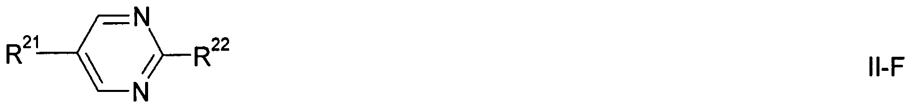 dans lesquelles
R²¹ et R²² représentent, chacun indépendamment de l'autre, H, un radical alkyle ou alkényle non substitué comportant jusqu'à 15 atomes de C, où, en outre, un ou plusieurs groupes CH₂ dans ces radicaux peut/peuvent être remplacé(s) par -O-, -S-, 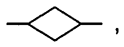 -C≡C-, -CF₂-O-, -O-CF₂-, -CO-O- ou -O-CO- de telle sorte que des atomes de O ne soient pas liés directement les uns aux autres, et R²² représente également, à titre d'alternative, X², et dans les formules II-B et II-C, R²¹ représente de préférence alcoxy et R²² représente de préférence H ou alkyle,
X² représente F, Cl, CN ou -OCF₃,
l'un des cycles 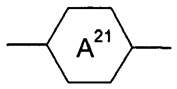 et 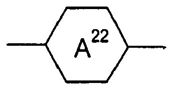 présent représente 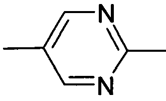 ou 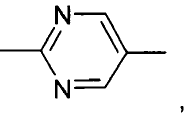 et l'autre, s'il est présent, représente 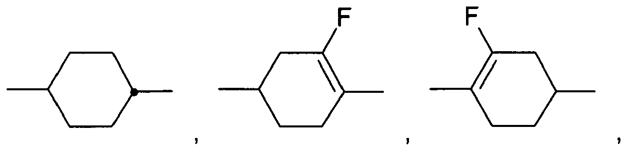 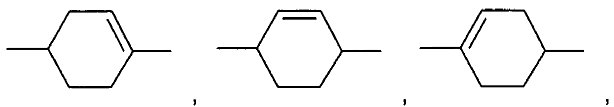 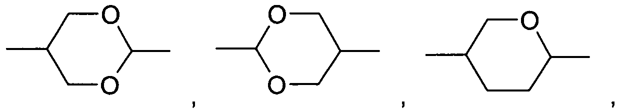 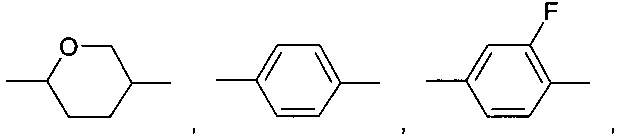 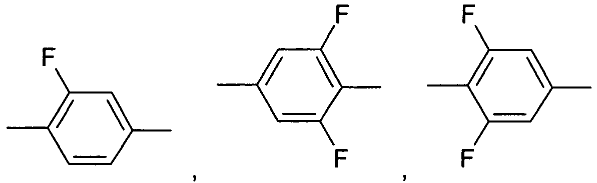 ou 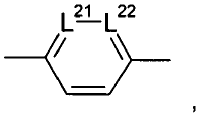 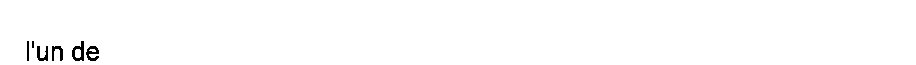
L²¹ et L²² représente =C(-F)- ou =N- et l'autre représente =C(-F)-,
L²³ représente =C(-H)- ou =N-,
Y² représente H ou F,
Z²¹ représente -CH₂-CH₂-, -CH₂-CF₂-, -CF₂-CH₂-, -CF₂-CF₂-, -CH=CH-, -CF=CH-, -CH=CF-, -CF=CF-, -C≡C-, -CH₂-O-, -O-CH₂-, -O-, -CH₂-, -CO-O-, -O-CO-, -CF₂-O-, -O-CF₂- ou une liaison simple, et
m représente 0 ou 1,
et
c) 5,0 · 10⁻⁴ % en poids à 1,0 % en poids d'un ou de plusieurs composés qui contiennent un ou deux groupes ou plus de la formule II-G 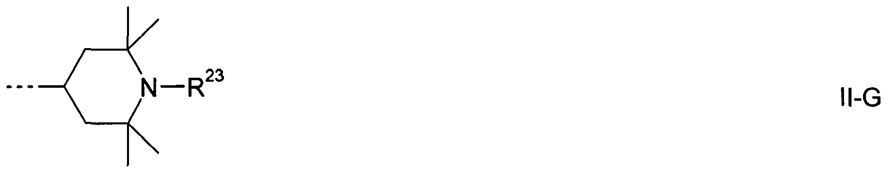 dans laquelle
R²³ représente H ou un radical alkyle non substitué comportant jusqu'à 15 atomes de C, où, en outre, un ou plusieurs groupes CH₂ dans ces radicaux peut/peuvent être remplacé(s) par -O-, -S-, 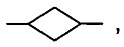 -C≡C-, -CF₂-O-, -O-CF₂-, -CO-O- ou -O-CO- de telle sorte que des atomes de O ne soient pas liés directement les uns aux autres et que des atomes de N ne soient pas liés directement soit à des atomes de O, soit à des atomes de S.

2. Milieu selon la revendication 1, **caractérisé en ce qu'**il comprend un ou plusieurs composés de la formule I-1 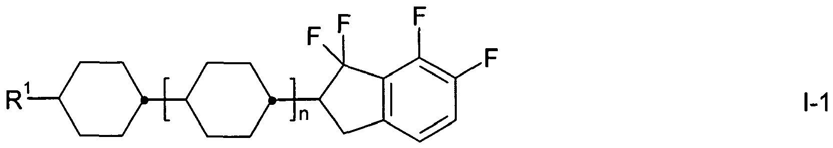 dans laquelle les paramètres présentent les significations respectives indiquées selon la revendication 1.

3. Milieu selon la revendication 1 ou 2, **caractérisé en ce qu'**il comprend un ou plusieurs composés choisis parmi le groupe des composés des formules II-A-1 et II-A-2 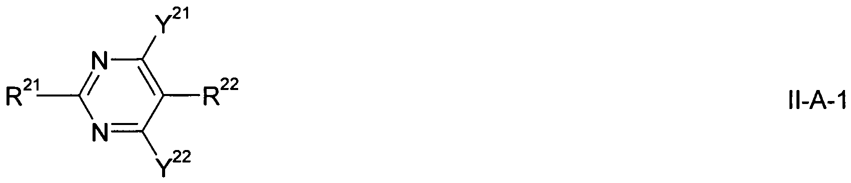 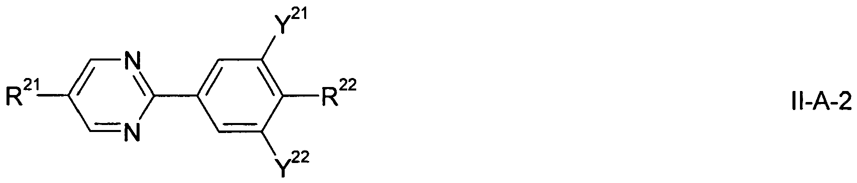 dans lesquelles
Y²¹ et Y²² représentent, indépendamment l'un de l'autre, H ou F et
les autres paramètres présentent les significations respectives indiquées selon la revendication 1.

4. Milieu selon une ou plusieurs des revendications 1 à 3, **caractérisé en ce qu'**il comprend un ou plusieurs composés choisis parmi le groupe des composés des formules II-G-1 à II-G-7

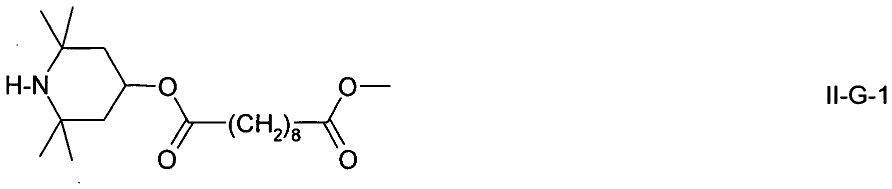

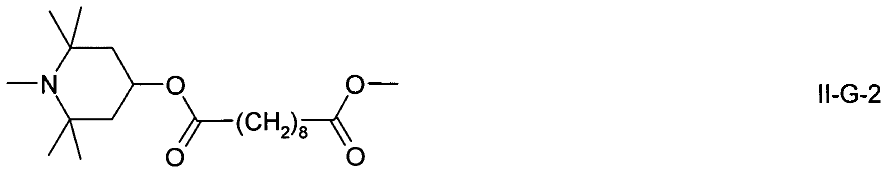

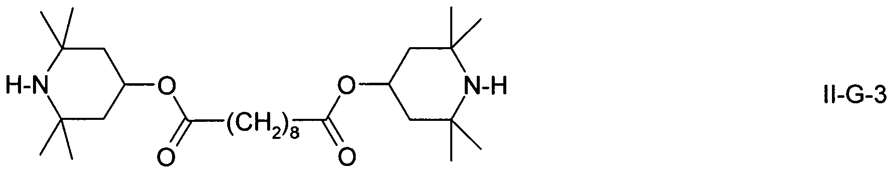

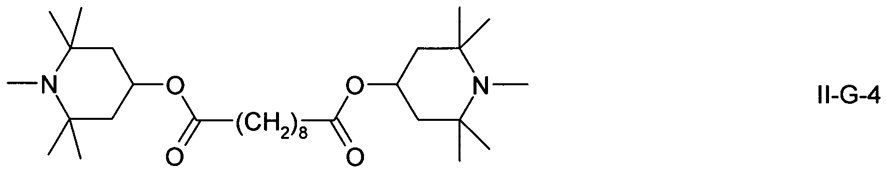

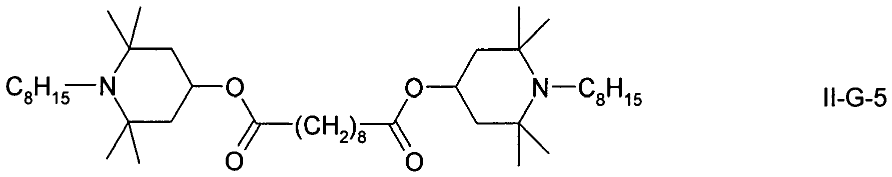

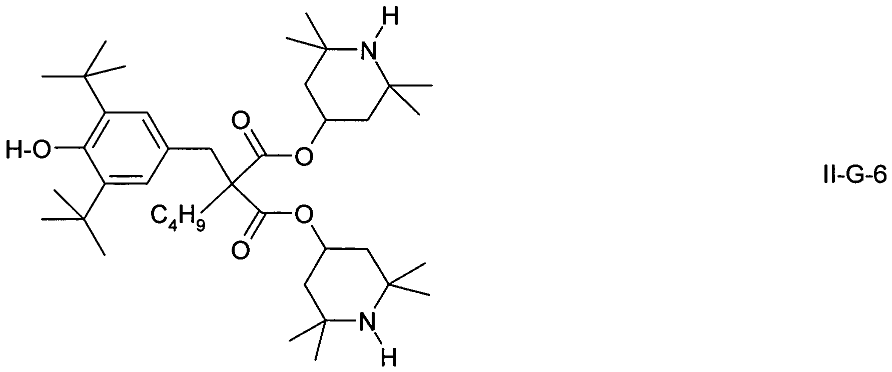

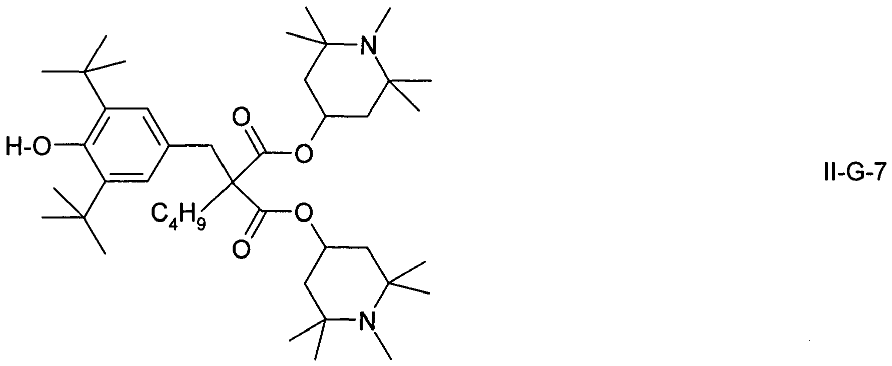

5. Milieu selon une ou plusieurs des revendications 1 à 4, **caractérisé en ce que** la concentration totale des composés de la formule I est de 2 % en poids ou plus jusqu'à 40 % en poids ou moins.

6. Milieu selon une ou plusieurs des revendications 1 à 5, **caractérisé en ce qu'**il comprend :
d) un ou plusieurs composés de la formule III 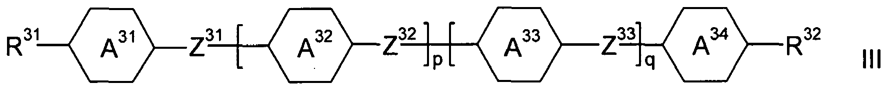
dans laquelle
R³¹ et R³² présentent, chacun indépendamment de l'autre, l'une des significations données pour R¹ selon la revendication 1, 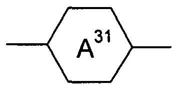 à 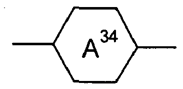 représentent, chacun indépendamment des autres, 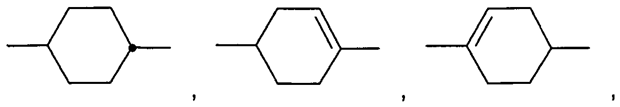 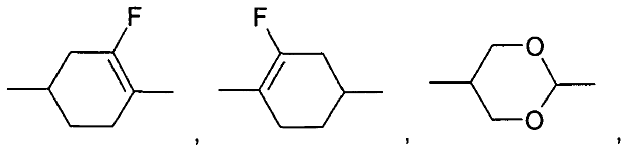 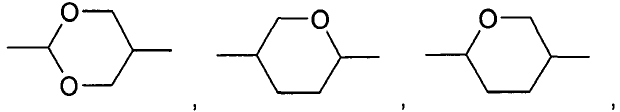 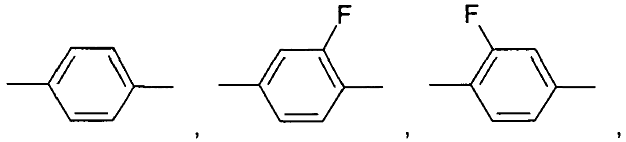 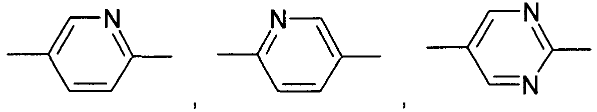 ou 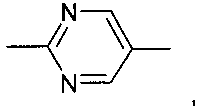
Z³¹ à Z³³ présentent, chacun indépendamment des autres, l'une des significations données pour Z¹¹ selon la revendication 1,
p et q représentent, chacun indépendamment de l'autre, 0 ou 1.

7. Milieu selon une ou plusieurs des revendications 1 à 6, **caractérisé en ce qu'**il comprend :
e) un ou plusieurs composés choisis parmi le groupe des composés des formules IV et V 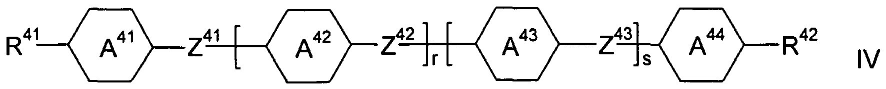 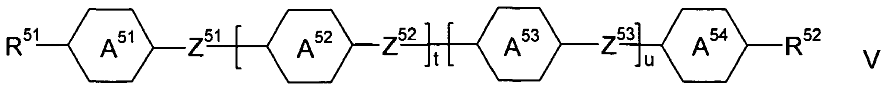 dans lesquelles
R⁴¹, R⁴², R⁵¹ et R⁵² présentent, chacun indépendamment des autres, l'une des significations données pour R²¹ selon la revendication 1,l'un des cycles 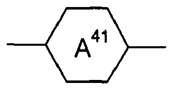 à 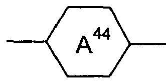 présent représente 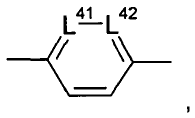 et les autres cycles, s'ils sont présents, représentent, chacun indépendamment des autres, 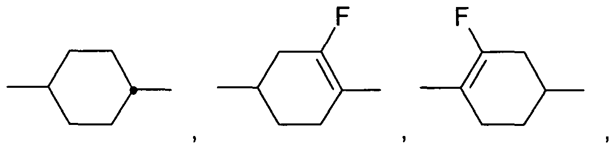 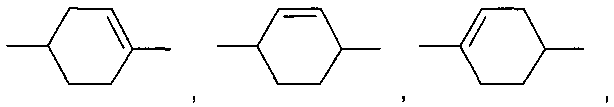 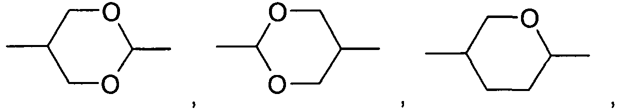 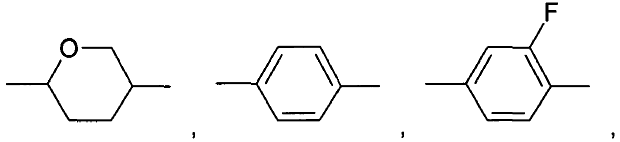 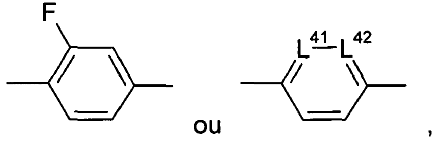
L⁴¹ et L⁴² représentent, chacun indépendamment de l'autre, =C(X⁴)-, et l'un de L⁴¹ et L⁴² représente également à titre d'alternative =N-,
X⁴ représente F, Cl, OCF₃, CF₃, CH₃, CH₂F, CHF₂,
l'un des cycles 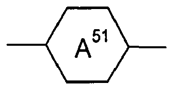 à 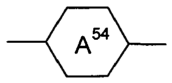 représente 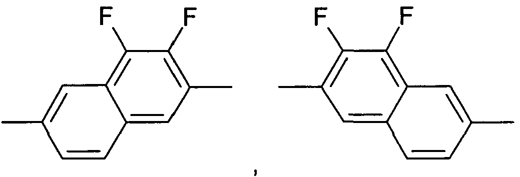 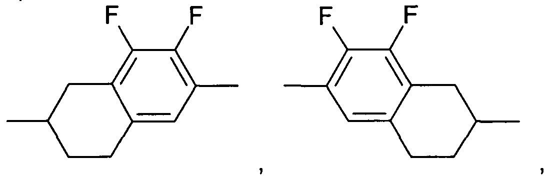 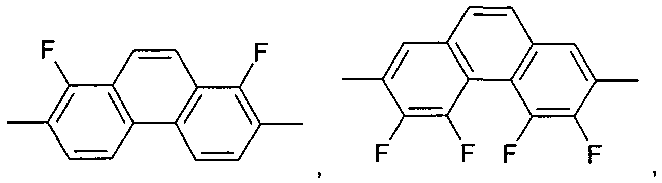 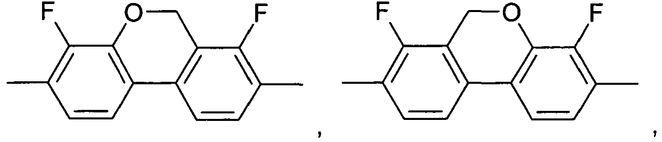 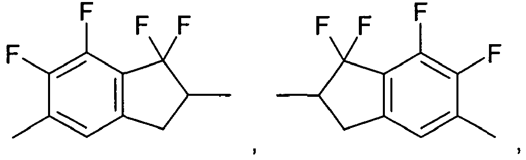 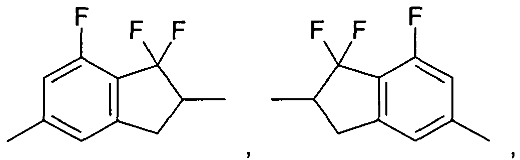 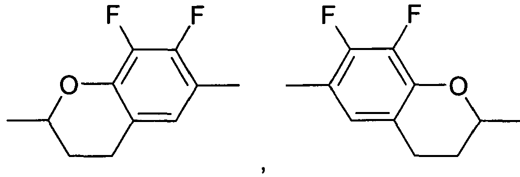 ou 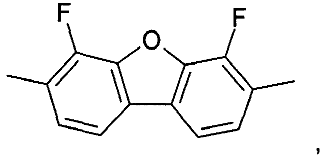 et les autres, s'ils sont présents, représentent, chacun indépendamment des autres, 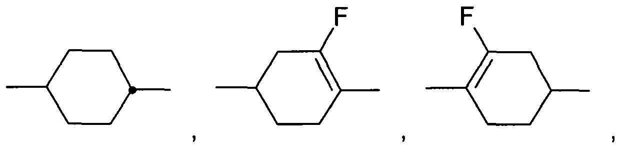 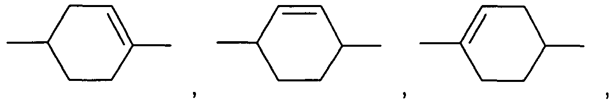 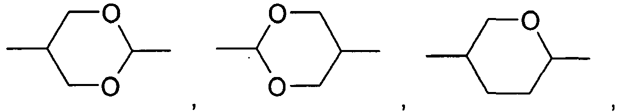 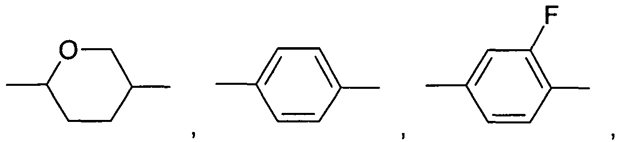 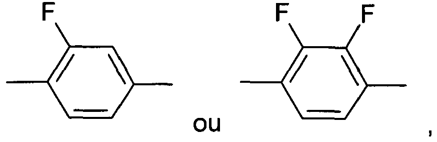 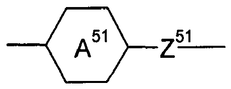 représentent également en option ensemble une liaison simple,
Z⁴¹ à Z⁴³ et Z⁵¹ à Z⁵³ présentent, chacun indépendamment des autres, l'une des significations données pour Z¹¹ selon la revendication 1,
r et s représentent, chacun indépendamment de l'autre, 0 ou 1,
t et u représentent, chacun indépendamment de l'autre, 0 ou 1,
où les composés de la formule I selon la revendication 1 sont exclus ici.

8. Milieu selon une ou plusieurs des revendications 1 à 7, **caractérisé en ce qu'**il comprend additionnellement un ou plusieurs composés chiraux.

9. Milieu selon une ou plusieurs des revendications 6 à 8, **caractérisé en ce qu'**il comprend :
10 - 60 % en poids d'un ou de plusieurs composés de la formule III et/ou
30 - 80 % en poids d'un ou de plusieurs composés choisis parmi le groupe des composés des formules IV et/ou V,
où la teneur totale de tous les composés dans le milieu est de 100 % en poids.

10. Affichage électro-optique ou composant électro-optique, **caractérisé en ce qu'**il comprend un milieu cristallin liquide selon une ou plusieurs des revendications 1 à 9.

11. Affichage selon la revendication 10, **caractérisé en ce qu'**il est basé sur l'effet VA ou ECB.

12. Affichage selon la revendication 10 ou 11, **caractérisé en ce qu'**il comporte un dispositif à adressage par matrice active.

13. Utilisation d'un milieu cristallin liquide selon une ou plusieurs des revendications 1 à 9 dans un affichage électro-optique ou dans un composant électro-optique.

14. Procédé pour la préparation d'un milieu cristallin liquide, **caractérisé en ce qu'**un ou plusieurs composés de la formule I selon la revendication 1 sont mélangés avec un ou plusieurs composés choisis parmi le groupe des composés des formules II-A à II-F selon la revendication 1 et un ou plusieurs composés qui contiennent un ou plusieurs groupes de la formule II-G selon la revendication 1.

15. Procédé pour la stabilisation d'un milieu cristallin liquide qui comprend un ou plusieurs composés de la formule I selon la revendication 1, **caractérisé en ce qu'**un ou plusieurs composés choisis parmi le groupe des composés des formules II-A à II-F selon la revendication 1 et un ou plusieurs composés qui contiennent un ou plusieurs groupes de la formule II-G selon la revendication 1 sont ajoutés au milieu.
